# EUROPÄISCHE PATENTSCHRIFT

(11) **EP 4 294 673 B1**
(45) Veröffentlichungstag und Bekanntmachung des Hinweises auf die Patenterteilung: **07.08.2024**
(21) Anmeldenummer: 21839865.9
(22) Anmeldetag: 14.12.2021
(51) Int. Cl.: B60P 1/64, G05D 1/00

(54) **FAHRZEUG, LOGISTIKSYSTEM UND VERFAHREN ZUR ÜBERGABE EINER LADUNGSEINHEIT**
VEHICLE, LOGISTICS SYSTEM AND METHOD FOR TRANSFERRING A LOAD UNIT
VÉHICULE, SYSTÈME LOGISTIQUE ET PROCÉDÉ DE TRANSFERT D'UNE UNITÉ DE CHARGE

(30) Priorität: 16.02.2021 DE 102021103623
(43) Veröffentlichungstag der Anmeldung: 27.12.2023
(73) Patentinhaber: Fraunhofer-Gesellschaft zur Förderung der angewandten Forschung e.V., 80686 München (DE)
(72) Erfinder: BEHLING, Jan, 44227 Dortmund (DE); ROTGERI, Mathias, 44263 Dortmund (DE); EMMERICH, Jan Sören, 58313 Herdecke (DE); HÖNING, Dirk, 44869 Bochum (DE); KLOKOWSKI, Patrick, 44581 Castrop-Rauxel (DE); HAMMERMEISTER, Christian, 44145 Dortmund (DE); TEN HOMPEL, Michael, 44229 Dortmund (DE)
(74) Vertreter: Keller Schneider Patentanwaltsgesellschaft mbH
(86) Internationale Anmeldenummer: PCT/EP2021/085744
(87) Internationale Veröffentlichungsnummer: WO 2022/174956

(56) Entgegenhaltungen:
- EP-A1- 3 608 264
- CN-A- 108 176 620
- CN-A- 110 756 444
- DE-A1- 102015 114 370

## Beschreibung

Die Erfindung betrifft ein Fahrzeug, ein Logistiksystem und ein Verfahren zur Übergabe einer Ladungseinheit.

Aus der CN 108 176 620 A, der EP 3 608 264 A1, der CN 110 756 444 A und der DE 10 2015 114370 A1 ist jeweils ein Fahrzeug zur Übergabe einer Ladungseinheit an eine Ladungseinheit-Aufnahmevorrichtung bekannt.

Das erfindungsgemäße Fahrzeug oder Logistiksystem oder Verfahren kann Anwendung insbesondere im Bereich von Sortieranlagen für Ladungsträger oder Ladungseinheiten in Form von Paketen im Bereich von Sortieranlagen und insbesondere in einem Paketzentrum oder Ladungseinheiten in Form von Gepäckstücken eines Flughafens oder generell in Distributionszentren finden. Die Ladungseinheiten können in den Bereich einer Sortieranlage insbesondere durch Transportfahrzeuge wie Lastkraftwagen, Linienfahrzeuge oder Schiffe oder Flugzeuge, angeliefert worden sein.

Die US 3 297 179 A beschreibt ein Fahrzeug mit einem Anhänger zum Aufladen einer Ladung. Die Ladung wird durch Schieben des Anhängers auf einen Fahrbahnabschnitt mit einem Gefälle und durch Auffahren des Anhängers auf Poller neben dem Fahrbahnabschnitt auf ein Förderband abgeladen.

Die Nachveröffentlichung DE 10 2019 122 055 A1 beschreibt ein Fahrzeug mit einer Ladegutaufnahme. Zur Abgabe von Ladegut, das auf der Oberfläche der Ladegutaufnahme gelegen ist, auf eine Lagegut-Übernahmestation kann der Reibwert der Oberfläche der Ladegutaufnahme verringert werden.

Aus der WO 2008 / 148 513 A1 ist ein Transportsystem mit einer Transportvorrichtung bekannt.

Aufgabe der Erfindung ist, ein Fahrzeug und ein Verfahren bereitzustellen, mit dem jeweils auf dem Fahrzeug gelegene Ladungseinheiten auf eine effiziente Weise auf eine Ladungseinheit-Aufnahmevorrichtung bewegt werden können.

Diese Aufgaben werden mit den Merkmalen der unabhängigen Ansprüche gelöst. Weitere Ausführformen der Erfindung sind in den auf diese jeweils rückbezogenen Unteransprüchen angegeben.

Unter der Bezeichnung "Ladungseinheiten" kann hierin generell ein Ladungsträger oder Container verstanden werden, in dem jeweils damit zu transportierendes Material wie Stückgut oder auch Flüssigkeiten oder Gas enthalten sind oder nicht. Ladungseinheiten können auch Pakete oder insbesondere geschlossene oder an einer in Schwerkraftrichtung oberen Seite offenen Behälter sein.

Der Ausdruck "entlang" bedeutet hierin im Zusammenhang mit einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel von maximal 45 Grad und insbesondere von maximal 30 Grad von der jeweiligen Bezugsrichtung bzw. Bezugsachse abweicht, auf die die jeweilige Richtungsangabe bezogen ist.

Der Ausdruck "quer" bedeutet hierin im Zusammenhang mit einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel, der zwischen 45 Grad und 135 Grad beträgt, und vorzugsweise mit einem Winkel, der zwischen 67 Grad und 113 Grad beträgt, von der jeweiligen Bezugsrichtung bzw. Bezugsachse abweicht, auf die die jeweilige Richtungsangabe bezogen ist.

Der Ausdruck "Bewegungsrichtungs-Umkehr" in Bezug auf einen Umkehr-Punkt einer Trajektorie eines Fahrzeugs bedeutet hierin eine Fahrzeug-Bewegung entlang der Trajektorie, bei der die Tangente in diesem Umkehr-Punkt an den Trajektorien-Abschnitt, der zu diesem Umkehr-Punkt hinführt, entlang zu der Tangente in demselben Umkehr-Punkt an einen Trajektorien-Abschnitt, der von diesem Umkehr-Punkt wegführt, verläuft.

Unter dem Begriff "Abstand" insbesondere zwischen zwei Flächen wird hierin insbesondere der kürzeste Abstand verstanden.

Spezieller kann hierin unter einem "Abstand" insbesondere zwischen zwei Gegenständen oder zwei Flächen oder Bezugspunkten insbesondere die kürzeste Entfernung oder der kürzeste Abstand zwischen den zwei Gegenständen oder Flächen oder Bezugspunkten verstanden werden, wobei die kürzeste Entfernung oder der kürzeste Abstand dem Betrag nach ungleich Null ist, sofern hierin in dieser Hinsicht explizit keine andere Angabe gemacht wird.

Eine "Längsrichtung" oder eine andere Referenzrichtung einer Referenzlinie, wie insbesondere eine zentrale Achse oder eine mittig verlaufende Linie oder eine Mittellinie zumindest einer Strukturkomponente oder eines Bauteils und insbesondere einer Führungsbahn ergibt sich hierin insbesondere als Verbindungslinie der Flächenschwerpunkte der jeweils kleinsten Querschnittsflächen der jeweiligen Strukturkomponente entlang einer ermittelten oder vorgegebenen Richtung oder zwischen zwei ermittelten oder vorgegebenen Enden. In dem Fall, dass die Referenzlinie gekrümmt oder zumindest abschnittsweise gekrümmt verlaufen kann, kann die Referenzrichtung generell als lokale Längsrichtung verstanden werden. Dabei kann die Referenzrichtung hierin jedoch auch als die Richtung einer geradlinig definierten Referenzlinie verstanden werden, wobei zur Ermittlung der geradlinigen Referenzlinie eine Linie verwendet wird, deren Lage relativ zu der gekrümmten Linie in der Summe die geringste Abweichung zwischen diesen Linien oder die geringste Abweichungsfläche ergibt. Dasselbe gilt, falls hierin eine geradlinige Referenzlinie aus einer gekrümmten Linie abzuleiten ist.

Unter der Bezeichnung "im Wesentlichen" in Bezug auf ein Merkmal oder einen Wert wird hierin insbesondere verstanden, dass das Merkmal eine Abweichung von 20 % und speziell von 10 % von dem Merkmal oder dessen geometrischen Eigenschaft bzw. des Werts enthält.

Unter "Orientierung" in Bezug auf eine Fläche und insbesondere Oberfläche wird hierin die Normale auf die jeweilige Oberfläche verstanden. Für den Fall, dass es sich bei der betreffenden Oberfläche nicht um eine gerade, sondern beispielsweise eine gekrümmte Oberfläche handelt, kann zur Ermittlung der Oberflächen-Normalen die Normale auf eine gerade Oberfläche derselben Größe verwendet werden, für deren Lage sich relativ zu gekrümmten Oberfläche in der Summe die geringste Abweichung ergibt.

Unter einer "Erstreckung" eines Flächenabschnitts wird eine Richtung eines ebenen Flächenabschnitts verstanden, der entlang des in Bezug genommenen Flächenabschnitts verläuft und in Bezug zu diesem eine derartige Lage hat, bei der die Summe der Abweichungsbeträge zwischen beiden Flächenabschnitten minimal ist. In Bezug auf einen Längenbetrag der Erstreckung eines Flächenabschnitts wird hierin eine Länge eines fiktiven Flächenabschnitts derselben Größe in einer zu definierenden Richtung verstanden, der eine Lage relativ zu dem referenzierten Flächenabschnitt hat, bei der die Summe der Abweichungsbeträge zwischen beiden Flächenabschnitten minimal ist.

Unter der Bezeichnung "kontinuierlich" oder "kontinuierlich zusammenhängend" insbesondere in Bezug auf eine Fläche oder einer sich in zumindest einer Längsrichtung erstreckenden Strukturkomponente, wie eine Haut, eine Platte oder Wandung, wird hierin verstanden, dass die Fläche oder Strukturkomponente ununterbrochen verläuft.

Unter einem "kontinuierlichen Verlauf' einer Linie oder Kante oder Oberfläche ist gemeint, dass die Oberfläche entlang einer Referenzrichtung gesehen über die gesamte quer zur Referenzrichtung verlaufende Breite keine Ecke aufweist, d.h. differenzierbaren Verlauf hat. Unter einem "gekrümmten Verlauf" einer Linie oder Kante oder Oberfläche ist gemeint, dass die Oberfläche entlang einer Referenzrichtung gesehen über die gesamte quer zur Referenzrichtung verlaufende Breite keine Ecke aufweist, d.h. differenzierbaren Verlauf hat.

Unter einem "einheitlich gekrümmten Verlauf" wird hierin eine Krümmung ohne Wendepunkt verstanden.

Unter der Bezeichnung "Betriebsbereich" wird hierin ein Bewegungsbereich der hierin beschriebenen Fahrzeuge oder Vorrichtungen verstanden, wenn diese bestimmungsgemäß bewegt werden oder sich bewegen. Der Betriebsbereich stellt insbesondere eine Oberfläche bereit, die eine Betriebsfläche oder Fahrauflage für das erfindungsgemäße Fahrzeug ist. Die Betriebsfläche oder Fahrauflage ist eine Oberfläche, die sich z.B. eben erstreckt. Dabei kann die Betriebsfläche einen kontinuierlichen Verlauf haben. Alternativ dazu oder zusätzlich kann die Betriebsfläche Stufen, kleine Rampen, Schwellen aufweisen. Auch kann die Betriebsfläche aus Böden von mehreren Hallen gebildet sein.

Das erfindungsgemäße Fahrzeug ist insbesondere zur Ausführung von Fahrbewegungen auf einer Betriebsfläche eines Betriebsbereiches vorgesehen. Die Betriebsfläche ist als eine Fahrauflage für das Fahrzeug gebildet. Die Betriebsfläche kann eine kontinuierliche Oberfläche sein, oder eine diskontinuierliche Fläche, wie z.B. ein Gitter, sein, wobei die Betriebsfläche eine Oberfläche ausbildet, die sich planar erstreckt. Dabei kenn die Oberfläche auch Stufen und Ausformungen wie z.B. Rampen oder Stufen oder Rinnen aufweisen.

Unter der Bezeichnung "Position" eines Punktes wie eines Referenzpunktes oder eines Körpers wird hierin die in Flächenkoordinaten / Raumkoordinaten und insbesondere in den drei Raumkoordinaten definierte Position des Punktes wie des Referenzpunktes oder des Körpers verstanden. Bei einer Position eines Körpers wird hierin insbesondere die Position eines Zentrums oder Mittelpunkts und insbesondere Schwerpunkts des Körpers verstanden.

Das erfindungsgemäße Fahrzeug ist insbesondere ein selbst-steuerndes Fahrzeug, d.h. dieses kann ohne manuelle Steuerung vorbestimmte Aufgaben ausführen, also erfolgen die zur Aufgabenerfüllung ausgeführten Fahrbewegungen des Fahrzeugs automatisch, also ohne manuellen Eingriff.

Unter der Bezeichnung "Fahrzeug-Zustand" wird hierin ein Zustand des Fahrzeugs verstanden, der durch eine oder mehrere der folgenden Angaben definiert ist: durch eine Position, eine Geschwindigkeit und eine momentane Ausrichtung des Fahrzeugs, insbesondere einer Längsachse des Fahrzeugs. Der Fahrzeug-Zustand kann insbesondere ein Fahrzeug-Soll-Zustand oder ein Fahrzeug-Ist-Zustand des Fahrzeugs, der ein zeitlich aktueller Fahrzeug-Zustand ist, sein.

Die Kombination aus einer Geschwindigkeit und einer (Fahrt-) Richtung eines Fahrzeugs ist durch einen Geschwindigkeitsvektor des Fahrzeugs definierbar, da dieser den Betrag der Geschwindigkeit und die (Fahrt-) Richtung des Fahrzeugs angibt. Unter Geschwindigkeitsvektor wird hierin eine Kombination von Daten verstanden, die die Geschwindigkeit und die (Fahrt-) Richtung des Fahrzeugs angibt. Der Geschwindigkeitsvektor kann auch den Zustand definieren, bei dem das Fahrzeug nicht bewegt wird, also der Betrag der Geschwindigkeit gleich Null ist.

Unter der Bezeichnung "Ausrichtung" eines Fahrzeugs wird eine Richtung einer definierten oder vorbestimmten Längsachse des Fahrzeugs verstanden. Die Längsachse kann insbesondere eine Mittellinie oder Mittelachse des Fahrzeugs sein. Die Ausrichtung des Fahrzeugs ist insbesondere eine Richtung, die in der Steuerungsfunktion als Referenz hinterlegt sein kann. Die Ausrichtung eines Fahrzeugs kann insbesondere mit der Fahrtrichtung des Fahrzeugs übereinstimmen, die das Fahrzeug in einer Neutralstellung des Fahrwerks oder der Räder des Fahrwerks und insbesondere einer von einer Lenkungsvorrichtung eingestellten Neutralstellung des Fahrwerks oder der Räder des Fahrwerks hat.

Die Position und die Geschwindigkeit des Fahrzeugs können insbesondere auf einen vorbestimmten Referenzpunkt des Fahrzeugs bezogen sein.

Unter "selbst-steuernd" wird hierin in Bezug auf ein Fahrzeug insbesondere verstanden, dass das Fahrzeug eine Übergabe-Missionsaufgabe aufgrund von Sollvorgaben an eine Steuerungsfunktion und daraus ermittelten Steuerungskommandos oder Stellkommandos an eine Antriebsvorrichtung des Fahrzeugs zur Steuerung des Fahrzeugs für eine Bewegung desselben entlang einer Trajektorie erfüllt. Die Übergabe-Missionsaufgabe beinhaltet hierbei insbesondere ein Transportieren einer von einem Fahrzeug beförderten oder getragenen Ladungseinheit durch Bewegung des Fahrzeugs entlang einer Trajektorie aufgrund der an die Antriebsvorrichtung übermittelten Steuerungskommandos oder Stellkommandos und die Übergabe oder Bewegung der Ladungseinheit vom Fahrzeug an oder auf die Ladungseinheit-Aufnahmevorrichtung.

Unter "Trajektorie" wird hierin ein Verlauf eines Weges verstanden, den ein Fahrzeug zurückgelegt hat oder aufgrund einer Missions-Aufgabe zurücklegen soll. Die Trajektorie und insbesondere eine Soll-Trajektorie kann als mathematische Funktion oder als Reihe diskreter Punkte oder als Kombination einer mathematischen Funktion und einer Reihe diskreter Punkte definiert sein.

Unter einem "Soll-Geschwindigkeitsverlauf" wird hierin eine vorgegebene oder ermittelte Reihe oder ein Verlauf von Soll-Geschwindigkeiten entlang einer Trajektorie und insbesondere einer Soll-Trajektorie und im Übergabebereich der Soll-Trajektorie oder in einem Abschnitt dieser Trajektorien verstanden. Die Soll-Geschwindigkeiten können dabei entlang der jeweiligen Trajektorie konstant oder veränderlich sein. Mit einer Soll-Geschwindigkeit ist auch die Soll-Beschleunigung jeweils an einem Punkt der Soll-Trajektorie definiert.

Hierin wird unter "Übergabe-Beschleunigung" des Fahrzeugs zu dem jeweiligen Zeitpunkt eine Ist-Übergabe-Beschleunigung verstanden, die insbesondere zu erreichen ist, damit bei einem Verlauf des Übergabebereichs der Soll-Trajektorie oder Ist-Trajektorie die auf einem Aufnahmebauteil des Fahrzeugs befindliche Ladungseinheit durch ihre Massenträgheit von dem Aufnahmebauteil auf die Ladungseinheit-Aufnahmevorrichtung bewegt wird.

Unter "Funktion" wird hierin ein funktionaler Zusammenhang oder ein Algorithmus verstanden, der in einer betreffenden Vorrichtung abgespeichert ist. Beispielsweise kann die Solltrajektorien-Ermittlungsfunktion durch einen Algorithmus realisiert sein, der in dem Fahrzeugsystem oder der Logistik-Zentralvorrichtung implementiert ist.

Die Steuerungskommandos werden zu diskreten Zeitpunkten von der Fahrzeug-Steuerungsfunktion ermittelt oder erzeugt. Hierfür kann das Fahrzeugsystem einen Taktgeber aufweisen, der die Steuerungskommandos zu vorgegebenen Zeitpunkten in einer vorbestimmten Iterationsrate ermittelt oder erzeugt und an die Antriebsvorrichtung übermittelt.

Das erfindungsgemäße Fahrzeug ist zur Übergabe einer Ladungseinheit an eine Ladungseinheit-Aufnahmevorrichtung in einem Betriebsbereich vorgesehen.

Nach einer Ausführungsform des erfindungsgemäßen Fahrzeugs zur Übergabe einer Ladungseinheit an eine Ladungseinheit-Aufnahmevorrichtung in einem Betriebsbereich ist vorgesehen, dass das Fahrzeug aufweist: ein Fahrwerk, eine Antriebsvorrichtung, die mit dem Fahrwerk in Verbindung steht und aufgrund von Steuerungskommandos zur Einstellung eines Geschwindigkeitsvektors des Fahrzeugs das Fahrwerk antreibt, und ein an dem Fahrwerk angeordneter Fahrzeug-Rahmen mit einem Aufnahmebauteil zum Aufnehmen der Ladungseinheit, wobei das Fahrzeug ein Fahrzeugsystem mit einer Fahrzeug-Steuerungsfunktion aufweist,
wobei die Fahrzeug-Steuerungsfunktion Solltrajektorien-Folgekommandos als Steuerungs-Sollvorgaben verwendet oder ermittelt, mit denen das Fahrzeug auf einer Fahrzeug-Bewegungsbahn entlang einer Soll-Trajektorie bewegt wird, wobei die Soll-Trajektorie (ST) zwischen einem Anfangspunkt und einem Endpunkt verläuft und einen Übergabebereich mit einem der Ladungseinheit-Aufnahmevorrichtung zugeordneten Soll-Übergabepunkt aufweist,
wobei die Fahrzeug-Steuerungsfunktion zumindest für den Übergabebereich der Soll-Trajektorie einen Soll-Geschwindigkeitsverlauf als Steuerungs-Sollvorgaben verwendet oder ermittelt,
wobei die Fahrzeug-Steuerungsfunktion eine Antriebs-Ansteuerungsfunktion aufweist, die die Steuerungs-Sollvorgaben in Steuerungskommandos umsetzt, die in Bezug auf den jeweiligen Ist-Fahrzeug-Zustand einen jeweils aktuellen Soll-Geschwindigkeitsvektor definieren,
wobei die Antriebsvorrichtung aufgrund der Steuerungskommandos eine Übergabe-Beschleunigung des Fahrzeugs zumindest in einem den Soll-Übergabepunkt aufweisenden Abschnitt realisiert, bei der die auf dem Aufnahme-Bauteil des Fahrzeugs gelegene Ladungseinheit durch deren Massenträgheit auf die Ladungseinheit-Aufnahmevorrichtung bewegt wird.

Nach einer Ausführungsform des erfindungsgemäßen Fahrzeugs zum Transport und zur Übergabe einer Ladungseinheit an eine Ladungseinheit-Aufnahmevorrichtung in einem Betriebsbereich weist dieses auf: ein Fahrwerk, eine Antriebsvorrichtung, die mit dem Fahrwerk in Verbindung steht und das Fahrwerk antreibt, so dass dieses einen Geschwindigkeitsvektor des Fahrzeugs auf einer Betriebsfläche des Betriebsbereichs einstellt, und ein an dem Fahrwerk angeordneter Fahrzeug-Rahmen mit einem Aufnahmebauteil zum Aufnehmen einer Ladungseinheit, wobei das Fahrzeug ein Fahrzeugsystem aufweist mit:
einer Fahrzeug-Steuerungsfunktion, die funktional mit der Antriebsvorrichtung in Verbindung steht und aufgrund von Steuerungs-Sollvorgaben Steuerungskommandos ermittelt und diese an die Antriebsvorrichtung übermittelt, um einen jeweils aktuellen Geschwindigkeitsvektor des Fahrzeugs einzustellen,
wobei die Fahrzeug-Steuerungsfunktion Solltrajektorien-Folgekommandos als Steuerungskommandos an die Antriebsvorrichtung übermittelt, mit denen das Fahrzeug auf einer Fahrzeug-Bewegungsbahn entlang einer Soll-Trajektorie bewegt wird, wobei die Soll-Trajektorie zwischen einem Anfangspunkt und einem Endpunkt verläuft und einen Übergabebereich mit einem der Ladungseinheit-Aufnahmevorrichtung zugeordneten Soll-Übergabepunkt aufweist,
wobei die Fahrzeug-Steuerungsfunktion Geschwindigkeits-Kommandos als Steuerungskommandos an die Antriebsvorrichtung übermittelt, die auf Basis der Steuerungs-Sollvorgaben eine Übergabe-Geschwindigkeit des Fahrzeugs in dem Soll-Übergabepunkt einstellt,
wobei die Form des Übergabebereichs, die Lage des Übergabepunkts relativ zu der Ladungseinheit-Aufnahmevorrichtung und die Übergabe-Geschwindigkeit derart eingestellt sind, dass die auf dem Aufnahme-Bauteil des Fahrzeugs gelegene Ladungseinheit durch deren Massenträgheit auf die Ladungseinheit-Aufnahmevorrichtung bewegt wird.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass die Fahrzeug-Steuerungsfunktion aufweist:
eine Solltrajektorien-Folgefunktion, die bei Bewegung des Fahrzeugs aktuelle Fahrzeug-Ist-Zustände zumindest mit einer Fahrzeug-Ist-Position jeweils relativ zu einer Soll-Trajektorie in eine Abweichungs-Relation setzt und aus der Abweichungs-Relation Solltrajektorien-Folgekommandos ermittelt und als Steuerungskommandos an die Antriebsvorrichtung übermittelt, mit denen das Fahrzeug auf einer Fahrzeug-Bewegungsbahn entlang der Soll-Trajektorie bewegt wird, wobei die Soll-Trajektorie zwischen einem Anfangspunkt und einem Endpunkt verläuft und einen Übergabebereich mit einem der Ladungseinheit-Aufnahmevorrichtung zugeordneten Soll-Übergabepunkt aufweist,
eine Lastabgabe-Steuerungsfunktion, die aufgrund eines Soll-Geschwindigkeitsverlaufs des Fahrzeugs Geschwindigkeits-Kommandos ermittelt und als Steuerungskommandos an die Antriebsvorrichtung übermittelt, die eine Übergabe-Geschwindigkeit des Fahrzeugs in dem Soll-Übergabepunkt einstellt,
wobei die Form des Übergabebereichs, die Lage des Übergabepunkts relativ zu der Ladungseinheit-Aufnahmevorrichtung und die Übergabe-Geschwindigkeit derart eingestellt sind, dass die auf dem Aufnahme-Bauteil des Fahrzeugs gelegene Ladungseinheit durch deren Massenträgheit auf die Ladungseinheit-Aufnahmevorrichtung bewegt wird.

Nach einer Ausführungsform des erfindungsgemäßen Fahrzeugs weist dieses auf: ein Fahrwerk, eine Antriebsvorrichtung, die mit dem Fahrwerk in Verbindung steht und das Fahrwerk antreibt, so dass dieses einen Geschwindigkeitsvektor des Fahrzeugs auf einer Betriebsfläche des Betriebsbereichs einstellt, und ein an dem Fahrwerk angeordneter Fahrzeug-Rahmen mit einem Aufnahmebauteil zum Aufnehmen einer Ladungseinheit. Das Fahrzeug weist insbesondere ein Fahrzeugsystem auf mit:
einer Fahrzeug-Steuerungsfunktion, die funktional mit der Antriebsvorrichtung in Verbindung steht und aufgrund von Steuerungs-Sollvorgaben Steuerungskommandos ermittelt und diese an die Antriebsvorrichtung übermittelt, um einen jeweils aktuellen Geschwindigkeitsvektor des Fahrzeugs einzustellen, wobei die Fahrzeug-Steuerungsfunktion aufweist:
eine Solltrajektorien-Folgefunktion, die bei Bewegung des Fahrzeugs aktuelle Fahrzeug-Ist-Zustände zumindest mit einer Fahrzeug-Ist-Position jeweils relativ zu einer Soll-Trajektorie in eine Abweichungs-Relation setzt und aus der Abweichungs-Relation Solltrajektorien-Folgekommandos ermittelt und als Steuerungskommandos an die Antriebsvorrichtung übermittelt, mit denen das Fahrzeug auf einer Fahrzeug-Bewegungsbahn entlang der Soll-Trajektorie bewegt wird, wobei die Soll-Trajektorie zwischen einem Anfangspunkt und einem Endpunkt verläuft und einen Übergabebereich mit einem der Ladungseinheit-Aufnahmevorrichtung zugeordneten Soll-Übergabepunkt aufweist,
eine Lastabgabe-Steuerungsfunktion, die aufgrund eines Soll-Geschwindigkeitsverlaufs des Fahrzeugs Geschwindigkeits-Kommandos ermittelt und als Steuerungskommandos an die Antriebsvorrichtung übermittelt, die eine Übergabe-Geschwindigkeit des Fahrzeugs in dem Soll-Übergabepunkt einzustellen, so dass die auf dem Aufnahme-Bauteil des Fahrzeugs gelegene Ladungseinheit durch deren Massenträgheit auf die Ladungseinheit-Aufnahmevorrichtung bewegt wird.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass die Soll-Trajektorie in der Fahrzeugsystem oder in der Fahrzeug-Steuerungsfunktion und dabei insbesondere in der Solltrajektorien-Folgefunktion z.B. als vorbestimmte Soll-Trajektorie, vorhanden und abgespeichert ist oder von dem Fahrzeugsystem von außen, d.h. von einer Vorrichtung außerhalb des Fahrzeugs, empfangen und der Fahrzeug-Steuerungsfunktion bereitgestellt wird.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass die Fahrzeug-Steuerungsfunktion (50) eine Solltrajektorien-Folgefunktion (60) aufweist, die bei Bewegung des Fahrzeugs aktuelle Fahrzeug-Ist-Zustände zumindest mit einer Fahrzeug-Ist-Position jeweils relativ zu einer Soll-Trajektorie in eine Abweichungs-Relation setzt und aus der Abweichungs-Relation Solltrajektorien-Folgekommandos ermittelt und als Steuerungskommandos an die Antriebs-Ansteuerungsfunktion (55) übermittelt.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass ein Soll-Geschwindigkeitsverlauf in der Lastabgabe-Steuerungsfunktion vorgegeben ist. Dabei kann jeweils insbesondere vorgesehen sein, dass ein Soll-Geschwindigkeitsverlauf mit einer Soll-Beschleunigung vorgegeben ist.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass die Fahrzeug-Steuerungsfunktion eine Lastabgabe-Steuerungsfunktion aufweist, die aufgrund eines Soll-Geschwindigkeitsverlaufs des Fahrzeugs Geschwindigkeits-Kommandos ermittelt und als Steuerungskommandos an die Antriebs-Ansteuerungsfunktion übermittelt, die eine Übergabe-Geschwindigkeit des Fahrzeugs in dem Soll-Übergabepunkt einstellt,
wobei die Form des Übergabebereichs, die Lage des Übergabepunkts relativ zu der Ladungseinheit-Aufnahmevorrichtung und die Übergabe-Geschwindigkeit derart eingestellt sind, dass die auf dem Aufnahme-Bauteil des Fahrzeugs gelegene Ladungseinheit (L) durch deren Massenträgheit auf die Ladungseinheit-Aufnahmevorrichtung bewegt wird.

Bei jeder der Ausführungsformen der Erfindung mit einer Lastabgabe-Steuerungsfunktion kann vorgesehen sein, dass die Lastabgabe-Steuerungsfunktion eine Soll-Geschwindigkeit des Fahrzeugs in dem Soll-Übergabepunkt definiert.

Weiterhin kann bei jeder der Ausführungsformen der Erfindung mit einer Lastabgabe-Steuerungsfunktion vorgesehen sein, dass die Lastabgabe-Steuerungsfunktion eine Soll-Beschleunigung des Fahrzeugs in dem Übergabebereich definiert.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass das Fahrzeugsystem eine Geschwindigkeits-Ermittlungsfunktion aufweist, die die Übergabe-Geschwindigkeit aufgrund zumindest eines Geschwindigkeitsverlaufs-Kriteriums ermittelt.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein,
dass die Geschwindigkeits-Ermittlungsfunktion den Soll-Geschwindigkeitsverlauf auf der Basis einer oder beider der Verläufe (ST1), (ST2) des Übergabebereichs ermittelt:

| | |
|---|---|
| (ST1) | der Übergabebereich führt das Fahrzeug an der Ladungseinheit-Aufnahmevorrichtung vorbei und weist einen Krümmungsabschnitt mit im Wesentlichen einheitlicher Krümmung auf, so dass das Fahrzeug eine Seitenbeschleunigung erfährt, wobei die Ladungseinheit-Aufnahmevorrichtung an der konvexen Seite derselben gelegen ist, |
| (ST2) | der Übergabebereich führt das Fahrzeug zu einem Stoßen gegen die Ladungseinheit-Aufnahmevorrichtung in dem Soll-Übergabepunkt mit einer Bewegungsrichtungs-Umkehr in diesem Soll-Übergabepunkt, wobei der zu dem Soll-Übergabepunkt hinführende Abschnitt des Übergabebereichs in dem Soll-Übergabepunkt eine Richtung haben kann, die in einem Winkelbereich relativ zu der Erstreckung einer Anschlagfläche der Ladungseinheit-Aufnahmevorrichtung gelegen ist, der betragsmäßig größer als 25 Grad ist. |

Bei diesen Ausführungsformen kann insbesondere vorgesehen sein, dass die Geschwindigkeits-Ermittlungsfunktion einen Eigenschaftswert der Ladungseinheit verwendet. Ein Eigenschaftswert der Ladungseinheit kann insbesondere das Gewicht oder das Reibungsverhalten der Ladungseinheit auf dem Aufnahmebauteil oder einer Aufnahme-Oberfläche des Aufnahmebauteils sein.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass das Fahrzeug eine Gewichtssensor-Vorrichtung aufweist, mit der das Gewicht einer auf dem Aufnahmebauteil gelegenen Ladungseinheit ermittelt werden kann und dem ermittelten Gewicht einen Gewichtswert zuordnet und diesen der Geschwindigkeits-Ermittlungsfunktion als Eigenschaftswert der Ladungseinheit übermittelt.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass die Fahrzeug-Steuerungsfunktion aus zumindest einem Eigenschaftswert der Ladungseinheit die Soll-Geschwindigkeit oder eine Soll-Beschleunigung oder der Abstand zwischen dem Soll-Übergabepunkt und einer der Betriebsfläche zugewandten Randbereich der Ladungseinheit-Aufnahmevorrichtung einstellt oder anpasst.

Bei den Ausführungsformen des erfindungsgemäßen Fahrzeugs kann ein Geschwindigkeitsverlauf-Kriterium ein Beschleunigungswert des Fahrzeugs sein.

Erfindungsgemäße kann bei den Ausführungsformen des erfindungsgemäßen Fahrzeugs mit einer Geschwindigkeits-Ermittlungsfunktion vorgesehen sein, dass diese einen Wert für die Soll-Beschleunigung im Übergabepunkt ermittelt und daraus den Soll-Geschwindigkeitsverlauf mit der Soll-Geschwindigkeit oder Soll-Beschleunigung aufgrund zumindest eines Geschwindigkeitsverlauf-Kriteriums ermittelt.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass das Geschwindigkeitsverlauf-Kriterium ein minimaler Energiebedarf oder minimaler Verbrauch beim Abfahren der Soll-Trajektorie ist.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass die Soll-Trajektorie in der Fahrzeug-Steuerungsfunktion als vorgegebene Soll-Trajektorie abgespeichert ist und die Fahrzeug-Steuerungsfunktion die Soll-Trajektorie der Solltrajektorien-Folgefunktion bereitgestellt.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass die Fahrzeug-Steuerungsfunktion eine Solltrajektorien-Ermittlungsfunktion aufweist, die die Soll-Trajektorie ermittelt und die Fahrzeug-Steuerungsfunktion die Soll-Trajektorie der Solltrajektorien-Folgefunktion bereitgestellt.

Bei den Ausführungsformen des erfindungsgemäßen Fahrzeugs mit einer Solltrajektorien-Ermittlungsfunktion kann, in Kombination mit ansonsten jeder hierin beschriebenen oder enthaltenen Variante oder Ausführungsform des Fahrzeugs vorgesehen sein, dass die Solltrajektorien-Ermittlungsfunktion die Soll-Trajektorie aufgrund zumindest eines Trajektorienverlaufs-Kriteriums ermittelt.

Bei den Ausführungsformen des erfindungsgemäßen Fahrzeugs mit einer Solltrajektorien-Ermittlungsfunktion kann, in Kombination mit ansonsten jeder hierin beschriebenen oder enthaltenen Variante oder Ausführungsform des Fahrzeugs vorgesehen sein, dass die Solltrajektorien-Ermittlungsfunktion eine Mehrzahl von Soll-Trajektorien abgespeichert hat, von denen eine durch die Solltrajektorien-Ermittlungsfunktion aufgrund zumindest eines Trajektorienverlaufs-Kriteriums durch Auswahl einer der Soll-Trajektorien ermittelt wird.

Bei den Ausführungsformen des erfindungsgemäßen Fahrzeugs mit einer Solltrajektorien-Ermittlungsfunktion kann, in Kombination mit ansonsten jeder hierin beschriebenen oder enthaltenen Variante oder Ausführungsform des Fahrzeugs vorgesehen sein, dass die Solltrajektorien-Ermittlungsfunktion zumindest eine Soll-Trajektorie abgespeichert hat und die Solltrajektorien-Ermittlungsfunktion aufgrund zumindest eines Trajektorienverlaufs-Kriteriums Parameter der Soll-Trajektorie nach dem Trajektorienverlaufs-Kriterium anpasst.

Bei den Ausführungsformen des erfindungsgemäßen Fahrzeugs mit einer im Fahrzeugsystem oder der Fahrzeug-Steuerungsfunktion abgespeicherten Soll-Trajektorie kann, in Kombination mit ansonsten jeder hierin beschriebenen oder enthaltenen Variante oder Ausführungsform des Fahrzeugs vorgesehen sein, dass Soll-Trajektorien abgespeicherten nach einer der beiden folgenden Alternativen (ST1), (ST2) definiert sind:

| | |
|---|---|
| (ST1) | der Übergabebereich führt das Fahrzeug an der Ladungseinheit-Aufnahmevorrichtung vorbei und weist einen Krümmungsabschnitt mit einheitlicher Krümmung auf, so dass das Fahrzeug eine Seitenbeschleunigung erfährt, wobei die Ladungseinheit-Aufnahmevorrichtung an der konvexen Seite derselben gelegen ist, |
| (ST2) | der Übergabebereich führt das Fahrzeug zu einem Stoßen gegen die Ladungseinheit-Aufnahmevorrichtung in dem Soll-Übergabepunkt mit einer Bewegungsrichtungs-Umkehr in diesem Soll-Übergabepunkt, wobei der zu dem Soll-Übergabepunkt hinführende Abschnitt des Übergabebereichs in dem Soll-Übergabepunkt eine Richtung haben kann, die in einem Winkelbereich relativ zu der Erstreckung einer Anschlagfläche der Ladungseinheit-Aufnahmevorrichtung gelegen ist, der betragsmäßig größer als 25 Grad ist. |

Bei den Ausführungsformen des erfindungsgemäßen Fahrzeugs mit einer Solltrajektorien-Ermittlungsfunktion kann, in Kombination mit ansonsten jeder hierin beschriebenen oder enthaltenen Variante oder Ausführungsform des Fahrzeugs vorgesehen sein, dass die Solltrajektorien-Ermittlungsfunktion bei einem als Steuerungs-Sollvorgabe definierten Soll-Geschwindigkeitsverlauf im Übergabebereich und/oder bei einer als Steuerungs-Sollvorgabe definierten Soll-Beschleunigung im Soll-Übergabepunkt des Fahrzeugs, eines oder mehrere der folgenden Trajektorienverlaufs-Kriterien (TK1), (TK2), (TK3), (TK4), (TK5), (TK6) verwendet, um die zu erreichende Übergabe-Beschleunigung des Fahrzeugs sicherzustellen:

| | |
|---|---|
| (TK1) | minimale Länge von der Fahrzeug-Ist-Position oder dem Anfangspunkt der Soll-Trajektorie zum Soll-Übergabepunkt, |
| (TK2) | minimale Übergabe-Geschwindigkeit, |
| (TK3) | minimale Zeitdauer von der Fahrzeug-Ist-Position oder dem Anfangspunkt der Soll-Trajektorie zum Soll-Übergabepunkt, |
| (TK4) | minimaler Energiebedarf oder minimaler Energieverbrauch für das Fahren des Fahrzeugs von der Fahrzeug-Ist-Position oder dem Anfangspunkt der Soll-Trajektorie zum Soll-Übergabepunkt, |
| (TK5) | zuverlässige/prozesssichere Übergabe oder keine Fehlabgabe der Ladungseinheit L vom Fahrzeug an die Ladungseinheit-Aufnahmevorrichtung, |
| (TK6) | minimale Platzausnutzung in der Ladungseinheit-Aufnahmevorrichtung. |

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein, dass die Soll-Trajektorie aus einer Lastabgabe-Trajektorie und einer an dieser anschließenden Kopplungs-Trajektorie gebildet ist, wobei die Lastabgabe-Trajektorie zwischen einem Anfangspunkt und einem der Ladungseinheit-Aufnahmevorrichtung zugeordneten Soll-Übernahmepunkt verläuft und die Kopplungs-Trajektorie zu einem Kopplungspunkt hinführt und die momentane Fahrzeug-Ist-Position mit dem Kopplungspunkt verbindet,
wobei die Solltrajektorien-Folgefunktion folgende Funktionen aufweist:
(i) eine Kopplungstrajektorien-Folgefunktion, die bei Bewegung des Fahrzeugs aktuelle Ist-Fahrzeugpositionen mit der Kopplungs-Trajektorie in eine Abweichungs-Relation setzt und aus der Abweichungs-Relation Kopplungstrajektorien-Steuerungskommandos erzeugt und an die Antriebsvorrichtung übermittelt, so dass das Fahrzeug auf einer Fahrzeug-Bewegungsbahn entlang der Kopplungs-Trajektorie bewegt wird,
(ii) eine Lastabgabetrajektorien-Folgefunktion, die, nachdem das Fahrzeug die Lastabgabe-Trajektorie erreicht hat, aktuelle Fahrzeug-Ist-Positionen mit der Lastabgabe-Trajektorie in eine Abweichungs-Relation setzt und aus der Abweichungs-Relation Lastabgabetrajektorien-Steuerungskommandos erzeugt und an die Antriebsvorrichtung übermittelt, so dass das Fahrzeug auf einer Fahrzeug-Bewegungsbahn entlang der Lastabgabe-Trajektorie bewegt wird.

Bei den Ausführungsformen des erfindungsgemäßen Fahrzeugs mit einer Solltrajektorien-Ermittlungsfunktion kann, in Kombination mit ansonsten jeder hierin beschriebenen oder enthaltenen Variante oder Ausführungsform des Fahrzeugs vorgesehen sein, dass das Fahrzeugsystem eine Fahrzeug-Kommunikationsvorrichtung aufweist, die mit einer im Betriebsbereich stationär angeordneten Logistik-Zentralvorrichtung über Funk in Daten- oder Signalverbindung steht und die von der Logistik-Zentralvorrichtung Steuerungs-Sollvorgaben empfängt und der Fahrzeug-Steuerungsfunktion übermittelt.

Bei den Ausführungsformen des erfindungsgemäßen Fahrzeugs mit einer Solltrajektorien-Ermittlungsfunktion kann, in Kombination mit ansonsten jeder hierin beschriebenen oder enthaltenen Variante oder Ausführungsform des Fahrzeugs vorgesehen sein, dass das Fahrzeugsystem eine Fahrzeug-Kommunikationsvorrichtung aufweist, die mit einer im Betriebsbereich stationären Logistik-Zentralvorrichtung in Funkverbindung gebracht werden kann und von dieser Daten, die einen Fahrzeug-Ist-Zustand zumindest mit einer Fahrzeug-Ist-Position definieren, empfängt und an die Fahrzeug-Steuerungsfunktion übermittelt.

Bei den Ausführungsformen des erfindungsgemäßen Fahrzeugs mit einer Solltrajektorien-Ermittlungsfunktion kann, in Kombination mit ansonsten jeder hierin beschriebenen oder enthaltenen Variante oder Ausführungsform des Fahrzeugs vorgesehen sein, dass das Fahrzeugsystem eine Sensorvorrichtung aufweist, die jeweils aktuelle Fahrzeug-Ist-Positionen erfasst, die mit der Fahrzeug-Steuerungsfunktion funktional verbunden ist und die aktuellen Fahrzeug-Ist-Positionen an die Fahrzeug-Steuerungsfunktion übermittelt.

Bei jeder der Ausführungsformen des erfindungsgemäßen Fahrzeugs mit einer Sensorvorrichtung zur Erfassung von jeweils aktuelle Fahrzeug-Ist-Positionen kann vorgesehen sein, dass die Sensorvorrichtung einen optischen Sensor oder eine Kamera aufweist, der bzw. die optische Bodenmerkmale oder mit der Sensorvorrichtung des Fahrzeugs erfassbare und z.B. sichtbare Bodenmarkierungen der Betriebsfläche abbildet, wobei das Fahrzeugsystem eine Identifizierungsfunktion, optional mit einer entsprechenden Zuordnungsfunktion aufweist, mit der aufgrund einer aktuellen Abbildung von Bodenmarkierungen, die auf der Betriebsfläche angeordnet sind, die Fahrzeug-Ist-Position ermittelt wird.

Nach einem weiteren Aspekt der Erfindung ist ein Logistiksystem vorgesehen, das insbesondere aufweist:
eine in einem Betriebsbereich stationär angeordnete Logistik-Zentralvorrichtung mit einer Logistik-Kommunikationsvorrichtung
eine in dem Betriebsbereich angeordnete Ladungseinheit-Übernahmevorrichtung,
ein Fahrzeug zur Übergabe einer Ladungseinheit an die Ladungseinheit-Übernahmevorrichtung, das Fahrzeug aufweisend: ein Fahrwerk, eine Antriebsvorrichtung, die mit dem Fahrwerk in Verbindung steht und die einen Geschwindigkeitsvektor des Fahrzeugs auf einer Betriebsfläche des Betriebsbereichs einstellt, und ein an dem Fahrwerk angeordneter Fahrzeug-Rahmen mit einem Aufnahmebauteil zum Aufnehmen einer Ladungseinheit, wobei das Fahrzeug ein Fahrzeugsystem aufweist mit:
   einer Fahrzeug-Steuerungsfunktion, die funktional mit der Antriebsvorrichtung in Verbindung steht und aufgrund von Steuerungs-Sollvorgaben Steuerungskommandos ermittelt und diese an die Antriebsvorrichtung zur Einstellung eines jeweils aktuellen Geschwindigkeitsvektors des Fahrzeugs übermittelt,
   einer Fahrzeug-Kommunikationsvorrichtung, die mit der Logistik-Kommunikationsvorrichtung über Funk in Daten- oder Signalverbindung steht und mit einer Fahrzeug-Steuerungsfunktion funktional in Verbindung steht,
   wobei die Fahrzeug-Steuerungsfunktion Solltrajektorien-Folgekommandos als Steuerungs-Sollvorgaben verwendet oder ermittelt, mit denen das Fahrzeug auf einer Fahrzeug-Bewegungsbahn entlang einer Soll-Trajektorie bewegt wird, wobei die Soll-Trajektorie zwischen einem Anfangspunkt und einem Endpunkt verläuft und einen Übergabebereich mit einem der Ladungseinheit-Aufnahmevorrichtung zugeordneten Soll-Übergabepunkt aufweist,
   wobei die Fahrzeug-Steuerungsfunktion zumindest für den Übergabebereich der Soll-Trajektorie einen Soll-Geschwindigkeitsverlauf als Steuerungs-Sollvorgaben verwendet oder ermittelt,
   wobei die Fahrzeug-Steuerungsfunktion eine Antriebs-Ansteuerungsfunktion aufweist, die die Steuerungs-Sollvorgaben in Steuerungskommandos umsetzt, die in Bezug auf den jeweiligen Ist-Fahrzeug-Zustand einen jeweils aktuellen Soll-Geschwindigkeitsvektor definieren,
   wobei die Antriebsvorrichtung aufgrund der Steuerungskommandos eine Übergabe-Beschleunigung des Fahrzeugs zumindest in einem sich den Soll-Übergabepunkt aufweisenden Abschnitt realisiert, bei der die auf dem Aufnahme-Bauteil des Fahrzeugs gelegene Ladungseinheit durch deren Massenträgheit auf die Ladungseinheit-Aufnahmevorrichtung bewegt wird.

Bei jeder der Ausführungsformen des erfindungsgemäßen Logistiksystems kann vorgesehen sein, dass die Fahrzeug-Steuerungsfunktion die Solltrajektorien-Folgefunktion und eine Lastabgabe-Steuerungsfunktion aufweist.

Bei jeder der Ausführungsformen des erfindungsgemäßen Logistiksystems kann vorgesehen sein, dass die Solltrajektorien-Folgefunktion die Soll-Trajektorie enthält.

Bei jeder der Ausführungsformen des erfindungsgemäßen Logistiksystems kann vorgesehen sein, dass das Fahrzeug nach einer der hierin beschriebenen oder enthaltenen Varianten oder Ausführungsformen ausgeführt ist.

Bei jeder der Ausführungsformen des erfindungsgemäßen Logistiksystems kann vorgesehen sein,
dass die Logistik-Zentralvorrichtung eine Fahrzeug-Identifizierungsvorrichtung zur Ermittlung jeweils aktueller Fahrzeug-Ist-Positionen aufweist, die mit der Logistik-Kommunikationsvorrichtung funktional in Verbindung steht und die die ermittelten jeweils aktuellen Fahrzeug-Ist-Positionen an die Logistik-Kommunikationsvorrichtung übermittelt, wobei die Logistik-Kommunikationsvorrichtung über eine Funkverbindung mit der Fahrzeug-Kommunikationsvorrichtung in Verbindung steht und die jeweils aktuellen Fahrzeug-Ist-Positionen an die Fahrzeug-Kommunikationsvorrichtung übermittelt,
dass die Fahrzeug-Steuerungsfunktion mit der Fahrzeug-Kommunikationsvorrichtung funktional in Verbindung steht und die jeweils aktuellen Ist-Fahrzeugpositionen empfängt,
dass die Fahrzeug-Steuerungsfunktion die Solltrajektorien-Folgefunktion aufweist, die aufgrund der empfangenen jeweils aktuellen Fahrzeug-Ist-Positionen und aufgrund der Soll-Trajektorie Solltrajektorien-Folgekommandos ermittelt und als Steuerungskommandos an die Antriebsvorrichtung übermittelt,
dass die Fahrzeug-Steuerungsfunktion die Lastabgabe-Steuerungsfunktion aufweist, die aufgrund eines Soll-Geschwindigkeitsverlaufs des Fahrzeugs Geschwindigkeits-Kommandos erzeugt und als Steuerungskommandos an die Antriebsvorrichtung übermittelt.

Bei jeder der Ausführungsformen des erfindungsgemäßen Logistiksystems mit einer Fahrzeug-Identifizierungsvorrichtung kann vorgesehen sein, dass die Lastabgabe-Steuerungsfunktion den Soll-Geschwindigkeitsverlauf enthält und aus diesem die Geschwindigkeits-Kommandos erzeugt.

Bei jeder der Ausführungsformen des erfindungsgemäßen Logistiksystems mit einer Fahrzeug-Identifizierungsvorrichtung kann vorgesehen sein, dass die Logistik-Zentralvorrichtung aufweist:
eine zentral angeordnete Logistik-Identifizierungsvorrichtung zur Ermittlung jeweils aktueller Fahrzeug-Ist-Positionen, die aufweist: die Solltrajektorien-Folgefunktion mit der Soll-Trajektorie, die aufgrund der jeweils aktuellen Fahrzeug-Ist-Positionen und der Soll-Trajektorie Solltrajektorien-Folgekommandos ermittelt und als Steuerungs-Sollvorgaben an die Logistik-Kommunikationsvorrichtung übermittelt, die die Solltrajektorien-Folgekommandos ermittelt und als Steuerungs-Sollvorgaben an die Fahrzeug-Kommunikationsvorrichtung übermittelt,
eine zentral angeordnete Lastabgabe-Steuerungsfunktion, die Geschwindigkeits-Kommandos erzeugt und als Steuerungs-Sollvorgaben an die Logistik-Kommunikationsvorrichtung übermittelt, die die Geschwindigkeits-Kommandos ermittelt und als Steuerungs-Sollvorgaben an die Fahrzeug-Kommunikationsvorrichtung übermittelt,
wobei die Fahrzeug-Kommunikationsvorrichtung die Solltrajektorien-Folgekommandos als Steuerungs-Sollvorgaben an die Fahrzeug-Steuerungsfunktion übermittelt, die die Solltrajektorien-Folgekommandos und die Geschwindigkeits-Kommandos an die Antriebsvorrichtung übermittelt.

Bei jeder der Ausführungsformen des erfindungsgemäßen Logistiksystems mit einer Fahrzeug-Identifizierungsvorrichtung kann vorgesehen sein, dass die Logistik-Zentralvorrichtung aufweist: eine Logistik-Identifizierungsvorrichtung zur Ermittlung jeweils aktueller Fahrzeug-Ist-Positionen, einer zentral angeordnete Solltrajektorien-Folgefunktion mit der Soll-Trajektorie, die aufgrund der jeweils aktuellen Fahrzeug-Ist-Positionen und der Soll-Trajektorie Solltrajektorien-Folgekommandos an die Logistik-Kommunikationsvorrichtung übermittelt, die die Solltrajektorien-Folgekommandos ermittelt und als Steuerungs-Sollvorgaben an die Fahrzeug-Kommunikationsvorrichtung übermittelt, wobei die Fahrzeug-Kommunikationsvorrichtung die Solltrajektorien-Folgekommandos als Steuerungskommandos an die Antriebsvorrichtung übermittelt
dass die Fahrzeug-Steuerungsfunktion aufweist: die Lastabgabe-Steuerungsfunktion, die aufgrund eines Soll-Geschwindigkeitsverlaufs des Fahrzeugs Geschwindigkeits-Kommandos erzeugt und als Steuerungskommandos an die Antriebsvorrichtung übermittelt.

Bei jeder der Ausführungsformen des erfindungsgemäßen Logistiksystems mit einer Fahrzeug-Identifizierungsvorrichtung und einer zentral angeordneten Solltrajektorien-Folgefunktion kann vorgesehen sein, dass die Logistik-Zentralvorrichtung eine Logistik-Steuerungsfunktion aufweist, in der die Soll-Trajektorie als vorgegebene Soll-Trajektorie abgespeichert ist und die Logistik-Kommunikationsvorrichtung die Soll-Trajektorie an die Solltrajektorien-Folgefunktion übermittelt. Bei diesen Ausführungsformen des erfindungsgemäßen Logistiksystems kann vorgesehen sein, dass die Fahrzeug-Steuerungsfunktion eine Solltrajektorien-Ermittlungsfunktion aufweist, die die Soll-Trajektorie ermittelt und die Fahrzeug-Steuerungsfunktion die Soll-Trajektorie der Solltrajektorien-Folgefunktion bereitgestellt.

Nach einem weiteren Aspekt der Erfindung ist ein Verfahren zur Übergabe einer Ladungseinheit von einem Fahrzeug an eine Ladungseinheit-Aufnahmevorrichtung in einem Betriebsbereich vorgesehen, wobei das Fahrzeug aufweist: ein Fahrwerk, eine Antriebsvorrichtung, die mit dem Fahrwerk in Verbindung steht und die aufgrund von Steuerungskommandos einen Geschwindigkeitsvektor des Fahrzeugs auf einer Betriebsfläche des Betriebsbereichs einstellt, und ein an dem Fahrwerk angeordneter Fahrzeug-Rahmen mit einem Aufnahmebauteil zum Aufnehmen einer Ladungseinheit, wobei das Verfahren die folgenden Schritte aufweist:
aufgrund von Steuerungs-Sollvorgaben Ermittlung von Steuerungskommandos und Übermittlung derselben an die Antriebsvorrichtung, um einen jeweils aktuellen Geschwindigkeitsvektor des Fahrzeugs einzustellen,
bei Bewegung des Fahrzeugs mit dem jeweiligen Geschwindigkeitsvektor Ermitteln einer Abweichungs-Relation zwischen aktuellen Fahrzeug-Ist-Zuständen zumindest mit einer Fahrzeug-Ist-Position jeweils relativ zu einer Soll-Trajektorie, wobei die Soll-Trajektorie zwischen einem Anfangspunkt und einem Endpunkt verläuft und einen Übergabebereich mit einem der Ladungseinheit-Aufnahmevorrichtung zugeordneten Soll-Übergabepunkt aufweist,
aus der Abweichungs-Relation Ermitteln von Solltrajektorien-Folgekommandos und Übermittlung derselben als Steuerungskommandos an die Antriebsvorrichtung, wobei mit den Steuerungskommandos das Fahrzeug auf einer Fahrzeug-Bewegungsbahn entlang der Soll-Trajektorie bewegt wird,
aufgrund eines Soll-Geschwindigkeitsverlaufs des Fahrzeugs Ermittlung von Geschwindigkeits-Kommandos und Übermittlung derselben als Steuerungskommandos an die Antriebsvorrichtung, wobei die Geschwindigkeits-Kommandos eine Übergabe-Beschleunigung des Fahrzeugs in dem Soll-Übergabepunkt einstellen und sich die auf dem Aufnahme-Bauteil des Fahrzeugs gelegene Ladungseinheit durch deren Massenträgheit auf die Ladungseinheit-Aufnahmevorrichtung bewegt.

Bei jeder der Ausführungsformen des erfindungsgemäßen Verfahrens Fahrzeugs Logistiksystems kann vorgesehen sein, dass ein Geschwindigkeitsverlauf für das Fahrzeug beim Fahren entlang der Soll-Trajektorie vorgegeben ist.

Bei den Ausführungsformen des erfindungsgemäßen Fahrzeugs kann, in Kombination mit ansonsten jeder hierin beschriebenen oder enthaltenen Variante oder Ausführungsform des Fahrzeugs vorgesehen sein,
dass die Übergabe- Beschleunigung auf der Basis einer oder beider der Verläufe (ST1), (ST2) des Übergabebereichs ermittelt wird:

| | |
|---|---|
| (ST1) | der Übergabebereich führt das Fahrzeug an der Ladungseinheit-Aufnahmevorrichtung vorbei und weist einen Krümmungsabschnitt mit im Wesentlichen einheitlicher Krümmung auf, so dass das Fahrzeug eine Seitenbeschleunigung erfährt, wobei die Ladungseinheit-Aufnahmevorrichtung an der konvexen Seite derselben gelegen ist, |
| (ST2) | der Übergabebereich führt das Fahrzeug zu einem Stoßen gegen die Ladungseinheit-Aufnahmevorrichtung in dem Soll-Übergabepunkt mit einer |

| | |
|---|---|
| | Bewegungsrichtungs-Umkehr in diesem Soll-Übergabepunkt, wobei der zu dem Soll-Übergabepunkt hinführende Abschnitt des Übergabebereichs in dem Soll-Übergabepunkt eine Richtung haben kann, die in einem Winkelbereich relativ zu der Erstreckung einer Anschlagfläche der Ladungseinheit-Aufnahmevorrichtung gelegen ist, der betragsmäßig größer als 25 Grad ist. |

Bei den Ausführungsformen des erfindungsgemäßen Verfahrens kann, in Kombination mit ansonsten jeder hierin beschriebenen oder enthaltenen Variante oder Ausführungsform des Fahrzeugs vorgesehen sein, dass die Geschwindigkeits-Ermittlungsfunktion einen Eigenschaftswert der Ladungseinheit verwendet. Dabei kann als Eigenschaftswert der Ladungseinheit das Gewicht der Ladungseinheit oder ein Reibwert in Bezug auf eine Bewegung der Ladungseinheit auf dem Aufnahmebauteil oder der Aufnahme-Oberfläche des Fahrzeugs zum Aufnehmen einer Ladungseinheit oder eine Kombination aus dem Gewicht und dem Reibwert sein.

Bei den Ausführungsformen des erfindungsgemäßen Verfahrens kann, in Kombination mit ansonsten jeder hierin beschriebenen oder enthaltenen Variante oder Ausführungsform des Fahrzeugs vorgesehen sein, dass mittels einer Gewichtssensor-Vorrichtung des Fahrzeugs das Gewicht einer auf dem Aufnahmebauteil gelegenen Ladungseinheit ermittelt wird und dem ermittelten Gewicht einen Gewichtswert zugeordnet wird und dieser zur Geschwindigkeits-Ermittlung als Eigenschaftswert der Ladungseinheit verwendet wird, wobei insbesondere mit dem Gewicht die Übergabe-Geschwindigkeit ermittelt wird.

Bei jeder der Ausführungsformen des erfindungsgemäßen Verfahrens kann vorgesehen sein, dass ein Geschwindigkeitsverlauf-Kriterium ein Beschleunigungswert des Fahrzeugs ist.

Bei jeder der Ausführungsformen des erfindungsgemäßen Verfahrens kann vorgesehen sein, dass die Geschwindigkeits-Ermittlungsfunktion einen Wert für die Soll-Beschleunigung im Übergabepunkt ermittelt und daraus den Geschwindigkeitsverlauf ermittelt.

Bei den Ausführungsformen des erfindungsgemäßen Verfahrens kann, in Kombination mit ansonsten jeder hierin beschriebenen oder enthaltenen Variante oder Ausführungsform des Fahrzeugs vorgesehen sein, dass das Geschwindigkeitsverlauf-Kriterium ein minimaler Energiebedarf oder minimaler Verbrauch beim Abfahren der Soll-Trajektorie ist.

Bei den Ausführungsformen des erfindungsgemäßen Verfahrens kann, in Kombination mit ansonsten jeder hierin beschriebenen oder enthaltenen Variante oder Ausführungsform des Fahrzeugs vorgesehen sein, dass die Soll-Trajektorie eine vorgegebene Soll-Trajektorie ist.

Bei den Ausführungsformen des erfindungsgemäßen Verfahrens kann, in Kombination mit ansonsten jeder hierin beschriebenen oder enthaltenen Variante oder Ausführungsform des Fahrzeugs vorgesehen sein, dass die Fahrzeug-Steuerungsfunktion eine Solltrajektorien-Ermittlungsfunktion aufweist, die die Soll-Trajektorie ermittelt und die Fahrzeug-Steuerungsfunktion die Soll-Trajektorie der Solltrajektorien-Folgefunktion bereitgestellt.

Bei jeder der Ausführungsformen des erfindungsgemäßen Verfahrens mit einer Solltrajektorien-Ermittlungsfunktion kann vorgesehen sein, dass die Solltrajektorien-Ermittlungsfunktion die Soll-Trajektorie aufgrund zumindest eines Trajektorienverlaufs-Kriteriums ermittelt.

Bei jeder der Ausführungsformen des erfindungsgemäßen Verfahrens mit einer Solltrajektorien-Ermittlungsfunktion kann vorgesehen sein, dass die Solltrajektorie aufgrund zumindest eines Trajektorienverlaufs-Kriteriums durch Auswahl einer der Soll-Trajektorien ermittelt wird.

Bei jeder der Ausführungsformen des erfindungsgemäßen Verfahrens mit einer Solltrajektorien-Ermittlungsfunktion kann vorgesehen sein, dass Parameter der Soll-Trajektorie aufgrund zumindest eines Trajektorienverlaufs-Kriteriums anpasst werden.

Bei jeder der Ausführungsformen des erfindungsgemäßen Verfahrens mit einer Solltrajektorien-Ermittlungsfunktion kann vorgesehen sein, dass Soll-Trajektorien nach einer der beiden folgenden Alternativen (ST1), (ST2) definiert sind:

| | |
|---|---|
| (ST1) | der Übergabebereich führt das Fahrzeug an der Ladungseinheit-Aufnahmevorrichtung vorbei und weist einen Krümmungsabschnitt mit einheitlicher Krümmung auf, so dass das Fahrzeug eine Seitenbeschleunigung erfährt, wobei die Ladungseinheit-Aufnahmevorrichtung an der konvexen Seite derselben gelegen ist, |
| (ST2) | der Übergabebereich führt das Fahrzeug zu einem Stoßen gegen die Ladungseinheit-Aufnahmevorrichtung in dem Soll-Übergabepunkt mit einer Bewegungsrichtungs-Umkehr in diesem Soll-Übergabepunkt, wobei der zu dem Soll-Übergabepunkt hinführende Abschnitt des Übergabebereichs in dem Soll-Übergabepunkt eine Richtung haben kann, die in einem Winkelbereich relativ zu der Erstreckung einer Anschlagfläche der Ladungseinheit-Aufnahmevorrichtung gelegen ist, der betragsmäßig größer als 25 Grad ist. |

Bei jeder der Ausführungsformen des erfindungsgemäßen Verfahrens mit einer Solltrajektorien-Ermittlungsfunktion kann vorgesehen sein, dass die Solltrajektorien-Ermittlungsfunktion bei einem als Steuerungs-Sollvorgabe definierten Soll-Geschwindigkeitsverlauf im Übergabebereich und/oder bei einer als Steuerungs-Sollvorgabe definierten Soll-Beschleunigung im Soll-Übergabepunkt des Fahrzeugs, eines oder mehrere der folgenden Trajektorienverlaufs-Kriterien (TK1), (TK2), (TK3), (TK4), (TK5), (TK6) verwendet, um die zu erreichende Übergabe-Beschleunigung des Fahrzeugs 1 sicherzustellen:

| | |
|---|---|
| (TK1) | minimale Länge von der Fahrzeug-Ist-Position oder dem Anfangspunkt der Soll-Trajektorie zum Soll-Übergabepunkt, |
| (TK2) | minimale Übergabe-Geschwindigkeit, |
| (TK3) | minimale Zeitdauer von der Fahrzeug-Ist-Position oder dem Anfangspunkt der Soll-Trajektorie zum Soll-Übergabepunkt, |
| (TK4) | minimaler Energiebedarf oder minimaler Energieverbrauch für das Fahren des Fahrzeugs on der Fahrzeug-Ist-Position oder dem Anfangspunkt der Soll-Trajektorie zum Soll-Übergabepunkt, |
| (TK5) | zuverlässige/prozesssichere Übergabe oder keine Fehlabgabe der Ladungseinheit vom Fahrzeug an die Ladungseinheit-Aufnahmevorrichtung, |
| (TK6) | minimale Platzausnutzung in der Ladungseinheit-Aufnahmevorrichtung. |

Bei den Ausführungsformen des erfindungsgemäßen Verfahrens kann, in Kombination mit ansonsten jeder hierin beschriebenen oder enthaltenen Variante oder Ausführungsform des Fahrzeugs vorgesehen sein, dass die Soll-Trajektorie aus einer Lastabgabe-Trajektorie und einer an dieser anschließenden Kopplungs-Trajektorie gebildet ist, wobei die Lastabgabe-Trajektorie zwischen einem Anfangspunkt und einem der Ladungseinheit-Aufnahmevorrichtung zugeordneten Soll-Übernahmepunkt verläuft und die Kopplungs-Trajektorie zu dem Kopplungspunkt hinführt und die momentane Fahrzeug-Ist-Position mit dem Kopplungspunkt verbindet,
wobei die Solltrajektorien-Folgekommandos mit folgenden Funktionen ermittelt werden:
(i) eine Kopplungstrajektorien-Folgefunktion, die bei Bewegung des Fahrzeugs aktuelle Ist-Fahrzeugpositionen mit der Kopplungs-Trajektorie in eine Abweichungs-Relation setzt und aus der Abweichungs-Relation Kopplungstrajektorien-Steuerungskommandos erzeugt und an die Antriebsvorrichtung übermittelt, so dass das Fahrzeug auf einer Fahrzeug-Bewegungsbahn entlang der Kopplungs-Trajektorie bewegt wird,
(ii) eine Lastabgabetrajektorien-Folgefunktion, die, nachdem das Fahrzeug die Lastabgabe-Trajektorie erreicht hat, aktuelle Fahrzeug-Ist-Positionen mit der Lastabgabe-Trajektorie in eine Abweichungs-Relation setzt und aus der Abweichungs-Relation Lastabgabetrajektorien-Steuerungskommandos erzeugt und an die Antriebsvorrichtung übermittelt, so dass das Fahrzeug auf einer Fahrzeug-Bewegungsbahn entlang der Lastabgabe-Trajektorie bewegt wird.

Bei den Ausführungsformen des erfindungsgemäßen Verfahrens kann, in Kombination mit ansonsten jeder hierin beschriebenen oder enthaltenen Variante oder Ausführungsform des Fahrzeugs vorgesehen sein, dass das Fahrzeugsystem des Fahrzeugs einer im Betriebsbereich stationär angeordneten Logistik-Zentralvorrichtung über Funk in Daten- oder Signalverbindung steht und von der Logistik-Zentralvorrichtung Steuerungs-Sollvorgaben empfängt und der Fahrzeug-Steuerungsfunktion übermittelt.

Bei den Ausführungsformen des erfindungsgemäßen Verfahrens kann, in Kombination mit ansonsten jeder hierin beschriebenen oder enthaltenen Variante oder Ausführungsform des Fahrzeugs vorgesehen sein,
dass das Fahrzeugsystem Daten, die einen Fahrzeug-Ist-Zustand zumindest mit einer Fahrzeug-Ist-Position definieren, von einer im Betriebsbereich stationären Logistik-Zentralvorrichtung empfängt,
dass das Fahrzeugsystem aus der Abweichungs-Relation die Solltrajektorien-Folgekommandos und aufgrund eines Soll-Geschwindigkeitsverlaufs des Fahrzeugs die Geschwindigkeits-Kommandos ermittelt und als Steuerungskommandos an die Antriebsvorrichtung übermittelt.

Bei den Ausführungsformen des erfindungsgemäßen Verfahrens kann, in Kombination mit ansonsten jeder hierin beschriebenen oder enthaltenen Variante oder Ausführungsform des Fahrzeugs vorgesehen sein, dass die aktuelle Fahrzeug-Ist-Positionen mittels einer Sensorvorrichtung des Fahrzeugsystems erfasst wird.

Bei jeder der Ausführungsformen des erfindungsgemäßen Verfahrens mit der Sensorvorrichtung des Fahrzeugsystems kann vorgesehen sein, dass die Sensorvorrichtung eine Kamera aufweist, die optische Bodenmerkmale oder mit einem optischen Sensor erfassbare Bodenmarkierungen der Betriebsfläche abbildet, wobei das Fahrzeugsystem eine Identifizierungsfunktion aufweist, mit der aufgrund einer aktuellen Abbildung von Bodenmerkmale oder Bodenmarkierungen, die auf der Betriebsfläche angeordnet sind, die Fahrzeug-Ist-Position ermittelt.

Im Folgenden werden Ausführungsformen der Erfindung anhand der beiliegenden Figuren beschrieben. Hierin ist die Beschreibung von Merkmalen oder Komponenten von erfindungsgemäßen Ausführungsformen so zu verstehen, dass eine betreffende Ausführungsform erfindungsgemäß, sofern dies nicht explizit ausgeschlossen ist, auch zumindest ein Merkmal einer anderen Ausführungsform aufweisen kann, jeweils als zusätzliches Merkmal dieser betreffenden Ausführungsform oder als alternatives Merkmal, das ein anderes Merkmal dieser betreffenden Ausführungsform ersetzt. Die Figuren zeigen:
Figur 1 eine perspektivische Darstellung einer erfindungsgemäßen Ausführungsform des Fahrzeugs, bei der das Fahrzeug ein Fahrwerk mit vier Rädern aufweist, von denen zwei erste Räder in ihrer Kombination als Differential-Drehräder ausgebildet sind, und von denen zwei weitere Räder jeweils als Stützräder ausgebildet sind, und
Figur 2 eine perspektivische Darstellung einer erfindungsgemäßen Ausführungsform des Fahrzeugs, bei der das Fahrzeug ein Fahrwerk mit vier Rädern aufweist, die in ihrer Kombination als omni-direktionale Räder ausgebildet sind,
Figur 3 eine schematische Darstellung einer ersten Betriebskonstellation auf einer Betriebsfläche, die erste Betriebskonstellation aufweisend: ein Fahrzeug, eine Ladungseinheit-Aufnahmevorrichtung und eine erste, zu der Ladungseinheit-Aufnahmevorrichtung hinführende Soll-Trajektorie, die derart gestaltet ist, dass das Fahrzeug einen Frontalstoß mit Richtungsumkehr an der Ladungseinheit-Aufnahmevorrichtung erfährt,
Figur 4 eine schematische Darstellung einer ersten Betriebskonstellation auf einer Betriebsfläche, die erste Betriebskonstellation aufweisend: ein Fahrzeug, eine Ladungseinheit-Aufnahmevorrichtung und eine erste, zu der Ladungseinheit-Aufnahmevorrichtung hinführende Soll-Trajektorie, die derart gestaltet ist, dass das Fahrzeug an der Ladungseinheit-Aufnahmevorrichtung vorbeifährt oder an der Ladungseinheit-Aufnahmevorrichtung seitlich anstößt,
Figur 5 eine funktionale Darstellung einer erfindungsgemäßen Ausführungsform der Fahrzeug-Steuerungsfunktion mit ihrer funktionalen Integration in das Fahrzeug,
Figur 6 eine funktionale Darstellung einer weiteren erfindungsgemäßen Ausführungsform der Fahrzeug-Steuerungsfunktion mit ihrer funktionalen Integration in das Fahrzeug,
Figur 7 eine funktionale Darstellung einer Ausführungsform der erfindungsgemäßen Logistiksystem mit einer Ausführungsform der Logistik-Zentralvorrichtung und einer Ausführungsform der Fahrzeug-Steuerungsfunktion mit ihrer funktionalen Integration in das Fahrzeug,
Figur 8 eine funktionale Darstellung einer weiteren Ausführungsform der erfindungsgemäßen Logistiksystem mit einer Ausführungsform der Logistik-Zentralvorrichtung und einer Ausführungsform der Fahrzeug-Steuerungsfunktion mit ihrer funktionalen Integration in das Fahrzeug,
Figur 9 eine funktionale Darstellung einer weiteren Ausführungsform der erfindungsgemäßen Logistiksystem mit einer Ausführungsform der Logistik-Zentralvorrichtung und einer Ausführungsform der Fahrzeug-Steuerungsfunktion mit ihrer funktionalen Integration in das Fahrzeug,
Figur 10 eine funktionale Darstellung einer weiteren Ausführungsform der erfindungsgemäßen Logistiksystem mit einer Ausführungsform der Logistik-Zentralvorrichtung und einer Ausführungsform der Fahrzeug-Steuerungsfunktion mit ihrer funktionalen Integration in das Fahrzeug.

Anhand der Figuren werden Ausführungsformen des erfindungsgemäßen Fahrzeugs 1, des erfindungsgemäßen Logistiksystems sowie des erfindungsgemäßen Verfahrens jeweils in Varianten und zueinander alternativen Ausführungsformen mit Merkmalen beschrieben. Dabei können die Merkmale, durch die sich die weiteren alternativen Ausführungsformen von den Varianten unterscheiden, erfindungsgemäß auch an allen hierin beschriebenen Ausführungsformen vorhanden sein, und zwar sowohl als Alternative zu funktionsgleichen oder funktionsähnlichen Merkmalen als auch als zusätzliche Merkmale.

Bei den Ausführungsformen des erfindungsgemäßen Fahrzeugs 1 kann, in Kombination mit ansonsten jeder hierin beschriebenen Variante des Fahrzeugs, vorgesehen sein, dass das Fahrzeug nach einer oder mehrerer der folgenden Steuerungen realisiert ist:

| | |
|---|---|
| (S1) | das Fahrzeug ist ein bemanntes Fahrzeug mit einem Fahrzeugsystem, das jeweils aktuelle Fahrzeug-Ist-Positionen verfügbar hat und insbesondere eine Fahrzeug-Sensorvorrichtung zur Ermittlung von jeweils aktuellen Fahrzeug-Ist-Positionen aufweist und das Steuerorgane aufweist, die von einer Person betätigt werden können, wobei durch Betätigung der Steuerorgane Steuerungskommandos erzeugt und an die Antriebsvorrichtung übermittelt werden, die das Fahrzeug in Abhängigkeit von den Steuerungskommandos auf der Betriebsfläche bewegt, wobei die Steuerungskommandos aufgrund von Steuerungs-Sollvorgaben, die vom Fahrzeugsystem z.B. einer Anzeige desselben, bereitgestellt werden, eingegeben werden; |
| (S2) | das Fahrzeug ist ein selbst-steuerndes Fahrzeug mit einem Fahrzeugsystem, bei dem von dem Fahrzeugsystem Steuerungs-Sollvorgaben erzeugt werden und diese an eine Antriebs-Ansteuerungsvorrichtung des Fahrzeugs übermittelt werden, die aufgrund der Steuerungs-Sollvorgaben Steuerungskommandos direkt oder indirekt an die Fahrzeug-Antriebsvorrichtung übermittelt, durch die sich das Fahrzeug in Abhängigkeit von den Steuerungskommandos auf der Betriebsfläche bewegt; |
| (S3) | das Fahrzeug ist ein selbst-steuerndes Fahrzeug mit einem Fahrzeugsystem, bei dem von einer externen Vorrichtung wie insbesondere einer im Betriebsbereich stationär angeordneten Logistik-Zentralvorrichtung Steuerungs-Sollvorgaben erzeugt werden und diese über Funk an eine Fahrzeug-Kommunikationsvorrichtung des Fahrzeugs und von dieser an eine Antriebs-Ansteuerungsvorrichtung des Fahrzeugs übermittelt werden, die aufgrund der Steuerungs-Sollvorgaben Steuerungskommandos direkt oder indirekt an die Fahrzeug-Antriebsvorrichtung übermittelt, durch die sich das Fahrzeug in Abhängigkeit von den Steuerungskommandos auf der Betriebsfläche bewegt. |

Das erfindungsgemäße Fahrzeug 1 kann somit insbesondere gesteuert oder selbst-steuernd, also mit oder ohne manuelle Steuerung, fahren und, insbesondere mittels entsprechender erfindungsgemäß vorgesehener Funktionen selbst-steuernd, zumindest eine vorgegebene Übergabe-Missionsaufgabe erfüllen oder eine Abfolge von Übergabe-Missionsaufgaben erfüllen. Eine vorbestimmte Übergabe-Missionsaufgabe beinhaltet ein Bewegen des Fahrzeugs 1 mit einer Ladungseinheit L entlang einer Soll-Trajektorie zu einer Ladungseinheit-Aufnahmevorrichtung 100 und die Übergabe einer Ladungseinheit L an die Ladungseinheit-Aufnahmevorrichtung 100.

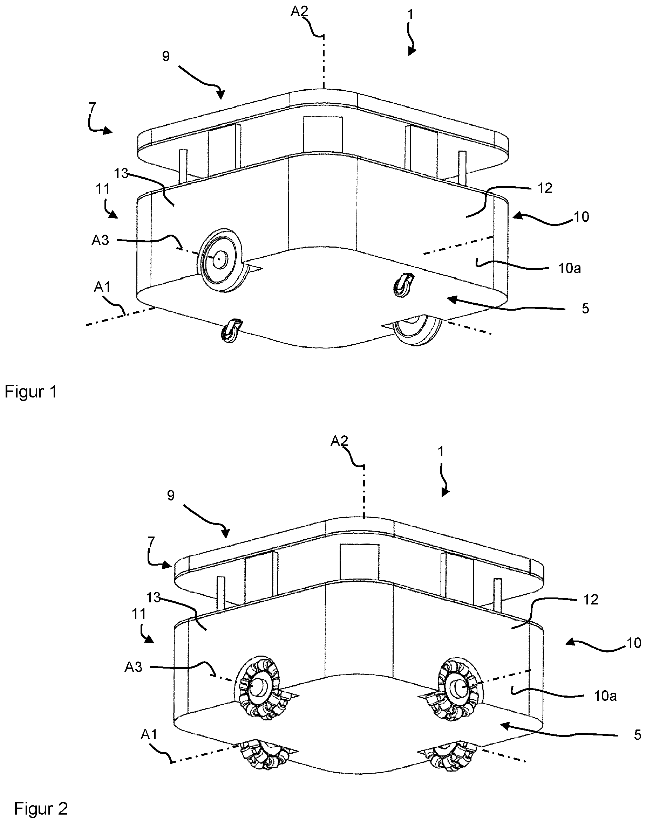

In der Figur 1 ist beispielartig ein Bezugssystem KS-F für das Fahrzeug 1 eingetragen, wie es auch für die erfindungsgemäß verwendeten Funktionen definiert sein kann. In der Figur 1 sind für das Fahrzeug 1 beispielartig eine Längsachse A1, eine Vertikalachse A2 und eine Querachse A3 eingetragen. Insbesondere kann vorgesehen sein, dass diese Achsen A1, A2, A3 in einem Punkt des Fahrzeugs 1 zusammenlaufen, der als Zentrum ZF des Fahrzeugs 1 definiert ist. Als Zentrum des Fahrzeugs 1 kann auch ein anderer Punkt und generell ein beliebiger Punkt definiert sein. Insbesondere kann eine Mittellinie als Längsachse A1 des Fahrzeugs 1 sein. Beispielsweise können diese Definitionen für die erfindungsgemäß verwendeten Funktionen definiert sein. Beispielsweise sind bei diesen Funktionen Angaben zu Position oder Geschwindigkeit oder sowohl Position als auch zur Geschwindigkeit des Fahrzeugs 1 auf ein solches Zentrum des Fahrzeugs 1 bezogen. Diese Definitionen können für die erfindungsgemäß verwendeten Funktionen einzeln oder in jeder Kombination vorgenommen sein.

Wie auch in der Figur 1 gezeigt ist, weist das Fahrzeug 1 ein Fahrwerk 5, das die Richtung des Fahrzeugs 1 auf einer Betriebsfläche E des Betriebsbereichs B einstellt, und einen an diesem befestigten Fahrzeug-Rahmen 10 auf. Der Fahrzeug-Rahmen 10 weist ein Aufnahmebauteil 7 auf, auf das zumindest eine Ladungseinheit L aufgelegt werden kann. Der Fahrzeug-Rahmen 10 kann auch aus einem Basisteil 8 und dem Aufnahmebauteil 7 gebildet sein, wobei das Aufnahmebauteil 7 an dem Basisteil 8 befestigt ist und insbesondere entgegen der Schwerkraftrichtung oberhalb des Basisteils 8 gelegen sein kann. Weiterhin kann das Aufnahmebauteil 7 eine Aufnahmefläche 9 aufweisen, die entgegen der Schwerkraftrichtung orientiert ist. Eine solche Aufnahmefläche 9 ist zum Auflegen zumindest einer Ladungseinheit L vorgesehen.

Der Fahrzeug-Rahmen 10 kann eine Außenfläche 10a aufweisen, die zumindest abschnittsweise entlang der planaren Erstreckung der Betriebsfläche E orientiert ist. Der Fahrzeug-Rahmen 10 kann aus einer Außenwand mit der Außenfläche 10a gebildet sein oder bestehen. Die Außenwand kann eine umlaufende Außenwand des Fahrzeugs 1 mit der Außenfläche 10a sein, die eine umlaufende Außenwand ausbildet. Auch kann die Außenwand des Fahrzeugs 1 eine abschnittsweise am Fahrzeug 1 ausgebildete Außenwand des Fahrzeugs 1 mit der Außenfläche 10a ausbilden. Auch kann der Fahrzeug-Rahmen 10 aus einem Gitter, einem Gerüst oder einem sich in Umfangsrichtung erstreckenden Balken, jeweils mit der Außenfläche 10a, gebildet sein. Weiterhin kann der Fahrzeug-Rahmen 10 aus Kombinationen jeder der hierzu genannten Alternativen jeweils mit der Außenfläche 10a gebildet sein.

Die Außenfläche 10a des Fahrzeugs 1 bildet somit eine Fahrzeug-Anlagefläche oder weist zumindest eine Fahrzeug-Anlagefläche auf, mit denen das Fahrzeug 1 an der Ladungseinheit-Aufnahmevorrichtung 100 in Kontakt oder Anlage gebracht werden kann. Wie beschrieben kann das Fahrzeug 1 mehrere Fahrzeug-Anlageflächen aufweisen, die zueinander unterschiedlichen Richtungen orientiert sind. Unter dem Begriff "Kontakt" im Zusammenhang mit der Ladungseinheit-Aufnahmevorrichtung 100 wird hierin insbesondere eine Kontaktierung von Fahrzeug 1 und der Ladungseinheit-Aufnahmevorrichtung 100 und/oder ein Anstoßen von Fahrzeug 1 gegen die Ladungseinheit-Aufnahmevorrichtung 100 verstanden, bei der das Fahrzeug 1 bei seiner Bewegung entlang oder auf der Soll-Trajektorie eine Beschleunigung erfährt. Bei der in der Figur 1 dargestellten Ausführungsform des Fahrzeugs 1 weist der Fahrzeug-Rahmen 10 vier Anlageflächen 11, 12, 13, 14 auf. Eine Kontakt- oder Anlagefläche des Fahrzeug-Rahmens 10 kann hierin jede Fläche des Fahrzeugs 1, insbesondere eine Fläche mit einer Orientierung, die entlang der Flächenerstreckung der Betriebsfläche E verläuft, sein.

Das Fahrzeug 1 weist eine am Fahrzeugrahmen 10 angeordnete Antriebsvorrichtung 30 mit mindestens einem Motor und optional zusätzlich einer Bremsvorrichtung auf. Die Antriebsvorrichtung 30 ist mit dem Fahrwerk 5 gekoppelt und treibt das Fahrwerk an, um die Geschwindigkeit und Richtung des Fahrzeugs 1 einzustellen. Insbesondere weist das Fahrwerk 5 eine Mehrzahl von Rädern auf, die jeweils in einer Radaufhängung des Fahrwerks 5 gelagert sind und auf denen das Fahrzeug 1 auf der Betriebsfläche E bewegbar und positionierbar ist. Dabei weist das Fahrwerk 5 zumindest zwei Räder auf. Die Antriebsvorrichtung treibt dabei zumindest ein Rad dieser Räder des Fahrwerks 5 an und ist zu diesem Zweck mit dem jeweiligen des zumindest einen Rades gekoppelt.

Beispielsweise können die Radaufhängungen von jeweils zwei Rädern kardanisch gelagert sein, so dass die jeweils zwei Räder von jeweils einer Lenkvorrichtung des Fahrwerks 5, die mit den Radaufhängungen der zwei Räder gekoppelt ist und mit der Antriebsvorrichtung in Verbindung steht, zusammen jeweils um eine quer zu den Drehachsen verlaufenden Drehachse gedreht werden können. Aufgrund von entsprechenden Stellkommandos, die von der Antriebsvorrichtung erzeugt und an das Fahrwerk 5 des Fahrzeugs 1 übermittelt werden, wird eine vorbestimmte Fahrtrichtung und Geschwindigkeit des Fahrzeugs 1 eingestellt. Insbesondere kann aufgrund von entsprechenden Stellkommandos, die von der Antriebsvorrichtung erzeugt und an das Fahrwerk 5 übermittelt werden, eine vorbestimmte Fahrtrichtung des Fahrzeugs 1 eingestellt werden. Bei diesen Ausführungsformen des Fahrzeugs 1 kann z.B. vorgesehen sein, dass zwei Räder oder zwei Paare von Rädern von insgesamt vier oder mehr als vier Rädern Lenkbewegungen ausführen können. Figur 1 zeigt eine perspektivische Darstellung einer erfindungsgemäßen Ausführungsform des Fahrzeugs, wobei das Fahrzeug ein Fahrwerk mit vier Rädern aufweist, von denen zwei erste Räder, die jeweils in Bezug auf eine Längsachse des Fahrzeugs einander gegenüberliegend angeordnet sind, in ihrer Kombination als Differential-Drehräder ausgebildet sind, und von denen zwei weitere Räder, die in der Längsachse gesehen zwischen den zwei ersten Rädern und jeweils in Bezug auf eine Querachse des Fahrzeugs einander gegenüberliegend angeordnet sind und als Stützräder ausgebildet sind, und Figur 2 eine perspektivische Darstellung einer erfindungsgemäßen Ausführungsform des Fahrzeugs, wobei das Fahrzeug ein Fahrwerk mit vier Rädern aufweist, die als omni-direktionale Räder oder Allseitenrollen ausgebildet sind.

Generell kann das Fahrwerk 5 des Fahrzeugs 1, insbesondere bei einer kardanischen Aufhängung, derart ausgeführt sein, dass zumindest ein Paar von einander gegenüber liegenden Rädern über eine Lenkvorrichtung miteinander gekoppelt sind. Dabei ist die Lenkvorrichtung derart ausgeführt, dass die Räder um ihre Lenkachse drehbar verstellbar sind, um die Fahrrichtung des Fahrzeugs einzustellen. Die Lenkvorrichtung kann mit der Fahrzeug-Antriebsvorrichtung funktional gekoppelt sein.

Bei einer Ausführungsform des Fahrwerks mit omni-direktional funktionsfähigen Räder oder Allseitenrollen kann das Fahrwerk auch ohne Lenkvorrichtung ausgeführt sein. Die omni-direktional funktionsfähigen Räder oder Allseitenrollen können dabei mit der Fahrzeug-Antriebsvorrichtung derart funktional gekoppelt sein, dass durch unterschiedliche Drehzahlen des einzelnen Rades die gemäß den jeweiligen Steuerungs-Sollvorgaben einzustellende Bewegungsrichtung des Fahrzeugs eingestellt wird. Dementsprechend können die Radaufhängungen und Räder des Fahrzeugs 1 auch derart ausgeführt sein, dass die Räder des Fahrzeugs 1 als omni-direktionale Räder des Fahrwerks realisiert sind. Das Fahrzeug 1 in der Ausführungsform mit omni-direktionalen Rädern kann von einer aktuellen Position aus in jede Fahrtrichtung bewegt werden, sofern sich in dieser Hinsicht keine Hindernisse auf der Fahrauflage befinden. Dazu kann das Fahrwerk 5 des Fahrzeugs 1 eine Lenkvorrichtung aufweisen, die mit jeder der Radaufhängungen jeweils eines Rads zur Einstellung der Drehrichtung jedes Rads gekoppelt ist und mit der Antriebsvorrichtung in Verbindung steht. Alternativ dazu kann aufgrund von entsprechenden Stellkommandos, die von der Antriebsvorrichtung erzeugt und an das Fahrwerk 5 des Fahrzeugs 1 übermittelt werden, eine vorbestimmte Fahrtrichtung und Geschwindigkeit des Fahrzeugs 1 eingestellt werden, wobei insbesondere zur Einstellung der Richtung des Fahrzeugs 1 die entsprechenden Stellkommandos an die Lenkvorrichtung übermittelt werden.

Weiterhin weist das Fahrzeug eine Steuerungsfunktion 50 auf, die funktional mit der Antriebsvorrichtung in Verbindung steht und aufgrund von Steuerungs-Sollvorgaben Steuerungskommandos ermittelt und diese an die Antriebsvorrichtung 30 übermittelt. Die Antriebsvorrichtung 30 erzeugt aus den Steuerungskommandos Stellkommandos oder Stellsignale an das Fahrwerk, um die Räder des Fahrzeugs 1 anzutreiben und das Fahrzeug 1 in entsprechender Weise auf der Betriebsfläche zu bewegen und aufgrund eines Fahrzeug-Ist-Zustands des Fahrzeugs 1 einen Fahrzeug-Soll-Zustand des Fahrzeugs 1 auf der Betriebsfläche E einzustellen.

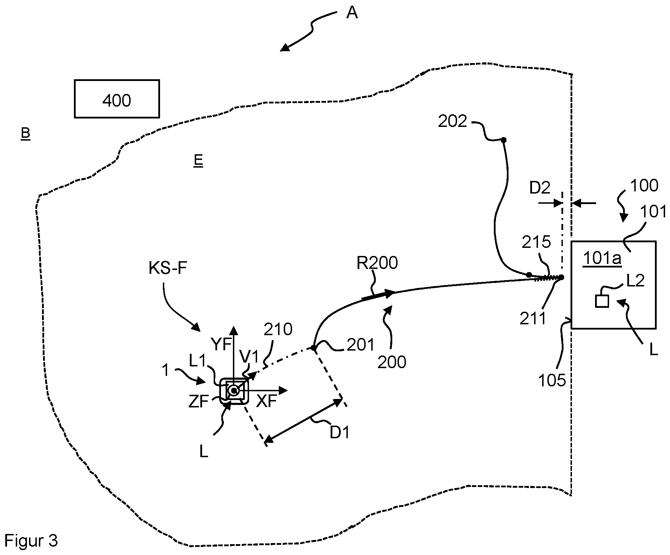

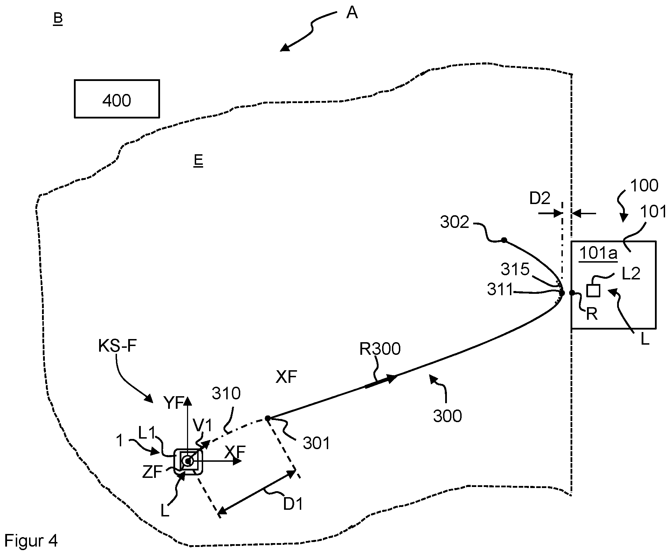

Nach der Erfindung befindet sich in einem Ausgangzustand, der beispielartig in den Figuren 3 und 4 gezeigt ist, zumindest ein Fahrzeug 1 in einem ersten Fahrzeug-Ist-Zustand in einem Abstand zu der Ladungseinheit-Aufnahmevorrichtung 100. Der Ausgangzustand-Abstand kann sich insbesondere aus vorherigen Bewegungen des Fahrzeugs 1 ergeben. Der Ausgangzustand-Abstand kann insbesondere als der Abstand zwischen einem vordefinierten Zentrum ZF des Fahrzeugs 1 und einem vordefinierten Referenzpunkt R oder einer Referenzstelle R der Ladungseinheit-Aufnahmevorrichtung 100 oder an der Ladungseinheit-Aufnahmevorrichtung 100 definiert sein. Die Referenzstelle der Ladungseinheit-Aufnahmevorrichtung 100 kann ein Punkt oder ein Bereich und insbesondere eine beliebige Stelle der Ladungseinheit-Aufnahmevorrichtung 100 oder außerhalb der Ladungseinheit-Aufnahmevorrichtung 100 sein, wobei die Referenzstelle R fix, also unveränderlich, in einem Aufnahmevorrichtungs-festen Koordinatensystem gelegen ist. Die Referenzstelle der Ladungseinheit-Aufnahmevorrichtung 100 kann insbesondere ein Bereich wie z.B. ein Oberflächenbereich oder ein Punkt wie z.B. ein Oberflächenpunkt der Ladungseinheit-Aufnahmevorrichtung 100 oder einer Kontaktoberfläche 105 derselben, deren Orientierung entlang der Erstreckung des Betriebsfläche E verläuft, sein. Der Ausgangzustand-Abstand kann sich jedoch auch auf andere Punkte oder Stellen des Fahrzeugs 1 und der Ladungseinheit-Aufnahmevorrichtung 100 beziehen. Beispielsweise kann der Ausgangzustand-Abstand als der Abstand zwischen der Referenzstelle oder dem Flächenmittelpunkt einer für ein Kontaktieren der Kontaktoberfläche vorgesehenen Außenfläche 10a des Fahrzeugs 1 und dem Flächenmittelpunkt einer für das Andocken vorgesehenen Anlagefläche oder Kontaktoberfläche 105 der Ladungseinheit-Aufnahmevorrichtung 100 definiert sein.

Das Fahrzeug 1 operiert auf der Basis einer Soll-Trajektorie ST, die zwischen einem Anfangspunkt und einem Endpunkt in einer lokal veränderlichen oder lokal unveränderlichen Trajektorienrichtung RST verläuft und die einen Übergabebereich 215 mit einem der Ladungseinheit-Aufnahmevorrichtung zugeordneten Soll-Übergabepunkt aufweist.

In den Figuren 3 und 4 ist beispielartig jeweils eine Soll-Trajektorie ST relativ zu der Ladungseinheit-Aufnahmevorrichtung 100 dargestellt. In der Figur 3 ist der Soll-Trajektorie ST das Bezugszeichen 200 zugeordnet. Die Soll-Trajektorie 200 verläuft zwischen einem Anfangspunkt 201 und einem Endpunkt 202 in einer lokal veränderlichen oder lokal unveränderlichen Trajektorienrichtung R200 und weist einen Übergabebereich 215 mit einem der Ladungseinheit-Aufnahmevorrichtung 100 zugeordneten Soll-Übergabepunkt 211 auf. In der Figur 4 ist der Soll-Trajektorie ST das Bezugszeichen 300 zugeordnet. Die Soll-Trajektorie 300 verläuft zwischen einem Anfangspunkt 301 und einem Endpunkt 302 in einer lokal veränderlichen oder lokal unveränderlichen Trajektorienrichtung R300 und weist einen Übergabebereich 315 mit einem der Ladungseinheit-Aufnahmevorrichtung 100 zugeordneten Soll-Übergabepunkt 311 auf.

Der Referenzpunkt R kann auch mit dem Soll-Übergabepunkt 211 identisch sein. Der Referenzpunkt R ist ein Bezugspunkt vorzugsweise an der Ladungseinheit-Aufnahmevorrichtung 100. Der Referenzpunkt R kann der Zielpunkt für die Übergabe-Bewegung der Ladungseinheit L von dem Fahrzeug 1 zu der Ladungseinheit-Aufnahmevorrichtung 100 sein, d.h. der Referenzpunkt R kann insbesondere der Punkt oder die Stelle oder der Bereich sein, in dessen Nähe oder in deren Nähe die Ladungseinheit L auf die Ladungseinheit-Aufnahmevorrichtung 100 bewegt werden soll. Der Referenzpunkt R kann auch den Zielpunkt oder den Zielbereich definieren, an dem, bei entsprechendem Verlauf der Soll-Trajektorie, zur Erreichung der Übergabe-Bewegung der Ladungseinheit L von dem Fahrzeug 1 zu der Ladungseinheit-Aufnahmevorrichtung 100 das Fahrzeug 1 die Ladungseinheit-Aufnahmevorrichtung 100 kontaktieren soll.

Der Soll-Übergabepunkt 211, 311 ist vorzugsweise derjenige Punkt auf der Soll-Trajektorie, an dem das Fahrzeug 1 eine Beschleunigung erfährt, die bewirkt, dass die auf dem Aufnahmebauteil 7 und insbesondere der Aufnahmefläche 9 aufliegende Ladungseinheit L aufgrund ihrer Massenträgheit von dem Aufnahmebauteil 7 oder der Aufnahmefläche 9 des Fahrzeugs 1 zu dem Referenzpunkt R und insbesondere auf ein Aufnahme-Bauteil 101, das insbesondere eine Aufnahmeoberfläche 101a der Ladungseinheit-Aufnahmevorrichtung 100 aufweist, bewegt wird. Die Aufnahmeoberfläche 101 ist zumindest abschnittsweise entgegen der Schwerkraftrichtung orientiert, so dass eine Ladungseinheit L auf diese insbesondere durch freie Bewegung befördert werden kann.

Der Soll-Übergabepunkt 211 oder 311 liegt in einem Übergabebereich 215 oder 315 der Soll-Trajektorie 200 oder 300, wobei der Übergabebereich 215 oder 315 ein Abschnitt der Soll-Trajektorie 200 oder 300 ist. Dabei kann der Soll-Übergabepunkt 211 oder 311 in einem Bereich innerhalb des Übergabebereichs 215 oder 315 der Soll-Trajektorie 200 oder 300 oder mittig in dem Übergabebereich 215 oder 315 oder an einem Rand des Übergabebereichs 215 oder 315 liegen und dabei insbesondere auch ein Randpunkt des Übergabebereichs 215 oder 315 sein.

Die Übergabebereiche 215, 315 der jeweiligen Soll-Trajektorie 200 oder 300 ist in den Figuren 3 und 4 beispielartig jeweils mit einer gepunkteten Linie schematisch dargestellt. Der Übergabebereich 215, 315 ist von seiner Länge her je nach dem Anwendungsfall festgelegt oder definiert. Die Länge des Übergabebereichs 215, 315 ist dem Betrag nach ausreichend für die Erzeugung einer geforderten Beschleunigung auf das Fahrzeugs 1 im Übergabebereich 215, 315 und insbesondere im Soll-Übergabepunkt 211 oder 311, um die auf dem Aufnahme-Bauteil 7 des Fahrzeugs 1 gelegene Ladungseinheit L durch deren Massenträgheit auf die Ladungseinheit-Aufnahmevorrichtung 100 zu bewegen. Beispielsweise beträgt die Länge des Übergabebereichs 215, 315 dem Betrag nach zumindest 50 % der Länge des Fahrzeugs 1. Alternativ dazu kann die Länge des Übergabebereichs 215, 315 dem Betrag nach zumindest die Länge des Fahrzeugs 1 und speziell zumindest die 1,5fache Länge des Fahrzeugs 1 betragen. In dieser Hinsicht kann die Länge des Fahrzeugs 1 die sich entlang der jeweiligen Soll-Trajektorie 200 oder 300 ergebende Länge des Fahrzeugs 1 oder die kleinste Länge des auf der Betriebsfläche E stehenden Fahrzeugs 1, die sich in der Erstreckungsrichtung des Betriebsfläche E ergibt, sein.

Die Fahrzeug-Bewegungsbahn des Fahrzeugs 1 von dessen jeweiliger aktuellen Fahrzeug-Ist-Position zur Soll-Trajektorie ST ist in den Figuren 3 und 4 jeweils mit einer strichgepunkteten Linie dargestellt, wobei der Fahrzeug-Bewegungsbahn der Figur 3 das Bezugszeichen "210" und der Fahrzeug-Bewegungsbahn der Figur 4 das Bezugszeichen "310" zugeordnet ist. In den dargestellten Beispielen bewegt sich das Fahrzeug 1 nach Erreichen der jeweiligen Soll-Trajektorie 200 oder 300 auf seiner Fahrzeug-Bewegungsbahn weiter entlang dieser jeweiligen Soll-Trajektorie 200 oder 300.

Hierin wird zur Beschreibung und Definition der Soll-Bewegung des Fahrzeugs 1 ein Soll-Geschwindigkeitsvektor und zur Beschreibung und Definition der Ist-Bewegung des Fahrzeugs 1 ein Ist-Geschwindigkeitsvektor V1 verwendet. Auch wird hierin zur Beschreibung und Definition der Soll-Bewegung des Fahrzeugs 1 eine Soll-Geschwindigkeit und eine Soll-Beschleunigung sowie ein Soll-Geschwindigkeitsverlauf zugeordnet.

Der Soll- oder Ist-Geschwindigkeitsvektor hat den Wert Null, wenn die vorgegebene Soll-Geschwindigkeit gleich Null ist bzw. wenn das Fahrzeug 1 bewegungslos auf der Betriebsfläche E steht, und hat einen Betrag ungleich Null, wenn das Fahrzeug 1 in Bewegung ist, wobei die Richtung des Soll- oder Ist-Geschwindigkeitsvektors die vorgegebene bzw. momentane oder jeweils aktuelle Fahrtrichtung des Fahrzeugs 1 angibt. Bei einer Ist-Bewegung des Fahrzeugs 1 mit dem jeweils aktuellen Geschwindigkeitsvektor V1 zur Erfüllung der Übergabe-Missionsaufgabe kann vorgesehen sein, dass sich das Fahrzeug 1 ausgehend von dem jeweils aktuellen Ausgangzustand Z1 insbesondere bereits in diesem Ausgangzustand Z1 oder zu einem anderen Zustand zeitlich vor oder nach dem jeweils aktuellen Ausgangzustand Z1, mittels einer Bahnführungs-Funktion oder Bahnregelungs-Funktion entlang der Soll-Trajektorie ST bewegt. Diese Bahnführungs-Funktion oder Bahnregelungs-Funktion kann definiert sein durch das Ermitteln einer Abweichungs-Relation zwischen dem jeweils aktuellen Fahrzeug-Ist-Zustand, der zumindest mit einer Fahrzeug-Ist-Position definiert ist, jeweils relativ zu der Soll-Trajektorie ST und z.B. zu einem als jeweils aktuell ermittelten oder definierten Punkt der Soll-Trajektorie ST erfolgen. Der als jeweils aktuell definierte Punkt der Soll-Trajektorie ST kann z.B. ein Punkt sein, der in dem geringsten Abstand zu der jeweils aktuellen Fahrzeug-Ist-Position gelegen ist. Statt dem geringsten Abstand kann auch ein anderer Abstand oder eine andere Relation zwischen dem jeweils aktuellen Fahrzeug-Ist-Zustand und dem als jeweils aktuell ermittelten oder definierten Punkt der Soll-Trajektorie ST verwendet werden. Aus der Abweichungs-Relation werden mittels der Bahnführungs-Funktion oder der Bahnregelungs-Funktion Solltrajektorien-Folgekommandos ermittelt. Die Solltrajektorien-Folgekommandos sind Steuerungs-Sollvorgaben, die in Steuerungskommandos umgesetzt werden. Die Steuerungskommandos sind geeignet, die Antriebsvorrichtung 30 in entsprechender Weise gerätetechnisch zu betätigen, um das Fahrzeug 1 auf einer Fahrzeug-Bewegungsbahn entlang der Soll-Trajektorie ST zu bewegen.

Die Solltrajektorien-Folgekommandos können vorgegeben sind. Erfindungsgemäß können die Solltrajektorien-Folgekommandos auch ermittelt werden. Das Ermitteln von Solltrajektorien-Folgekommandos insbesondere aufgrund einer Abweichungs-Relation und die Übermittlung derselben an die Antriebsvorrichtung kann jeweils mittels einer Solltrajektorien-Folgefunktion 60 erfolgen.

Dazu alternativ oder zusätzlich kann vorgesehen sein, dass die Solltrajektorien-Folgefunktion 60 funktionaler Bestandteil einer Bahnregelungs-Funktion und insbesondere funktionaler Bestandteil der Fahrzeug-Steuerungsfunktion 50 des Fahrzeugs 1 oder einer Logistik-Zentralvorrichtung 400 ist. Davon unabhängig kann vorgesehen sein, dass die Lastabgabe-Steuerungsfunktion 70 funktionaler Bestandteil der Fahrzeug-Steuerungsfunktion 50 des Fahrzeugs 1 oder einer Logistik-Zentralvorrichtung 400 ist.

Die Fahrzeug-Steuerungsfunktion 50 kann funktionaler Bestandteil eines im Fahrzeug 1 funktional integrierten Fahrzeugsystems S sein, d.h., dass die Fahrzeug-Steuerungsfunktion 50 funktional mit der Antriebsvorrichtung 30 in Verbindung steht und aufgrund von Steuerungs-Sollvorgaben Steuerungskommandos ermittelt und diese an die Antriebsvorrichtung 30 übermittelt, um einen jeweils aktuellen Ist-Geschwindigkeitsvektor des Fahrzeugs 1 einzustellen. In der Solltrajektorien-Folgefunktion 60 kann insbesondere ein Algorithmus abgespeichert sein, der die Solltrajektorien-Folgefunktion definiert und der die Solltrajektorien-Folgekommandos der Fahrzeug-Steuerungsfunktion 50 bereitstellt. Optional kann vorgesehen sein, dass die Fahrzeug-Steuerungsfunktion 50 aufgrund einer Aktivierung der Solltrajektorien-Folgefunktion 60 Geschwindigkeits-Kommandos verwendet oder ermittelt und als Steuerungskommandos an die Antriebsvorrichtung 30 übermittelt.

Weiterhin kann die Fahrzeug-Steuerungsfunktion 50 eine Lastabgabe-Steuerungsfunktion 70 aufweisen, die aufgrund zumindest eines Übergabebereichs 215, 315 der Soll-Trajektorie ST, 200, 300 einen ermittelten oder vorgegebenen Soll-Geschwindigkeitsverlauf mit konstanter oder veränderlicher Geschwindigkeit und optional einen ermittelten oder vorgegebenen Soll-Beschleunigungsverlauf für das Fahrzeug 1 als Steuerungs-Sollvorgaben verwendet oder ermittelt und als Steuerungskommandos an die Antriebsvorrichtung 30 übermittelt.

Generell kann vorgesehen sein, dass die Steuerungs-Sollvorgaben zu jedem relevanten Zeitpunkt und insbesondere jedem Berechnungszeitpunkt des Fahrzeugsystems S in Beziehung zu dem Ist-Zustand des Fahrzeugs 1 des jeweiligen Zeitpunkts gesetzt und optional verglichen werden und daraus Steuerungskommandos für die Antriebsvorrichtung 30 ermittelt werden. Die Steuerungskommandos werden derart ermittelt, dass sich der Ist-Zustand des Fahrzeugs 1 des jeweiligen Zeitpunkts in den für den jeweiligen Zeitpunkt relevanten Soll-Zustand ändert. Die Ermittlung der Steuerungskommandos für den jeweiligen Zeitpunkt kann insbesondere mit einem Regelungsverfahren oder einem Schätzverfahren erfolgen. Aufgrund der Steuerungskommandos stellt die Antriebsvorrichtung 30 eine Übergabe-Geschwindigkeit des Fahrzeugs 1 im Übergabebereich 215, 315 oder entlang des Übergabebereich 215, 315 und optional eine Soll-Beschleunigung des Fahrzeugs 1 in dem Soll-Übergabepunkt 211 ein, so dass die auf dem Aufnahme-Bauteil 7 des Fahrzeugs gelegene Ladungseinheit L durch deren Massenträgheit auf die Ladungseinheit-Aufnahmevorrichtung 100 bewegt wird.

In der Fahrzeug-Steuerungsfunktion 50 kann insbesondere ein Algorithmus abgespeichert sein, der die Solltrajektorien-Folgefunktion 60 definiert und die Solltrajektorien-Folgekommandos ermittelt. Unabhängig davon kann vorgesehen sein, dass in der Fahrzeug-Steuerungsfunktion 50 insbesondere ein Algorithmus abgespeichert ist, der die Lastabgabe-Steuerungsfunktion 70 definiert und für das Fahrzeug 1 den Soll-Geschwindigkeitsverlauf entlang des Übergabebereichs 215, 315 und optional einen Soll-Beschleunigungsverlauf entlang des Übergabebereichs 215, 315 und optional eine Soll-Beschleunigung in dem Soll-Übergabepunkt 211, 311 ermittelt.

Das in den Figuren 3 und 4 schematisch dargestellte Fahrzeug 1 befindet sich, z.B. beim Start des erfindungsgemäßen Verfahrens, in dem in den Figuren 3 und 4 jeweils gezeigten Ausgangszustand und nimmt einen Fahrzeug-Ist-Zustand, zu dem zumindest eine aktuelle Fahrzeug-Ist-Position und optional eine Fahrzeug-Ist-Geschwindigkeit gehört, ein, bei dem das Fahrzeug 1, oder das Zentrum ZF des Fahrzeugs 1, in einem Ausgangzustand-Abstand D1 zu dem Anfangspunkt 201, 301 gelegen ist.

Erfindungsgemäß sind für das Fahrzeug 1 Steuerungs-Sollvorgaben vorgesehen, bei denen in dem Soll-Übergabepunkt 211, 311 oder zumindest einem sich bis zu dem Soll-Übergabepunkt 211, 311 erstreckenden Abschnitt des Übergabebereichs 215, 315 bei einer bestimmten Form des Übergabebereichs 215, 315 sich eine Übergabe-Beschleunigung des Fahrzeugs 1 und optional eine Übergabe-Seitenbeschleunigung und/oder eine negative Übergabe-Längsbeschleunigung ergibt. Die Soll-Trajektorie ST kann bei den erfindungsgemäßen Ausführungsformen einen Verlauf haben, bei dem der Soll-Übergabepunkt 211, 311 eine Position relativ zu der Ladungseinheit-Aufnahmevorrichtung 100 oder zu einer Kontaktoberfläche 105 der Ladungseinheit-Aufnahmevorrichtung 100 hat, die kein oder ein mehr oder weniger kräftiges Kontaktieren oder Anstoßen oder Anschlagen des Fahrzeugs 1 an der Ladungseinheit-Aufnahmevorrichtung 100 oder deren Kontaktoberfläche 105 bewirkt, wobei in dem Soll-Übergabepunkt 211, 311 ein vorgegebener oder ermittelter Soll-Geschwindigkeitsvektor oder eine vorgegebene oder ermittelte Soll-Geschwindigkeit und je nach der Form der Soll-Trajektorie ST optional zusätzlich eine vorgegebene oder ermittelte Soll-Beschleunigung des Fahrzeugs 1 und insbesondere negative Soll-Beschleunigung vorgesehen ist, um eine Übergabe-Beschleunigung des Fahrzeugs 1, also eine Ist-Übergabe-Beschleunigung, mit einer oder mehreren der folgenden Beschleunigungsvorgaben (b1), (b2), (b3) zu erreichen:

| | |
|---|---|
| (b1) | eine Übergabe-Seitenbeschleunigung, |
| (b2) | eine negative Übergabe-Längsbeschleunigung mit einer Verringerung der Fahrzeug-Ist-Geschwindigkeit, |
| (b3) | eine Kombination von Übergabe-Seitenbeschleunigung und negativer Übergabe-Längsbeschleunigung. |

Die Übergabe-Beschleunigung ist diejenige Beschleunigung des Fahrzeugs 1, die aufgrund von Steuerungskommandos oder aufgrund einer Kontaktierung der Ladungseinheit-Aufnahmevorrichtung 100 oder aufgrund sowohl von Steuerungskommandos als auch einer solchen Kontaktierung bewirkt wird. Dabei kann die Übergabe-Beschleunigung bei einer entsprechenden Form des Übergabebereichs 215, 315 der Soll-Trajektorie ST, 200, 300 auch ohne Kontaktierung der Ladungseinheit-Aufnahmevorrichtung 100 dafür ausreichen, dass die Ladungseinheit L aufgrund ihrer Trägheit auf die Ladungseinheit-Aufnahmevorrichtung 100 bewegt wird

Hierin wird unter "negativer Übergabe-Längsbeschleunigung" eine negative Beschleunigung des Fahrzeugs 1, also eine Verringerung der Geschwindigkeit des Fahrzeugs 1 verstanden, die zumindest in einem sich bis zu dem Soll-Übergabepunkt 211 erstreckenden Abschnitt auf das Fahrzeug 1 ausgeübt wird. Die negative Übergabe-Längsbeschleunigung kann teilweise oder ganz durch eine von der Antriebsvorrichtung 30 kommandierte Bremsbeschleunigung des Fahrzeugs 1 und somit oder bei einem entsprechend kommandierten Geschwindigkeitsverlauf des Fahrzeugs 1 bewirkt werden. Dazu alternativ oder zusätzlich kann die negative Übergabe-Längsbeschleunigung bei einer jeweiligen Form des Übergabebereichs 215, 315 teilweise oder ganz durch ein Anstoßen des Fahrzeugs 1 an die Ladungseinheit-Aufnahmevorrichtung 100 bewirkt werden.

Erfindungsgemäß ist insbesondere vorgesehen, dass durch die Kombination folgender Maßnahmen eine Übergabe-Beschleunigung des Fahrzeugs 1 erreicht wird, die erforderlich ist, um die auf dem Aufnahme-Bauteil des Fahrzeugs 1 gelegene Ladungseinheit L durch deren Massenträgheit auf die Ladungseinheit-Aufnahmevorrichtung 100 zu bewegen:

| | |
|---|---|
| (M1) | eine spezifische Gestalt oder Form des Übergabebereichs 215, 315, optional mit einer definierten Lage des Übergabepunkts 211, 311 relativ zu der Ladungseinheit-Aufnahmevorrichtung 100 und insbesondere zu der Kontaktoberfläche 105 |
| (M2) | ein mittels Geschwindigkeits-Kommandos als Steuerungskommandos an die Antriebsvorrichtung 30 kommandierter Geschwindigkeitsverlauf, insbesondere bei dem die Geschwindigkeit zumindest in einem sich bis zu dem Soll-Übergabepunkt 211, 311 erstreckenden Abschnitt des Übergabebereichs 215 oder 315 konstant ist oder insbesondere bei der zumindest in diesem Abschnitt eine Verringerung der Geschwindigkeit eingestellt ist. |

Die jeweilige Beschleunigungsvorgabe für die Beschleunigung, die das Fahrzeug 1 im Übergabebereich 215, 315 oder im Soll-Übergabepunkt 211, 311 haben soll, ist derart bemessen, dass die Ladungseinheit L durch ihre Massenträgheit von dem Aufnahmebauteil 7 auf die Ladungseinheit-Aufnahmevorrichtung 100 bewegt wird. Der Zustand der Ladungseinheit L auf dem Fahrzeug 1 ist in den Figuren 3 und 4 mit dem Bezugszeichen "L1" bezeichnet, während der Zustand der Ladungseinheit L auf der Ladungseinheit-Aufnahmevorrichtung 100 in den Figuren 3 und 4 mit dem Bezugszeichen "L2" bezeichnet.

Die Soll-Trajektorie 200 gemäß Figur 3 hat einen Verlauf, bei dem der zwischen dem Anfangspunkt 201 und dem Endpunkt 202 verlaufende Übergabebereich 215 einen ersten Abschnitt 216 und einen zweiten Abschnitt 217 aufweist, die zumindest abschnittsweise entlang zueinander verlaufen und in Bezug auf die Bewegungsrichtung des Fahrzeugs 1 in zueinander entgegen gesetzten Richtungen verlaufen. Basierend auf der Soll-Bewegungsrichtung R200 des Fahrzeugs 1 verläuft der erste Abschnitt 216 hin zu dem Soll-Übergabepunkt 211 und bis zu diesem Soll-Übergabepunkt 211, also den Soll-Übergabepunkt 211 einschließend, und in Richtung zur Ladungseinheit-Aufnahmevorrichtung 100, während der zweite Abschnitt 217 in der Soll-Bewegungsrichtung R200 von dem Soll-Übergabepunkt 211 weg verläuft. Dadurch erfolgt bei einem als Steuerungs-Sollvorgaben definierten Soll-Geschwindigkeitsverlauf in dem Soll-Übergabepunkt 211 eine Bewegungsumkehr des Fahrzeugs 1, so dass der Soll-Übergabepunkt 211 ein Bewegungsumkehr-Punkt ist, in dem der Geschwindigkeitsvektor dem Betrag nach gleich Null ist. Die Bewegungsumkehr kann nach einer der folgenden Alternativen (BU1), (BU2), (BU3) erfolgen:

| | |
|---|---|
| (BU1) | Das Fahrzeug 1 bewegt sich auf der Soll-Trajektorie 200 oder entlang der Soll-Trajektorie 200 in seiner jeweils aktuellen Fahrtrichtung R200 in Richtung zu dem Übergabebereich 215, wobei die kommandierte Soll-Geschwindigkeit bis zum Soll-Übergabepunkt 211, also zumindest bis kurz vor dem Soll-Übergabepunkt 211, dem Betrag nach ungleich Null ist und dafür ausreichend ist, dass durch das Stoßen des Fahrzeugs 1 gegen die Ladungseinheit-Aufnahmevorrichtung 100 und insbesondere die Kontaktoberfläche 105 eine Bremsbeschleunigung ausgeübt wird, die gleich oder größer der negativen Übergabe-Längsbeschleunigung ist, wobei direkt vor dem Soll-Übergabepunkt 211, also in dem ersten Abschnitt 216 die Antriebsvorrichtung 30 des Fahrzeugs 1 keine Bremsbeschleunigung als Beitrag zur negativen Übergabe-Längsbeschleunigung realisiert oder ausübt, d.h. kein Bremsen des Fahrzeugs 1 vornimmt. Die Bremsbeschleunigung des Fahrzeugs 1 durch das Stoßen des Fahrzeugs 1 gegen die Ladungseinheit-Aufnahmevorrichtung 100 kann gegebenenfalls zusätzlich mit einem Rückstoß-Impuls kombiniert sein, so dass das Fahrzeug 1 dadurch eine Bewegungsumkehr ausführt. Davon unabhängig kann vorgesehen sein, dass Steuerungskommandos an die Antriebsvorrichtung 30 übermittelt werden, durch die sich das Fahrzeug 1 in dem zweiten Abschnitt 217 von der Ladungseinheit-Aufnahmevorrichtung 100 zum Endpunkt 202 hin entfernt. |
| (BU2) | Das Fahrzeug 1 bewegt sich auf der Soll-Trajektorie 200 oder entlang der Soll-Trajektorie 200 in seiner jeweils aktuellen Fahrtrichtung R200 in Richtung zu dem Übergabebereich 215, wobei die kommandierte Soll-Geschwindigkeit bis zum Soll-Übergabepunkt 211, also zumindest bis kurz vor dem Soll-Übergabepunkt 211, dem Betrag nach ungleich Null ist und zusätzlich direkt vor dem Soll-Übergabepunkt 211, also in dem ersten Abschnitt 216, die Antriebsvorrichtung 30 des Fahrzeugs 1 eine kommandierte Bremsbeschleunigung auf das Fahrzeug 1 ausübt, bis das Fahrzeug 1 mit einer Geschwindigkeit ungleich Null gegen die Ladungseinheit-Aufnahmevorrichtung 100 und insbesondere die Kontaktoberfläche 105 stößt, so dass durch die Bremsbeschleunigung zusammen eine negative Übergabe-Längsbeschleunigung auf das Fahrzeug 1 ausgeübt wird. Die Bremsbeschleunigung des Fahrzeugs 1 kann durch das Stoßen des Fahrzeugs 1 gegen die Ladungseinheit-Aufnahmevorrichtung 100 gegebenenfalls zusätzlich mit einem Rückstoß-Impuls kombiniert sein, so dass das Fahrzeug 1 dadurch eine Bewegungsumkehr ausführt. Davon unabhängig kann vorgesehen sein, dass Steuerungskommandos an die Antriebsvorrichtung 30 übermittelt werden, durch die sich das Fahrzeug 1 in dem zweiten Abschnitt 217 von der Ladungseinheit-Aufnahmevorrichtung 100 zum Endpunkt 202 hin entfernt. |
| (BU3) | Das Fahrzeug 1 bewegt sich auf der Soll-Trajektorie 200 oder entlang der Soll-Trajektorie 200 in seiner jeweils aktuellen Fahrtrichtung R200 in Richtung zu dem Übergabebereich 215 und erfährt dabei eine Bremsbeschleunigung oder negative Übergabe-Längsbeschleunigung derart, dass die kommandierte Soll-Geschwindigkeit bis zum Soll-Übergabepunkt 211, dem Betrag nach gleich Null ist. Dabei kann vorgesehen sein, dass in dem Soll-Übergabepunkt 211 ein Kontakt oder kein Kontakt zwischen dem Fahrzeug 1 und der Ladungseinheit-Aufnahmevorrichtung 100 und insbesondere der Kontaktoberfläche 105 erfolgt und somit kein Rückstoß-Impuls auf das Fahrzeug 1 ausgeübt wird. Die auftretende Bremsbeschleunigung ist somit gleich oder größer der negativen Übergabe-Längsbeschleunigung zur Übergabe der Ladungseinheit L an die Ladungseinheit-Aufnahmevorrichtung 100. Die Bewegungsumkehr des Fahrzeugs 1 erfolgt dadurch, dass Steuerungskommandos an die Antriebsvorrichtung 30 übermittelt werden, durch die sich das Fahrzeug 1 in dem zweiten Abschnitt 217 von der Ladungseinheit-Aufnahmevorrichtung 100 zum Endpunkt 202 hin entfernt. |

Bei den Bewegungsumkehr-Alternativen (BU1) und (BU2) beinhalten die an die Antriebsvorrichtung 30 des Fahrzeugs 1 übermittelten Geschwindigkeits-Kommandos Kommandos zur Erzeugung einer negativen Übergabe-Längsbeschleunigung, also einer Brems-Beschleunigung auf das Fahrzeug 1 durch die Antriebsvorrichtung 30. Die Geschwindigkeits-Kommandos zur Realisierung eines Soll-Geschwindigkeitsverlaufs werden insbesondere in der Lastabgabe-Steuerungsfunktion 70 als Steuerungs-Sollvorgaben verwendet oder ermittelt und als Steuerungskommandos an die Antriebsvorrichtung 30 übermittelt.

Bei dem Übergabebereich 215 kann der Winkel, der zwischen den Tangenten an die beiden Abschnitte 216, 217 des Übergabebereichs 215 in dem Soll-Übergabepunkt 211 gelegen ist, ein spitzer oder ein stumpfer Winkel sein. Der zu dem Soll-Übergabepunkt 211 hinführende Abschnitt des Übergabebereichs 215 kann dabei in dem Soll-Übergabepunkt eine Richtung haben, die in einem Winkelbereich relativ zu der Erstreckung der Kontaktoberfläche 105 der Ladungseinheit-Aufnahmevorrichtung 100 gelegen ist, der betragsmäßig größer als 25 Grad ist.

Das Fahrzeug 1 steuert von dessen Ausgangzustand als eine erste Fahrzeug-Ist-Position entlang der Soll-Trajektorie 200 zu dem Soll-Übergabepunkt 211, in dem das entlang der Soll-Trajektorie 200 oder auf der Soll-Trajektorie 200 fahrende Fahrzeug 1 eine Bewegungsrichtungs-Umkehr ausführt. Wie beschrieben kann die Bewegungsrichtungs-Umkehr bei einem durch Steuerungs-Sollvorgaben definierten Soll-Geschwindigkeitsverlauf mit der erforderlichen Übergabe-Beschleunigung ausschließlich oder teilweise durch ein Anstoßen oder einen Aufprall des Fahrzeugs 1 an der Ladungseinheit-Aufnahmevorrichtung 100 bewirkt werden, jedoch kann der durch Steuerungs-Sollvorgaben definierten Soll-Geschwindigkeitsverlauf auch derart gestaltet sein, dass die Bewegungsrichtungs-Umkehr ohne eine Kontaktierung oder ein Anstoßen des Fahrzeugs 1 mit der Kontaktoberfläche 105 erfolgt.

Der Anteil der negativen Übergabe-Längsbeschleunigung bei einem Stoßen des Fahrzeugs 1 gegen die Ladungseinheit-Aufnahmevorrichtung 100 oder einem Aufprall des Fahrzeugs 1 an der Ladungseinheit-Aufnahmevorrichtung 100 wird durch die Kombination aus dem durch Steuerungs-Sollvorgaben definierten Soll-Geschwindigkeitsverlauf und der Definition der Position des Übergabepunkts 211 relativ zu der Ladungseinheit-Aufnahmevorrichtung 100 und somit durch einen Abstand D2 zwischen dem Übergabepunkts 211 und der Ladungseinheit-Aufnahmevorrichtung 100 oder der Kontaktoberfläche 105 bestimmt. Dadurch ist die Stärke des auf das Fahrzeug 1 ausgeübten Impulses durch Stoßen des Fahrzeugs 1 gegen die Ladungseinheit-Aufnahmevorrichtung 100 und somit das Maß der Übergabe-Beschleunigung einstellbar.

Wie die Soll-Trajektorie ST der Figur 4 zeigt, kann der Übergabebereich 315 gekrümmt verlaufen, wobei die Ladungseinheit-Aufnahmevorrichtung 100 auf der konvexen Seite der Soll-Trajektorie ST gelegen ist. Zusätzlich kann dabei der z.B. mittig in diesem gelegene Soll-Übergabepunkt 311 in einem Abstand D2 von der Ladungseinheit-Aufnahmevorrichtung 100 auf der Seite der Betriebsfläche E gelegen sein. Dieser Abstand D2 kann derart bemessen sein, dass bei der Bewegung des Fahrzeugs 1 auf der Soll-Trajektorie 300 an der Ladungseinheit-Aufnahmevorrichtung 100 vorbei bis zum Endpunkt 302 kein Kontakt zwischen Fahrzeug 1 und der Ladungseinheit-Aufnahmevorrichtung 100 erfolgt. In diesem Fall wirkt auf das Fahrzeug 1 eine geforderte Übergabe-Seitenbeschleunigung im Soll-Übergabepunkt 311 beim Bewegen des Fahrzeugs 1 entlang des Übergabebereichs 315, die bei zumindest einem als Steuerungs-Sollvorgabe definierten Soll-Geschwindigkeitsverlauf und durch entsprechend aus einem Soll-Geschwindigkeitsvektor ermittelten Steuerungskommandos im Soll-Übergabepunkt 311 oder Übergabebereich 315 erreicht wird. Durch das Erreichen der geforderten Übergabe-Beschleunigung wird die Bewegung der Ladungseinheit L durch ihre Massenträgheit von dem Aufnahmebauteil 7 auf die Ladungseinheit-Aufnahmevorrichtung 100 bewirkt. Dabei kann insbesondere der Soll-Geschwindigkeitsverlauf in dem Übergabebereich 315 oder einem Abschnitt des Übergabebereichs 315 mit dem Soll-Übergabepunkt 311 eine konstante Fahrzeug-Geschwindigkeit, jedoch auch eine Verringerung der Fahrzeug-Geschwindigkeit entlang zumindest eines Abschnitts der Trajektorie, also eine Fahrzeug-Bremsung, oder eine Vergrößerung der Fahrzeug-Geschwindigkeit entlang zumindest eines Abschnitts der Trajektorie, also eine Fahrzeug-Beschleunigung, aufweisen.

Wenn bei einem Verlauf der Soll-Trajektorie 200 mit einem gekrümmt geformten Übergabebereich 315, bei dem die Ladungseinheit-Aufnahmevorrichtung 100 auf der konvexen Seite der Soll-Trajektorie ST gelegen ist, und der Abstand zwischen dem Soll-Übergabepunkt 311 und der Ladungseinheit-Aufnahmevorrichtung 100 geringer ist als der Abstand D2, bei dem kein Kontakt zwischen Fahrzeug 1 und der Ladungseinheit-Aufnahmevorrichtung 100 erfolgt, und der Soll-Übergabepunkt 311 ausreichend nahe an der Ladungseinheit-Aufnahmevorrichtung 100 gelegen ist, erfährt das Fahrzeug 1, das sich im Soll-Übergabepunkt 311 mit dem kommandierten Soll-Geschwindigkeitsvektor oder der kommandierten Soll-Geschwindigkeit bewegt,
(i) eine erste Komponente der Übergabe-Beschleunigung und insbesondere der Übergabe-Seitenbeschleunigung durch die Bewegung entlang des gekrümmt geformten Übergabebereichs 315 der Soll-Trajektorie 200 in dem Übergabebereich 315 und
(ii) eine zweite Komponente der Übergabe-Beschleunigung und insbesondere der Übergabe-Seitenbeschleunigung durch Kontaktierung des Fahrzeugs 1 mit der Ladungseinheit-Aufnahmevorrichtung 100 oder einer Kontaktoberfläche 105 derselben, die der Betriebsfläche E zugewandt gelegen ist.

Je geringer dabei der Abstand D2 ist, um größer ist die zweite Komponente der Übergabe-Beschleunigung und insbesondere der Übergabe-Seitenbeschleunigung bei der Bewegung des Fahrzeugs 1 im Übergabebereich 315 entlang der Ladungseinheit-Aufnahmevorrichtung 100.

Nach der Erfindung kann, in Kombination mit ansonsten jeder hierin beschriebenen oder enthaltenen Variante oder Ausführungsform des Fahrzeugs, des Logistiksystems oder des Verfahrens vorgesehen sein, dass die Soll-Trajektorie ST und/oder der Übergabebereich und insbesondere die Form des Übergabebereichs jeweils mit der Lage des Übergabepunkts 211, 311 relativ zu der Ladungseinheit-Aufnahmevorrichtung 100 oder der Abstand zwischen dem Übergabepunkt 211, 311 und der Ladungseinheit-Aufnahmevorrichtung 100, vorgegeben sind. Alternativ dazu kann erfindungsgemäß vorgesehen sein, dass die Soll-Trajektorie ST und/oder der Übergabebereich und insbesondere die Form des Übergabebereichs in einer Solltrajektorien-Ermittlungsfunktion ermittelt wird, wobei die Solltrajektorien-Ermittlungsfunktion in einem Fahrzeugsystem S oder einer im Betriebsbereich stationär angeordneten Logistik-Zentralvorrichtung 400 implementiert sein kann. Die in der Solltrajektorien-Ermittlungsfunktion ermittelte Soll-Trajektorie ST kann insbesondere einen Anfangspunkt 301, einen Endpunkt 302 und einen Soll-Übergabepunkt 311 aufweisen und mit einem zwischen diesen gelegenen Übergabebereich 315 insbesondere mit einem einheitlich gekrümmten Verlauf geformt sein, wobei die Ladungseinheit-Aufnahmevorrichtung 100 auf der konvexen Seite der Krümmung des Übergabebereichs 315 gelegen ist. Die Solltrajektorien-Ermittlungsfunktion kann derart ausgeführt sein, dass der Abstand D2 zwischen dem Soll-Übergabepunkt 311 und der Ladungseinheit-Aufnahmevorrichtung 100 einen vorbestimmten oder ermittelten Betrag hat.

Dadurch kann durch Ermittlung einer geeigneten Soll-Trajektorie ST und/oder des Übergabebereichs und insbesondere der Form des Übergabebereichs mit dem beschriebenen Verlauf eine geforderte Übergabe-Beschleunigung und insbesondere Übergabe-Seitenbeschleunigung erreicht werden, die sich durch die erste Komponente (i) der Übergabe-Beschleunigung und insbesondere Übergabe-Seitenbeschleunigung und optional zusätzlich die zweite Komponente (ii) der Übergabe-Beschleunigung und insbesondere Übergabe-Seitenbeschleunigung des Fahrzeugs 1 ergibt.

Zur Ermittlung der Soll-Trajektorie ST kann vorgesehen sein, dass die Solltrajektorien-Ermittlungsfunktion eine vorgegebene und z.B. abgespeicherte Trajektorienform der Soll-Trajektorie ST oder einen Solltrajektorien-Verlauf und/oder den Übergabebereich und insbesondere eine Form des Übergabebereichs enthält oder funktional in Bezug nehmen kann. Die zumindest eine Trajektorienform oder die Form des Übergabebereichs kann insbesondere durch eine mathematische Funktion definiert sein, die z.B. mit Koordinatenachsen eines Koordinatensystems beschrieben ist, wobei die Koordinatenachsen derart angeordnet sein können, dass diese die Betriebsfläche E oder deren wesentliche Erstreckung aufspannen. Die zumindest eine Trajektorienform oder die Form des Übergabebereichs kann insbesondere als Parabelfunktion oder als Spline-Funktion oder als eine andere vorgegebene Funktion in der Solltrajektorien-Ermittlungsfunktion oder in einer dieser zugeordneten Funktion abgespeichert sein. Dabei kann in der Solltrajektorien-Ermittlungsfunktion zusätzlich vorgesehen sein, dass eine als Funktion vorgegebene Trajektorienform mit zumindest einem Parameter definiert ist, so dass dieser zumindest eine Parameter jeweils einem konkreten Wert gleichgesetzt werden kann, um die jeweilige Trajektorienform oder die Form des Übergabebereichs als konkrete Funktion zu definieren oder diese jeweilige Funktion zu variieren, um die geeignete Trajektorienform oder die Form des Übergabebereichs zu ermitteln.

Zusätzlich kann die Solltrajektorien-Ermittlungsfunktion eine Anpassungsfunktion aufweisen, die den zumindest einen Parameter variiert, so dass durch Variation oder Einstellung des zumindest einen Parameters der vorgegebenen Trajektorienform oder der Form des Übergabebereichs, durch den die konkrete Soll-Trajektorie ST oder der konkrete Übergabebereich definiert wird, eine geeignete konkrete Soll-Trajektorie ST oder geeignete Form des Übergabebereichs ermittelt wird, mit der in Kombination mit einem vorgegebenen oder ermittelten Soll-Geschwindigkeitsverlauf mit einer Soll-Geschwindigkeit und/oder einer Soll-Beschleunigung in dem Soll-Übergabepunkt 211, 311 eine geforderte Übergabe-Beschleunigung optional mit einer oder mehreren der Beschleunigungsvorgaben (b1), (b2), (b3) für das Fahrzeug 1 erreicht werden. Dabei kann auch vorgesehen sein, dass mehrere Trajektorienformen oder mehrere Formen des Übergabebereichs z.B. in der Solltrajektorien-Ermittlungsfunktion vorgegeben sind und die Anpassungsfunktion der Solltrajektorien-Ermittlungsfunktion die beschriebene Anpassung durch Parameter-Variation an mehreren Trajektorienformen oder Formen des Übergabebereichs vornimmt.

Alternativ oder zusätzlich kann vorgesehen sein, dass die Solltrajektorien-Ermittlungsfunktion mehrere konkrete, also ohne Parameter definierte Solltrajektorien-Verläufe z.B. jeweils als eine vorgegebene Funktion, abgespeichert hat und bei der Ermittlung der Soll-Trajektorie ST einen der konkreten Solltrajektorien-Verläufe auswählt. Dabei kann die Solltrajektorien-Ermittlungsfunktion eine Auswahlfunktion aufweisen, mit der aus den auswählbaren Solltrajektorien-Verläufen ein Solltrajektorien-Verlauf als Basis für die Ermittlung der Steuerungskommandos ausgewählt wird, mit dem die Übergabe-Beschleunigung auf das Fahrzeug 1 bei einem durch Steuerungs-Sollvorgaben definierten Soll-Geschwindigkeitsverlauf im Übergabebereich und/oder ein Soll-Beschleunigung im Soll-Übergabepunkt erreicht oder überschritten wird.

Bei den erfindungsgemäßen Ausführungsformen mit einer Anpassungsfunktion der Solltrajektorien-Ermittlungsfunktion und bei erfindungsgemäßen Ausführungsformen mit einer Auswahlfunktion der Solltrajektorien-Ermittlungsfunktion kann zusätzlich eine Variation von Soll-Geschwindigkeitsverläufen im Übergabebereich oder gegebenenfalls eine Soll-Beschleunigung im Soll-Übergabepunkt vorgenommen und ein Wert für die zu erzielende Übergabe-Beschleunigung als Vergleichswert oder Schwellwert oder Mindestwert verwendet werden. Dabei kann vorgesehen sein, dass derjenige Soll-Geschwindigkeitsverlauf oder gegebenenfalls diejenige Soll-Beschleunigung ausgewählt oder bestimmt wird, bei dem oder bei der der Vergleichswert oder Schwellwert oder Mindestwert an geringsten gegenüber anderen Parameterwerten überschritten wird.

Die Ermittlung, ob ein Vergleichswert oder Schwellwert oder Mindestwert für den Soll-Geschwindigkeitsverlauf im Übergabebereich und/oder eine Soll-Beschleunigung im Soll-Übergabepunkt erreicht wird, kann hierin generell dadurch erfolgen, dass auf der Basis der festgelegten Bestimmungsgrößen, wie z.B. der ausgewählte Soll-Trajektorie und/oder eines Soll-Geschwindigkeitsverlaufs entlang der Soll-Trajektorie oder des Übergangsbereichs, eine Simulationsrechnung in Bezug auf die eine dabei auftretende theoretische Übergabe-Beschleunigung, gegebenenfalls für eine oder mehrere der vorgenannten Komponenten (i), (ii), durchgeführt und diese theoretische Übergabe-Beschleunigung mit dem jeweiligen Vergleichswert oder Schwellwert oder Mindestwert verglichen wird. Wenn der Vergleichswert oder Schwellwert oder Mindestwert von dem jeweils ermittelten Wert der theoretischen Übergabe-Beschleunigung überschritten wird, kann auf Basis der festgelegten Bestimmungsgrößen diejenige Auswahl oder Anpassung, die zum Erreichen des Vergleichswerts geführt hat, als zu verwendende Auswahl oder Anpassung identifiziert werden.

Die hierin genannten Variationen von Parametern oder Funktionen oder Verläufen können nach einer vorgegebenen Reihenfolge oder nach einer statistischen Wahrscheinlichkeit oder auf andere Weise erfolgen.

Alternativ oder zusätzlich zu den vorgenannten Ausführungsformen der Solltrajektorien-Ermittlungsfunktion kann die Ermittlung des Solltrajektorien-Verlaufs durch Anpassung einer vorgegebenen Form des Solltrajektorien-Verlaufs oder durch Auswahl eines Solltrajektorien-Verlaufs optional mit Anpassung derart vorgesehen sein, dass die Solltrajektorien-Ermittlungsfunktion zumindest ein Trajektorienverlaufs-Kriterium anwendet. Dabei kann vorgesehen sein, dass die Solltrajektorien-Ermittlungsfunktion als Trajektorienverlaufs-Kriterium, insbesondere bei einem als Steuerungs-Sollvorgabe definierten Soll-Geschwindigkeitsverlauf im Übergabebereich und/oder bei einer als Steuerungs-Sollvorgabe definierten Soll-Beschleunigung im Soll-Übergabepunkt des Fahrzeugs, eines oder mehrere der folgenden Trajektorienverlaufs-Kriterien (TK1), (TK2), (TK3), (TK4) verwendet, um die zu erreichende Übergabe-Beschleunigung des Fahrzeugs 1 sicherzustellen:

| | |
|---|---|
| (TK1) | minimale Länge von der Fahrzeug-Ist-Position oder dem Anfangspunkt 201, 301 der Soll-Trajektorie ST zum Soll-Übergabepunkt 211, 311, |
| (TK2) | die maximale Krümmung des Übergabebereichs 215, 315 ist minimal, |
| (TK3) | minimale Zeitdauer von der Fahrzeug-Ist-Position oder dem Anfangspunkt der Soll-Trajektorie ST zum Soll-Übergabepunkt 211, 311 bei einem vorgegebenen Geschwindigkeitsverlauf des Fahrzeugs 1, der konstant über die Soll-Trajektorie ST oder veränderlich über die Soll-Trajektorie ST sein kann, |
| (TK4) | minimaler Energiebedarf oder minimaler Energieverbrauch für das Fahren des Fahrzeugs 1 von der Fahrzeug-Ist-Position oder dem Anfangspunkt 201 der Soll-Trajektorie ST zum Soll-Übergabepunkt 211, 311, |
| (TK5) | zuverlässige/prozesssichere Übergabe oder keine Fehlabgabe der Ladungseinheit L vom Fahrzeug 1 an die Ladungseinheit-Aufnahmevorrichtung 100, |
| (TK6) | minimale Platzausnutzung in der Ladungseinheit-Aufnahmevorrichtung 100. |

Bei der Anpassungsfunktion der Solltrajektorien-Ermittlungsfunktion kann vorgesehen sein, dass diese denjenigen des zumindest einen Parameters so definiert, dass der Vergleichswert oder Schwellwert oder Mindestwert am geringsten gegenüber anderen Parameterwerten überschritten wird. Alternativ oder zusätzlich kann zumindest eines der Kriterien TK1 bis TK6 verwendet werden und dabei derjenige zumindest eine Parameter so definiert werden, dass einer der vorgenannten Kriterien oder eine Mehrzahl der vorgenannten Kriterien erfüllt werden oder die größte Zahl an erfüllten Kriterien vorliegt.

Bei der Auswahlfunktion kann vorgesehen sein, dass diese denjenigen der Solltrajektorien-Verläufe und/oder denjenigen der Übergabebereiche auswählt, bei dem der Vergleichswert oder Schwellwert oder Mindestwert am geringsten gegenüber anderen Solltrajektorien-Verläufen überschritten wird. Alternativ oder zusätzlich kann zumindest eines der Kriterien TK1 bis TK6 verwendet werden und dabei denjenigen der Solltrajektorien-Verläufe ausgewählt werden, dass einer der vorgenannten Kriterien oder eine Mehrzahl der vorgenannten Kriterien erfüllt werden oder die größte Zahl an erfüllten Kriterien vorliegt.

Nach der Erfindung kann generell die zur Lastabgabe durch Massenträgheit der Ladungseinheit L im Soll-Übergabepunkt 211, 311 zu erreichende Übergabe-Beschleunigung des Fahrzeugs in der Solltrajektorien-Ermittlungsfunktion als Vergleichswert vorgegeben sein, und die Solltrajektorien-Ermittlungsfunktion eine Auswahl oder Anpassung eines Solltrajektorien-Verlaufs oder Übergabebereichs bei Erreichen des Grenzwerts kombiniert mit der Erfüllung zumindest eines oder mehrerer der Trajektorienverlaufs-Kriterien (TK1), (TK2), (TK3), (TK4), (TK5), (TK6) vornehmen.

Die genannten Ausführungsformen der Solltrajektorien-Ermittlungsfunktion, mit Verwendung einer vorgegebenen Soll-Trajektorie ST, mit einer Anpassungsfunktion, mit einer Auswahlfunktion, d.h. die Ausführungsformen mit einer oder mehreren dieser Optionen können jeweils eine Geschwindigkeitsverlaufs-Ermittlungsfunktion aufweisen, die für die jeweilige vorbestimmte oder ermittelte Soll-Trajektorie ST, 200, 300 oder den Übergabebereich 215, 315 der jeweiligen Soll-Trajektorie 200 oder 300 zusätzlich einen Soll-Geschwindigkeitsverlauf entlang der jeweiligen Soll-Trajektorie ST oder des jeweiligen Übergabebereichs ermittelt, mit dem die zu erzielende Seiten-Beschleunigung für das Fahrzeug 1 erreicht wird. Dabei kann die Geschwindigkeitsverlaufs-Ermittlungsfunktion derart ausgeführt sein, dass diese von einem vorbestimmten Soll-Geschwindigkeitsverlauf ausgeht und den Soll-Geschwindigkeitsverlauf inkrementell oder in vorgegebenen Schritten erhöht, bis die Simulationsrechnung ergibt, dass mit einem auf diese Weise definierten Soll-Geschwindigkeitsverlauf der Vergleichswert für die zu erreichende Beschleunigung erreicht oder überschritten wird. Der Soll-Geschwindigkeitsverlauf kann dabei mit einer Geschwindigkeitsverlaufs-Funktion oder durch eine Reihe von Soll-Geschwindigkeiten, die jeweils einem Punkt der Soll-Trajektorie zugeordnet sind, oder auf andere Weise definiert sein. Alternativ dazu kann die Geschwindigkeitsverlaufs-Ermittlungsfunktion verschiedene Soll-Geschwindigkeitsverläufe abgespeichert haben und nach und nach für die verschiedenen Soll-Geschwindigkeitsverläufe eine Simulationsrechnung mit Ermittlung der dabei im Soll-Übergabepunkt 211, 311 auftretenden theoretischen Übergabe-Beschleunigung durchgeführen. Wenn der Vergleichswert oder Schwellwert oder Mindestwert von dem jeweils ermittelten Wert der im Soll-Übergabepunkt 211, 311 auftretenden theoretischen Übergabe-Beschleunigung überschritten wird, kann auf Basis des jeweils verwendeten Soll-Geschwindigkeitsverlaufs, der zum Erreichen des Vergleichswerts geführt hat, der zu verwendende Soll-Geschwindigkeitsverlauf identifiziert werden. Insbesondere kann bei diesen Ausführungsformen derjenige Soll-Geschwindigkeitsverlauf für die Übergabe der Ladungseinheit L verwendet werden, bei der die jeweilige theoretische Übergabe-Beschleunigung den Vergleichswert um den geringsten Betrag überschreitet.

Bei allen Ausführungsformen, bei denen ein Vergleichswert oder Schwellwert oder Mindestwert für die Übergabe-Beschleunigung des Fahrzeugs 1, insbesondere im Zusammenhang mit der Verwendung einer theoretischen Übergabe-Beschleunigung, benötigt wird, kann der Vergleichswert oder Schwellwert oder Mindestwert ermittelt werden. Hierfür kann eine Vergleichswert-Ermittlungsfunktion in der jeweiligen Geschwindigkeitsverlaufs-Ermittlungsfunktion funktional integriert sein, in der der Vergleichswert oder Schwellwert oder Mindestwert ermittelt wird. Bei der Ermittlung des Vergleichswerts oder Schwellwerts oder Mindestwerts kann vorgesehen sein, dass ein Eigenschaftswert oder eine Kombination von mehreren der folgenden Eigenschaftswerte als Faktoren oder Beeinflussungsfaktoren abgeleitet werden:
(K1) ein Gewicht oder ein Gewichtsbereich der Ladungseinheit L,
(K2) ein Reibwert zwischen der Ladungseinheit L und dem Aufnahmebauteil 7,
(K3) ein Wert für die Größe der Ladungseinheit L.

Dabei kann der jeweilige Beeinflussungsfaktor auf einen vorbestimmten Vergleichswert oder Schwellwert oder Mindestwert angewendet werden.

Bei jeder erfindungsgemäßen Ausführungsform mit einer Geschwindigkeits-Ermittlungsfunktion kann vorgesehen sein, dass die Geschwindigkeits-Ermittlungsfunktion als Übergabegeschwindigkeits-Kriterium oder Geschwindigkeitsverlaufs-Kriterium eines oder mehrere der folgenden Geschwindigkeits-Kriterien (GK1), (GK2) verwendet, um die zu erreichende Übergabe-Beschleunigung des Fahrzeugs 1 sicherzustellen:

| | |
|---|---|
| (GK1) | minimale Zeitdauer von der Fahrzeug-Ist-Position oder dem Anfangspunkt 201 der Soll-Trajektorie ST zum Soll-Übergabepunkt 211 insbesondere bei Einhaltung vorgegebener Restriktionen wie z.B. maximale Seiten-Beschleunigung des Fahrzeugs 1, |
| (GK2) | Energiebedarf oder Energieverbrauch für das Fahren des Fahrzeugs 1 von der Fahrzeug-Ist-Position oder dem Anfangspunkt 201 der Soll-Trajektorie ST zum Soll-Übergabepunkt 211. |

Weiterhin kann erfindungsgemäß vorgesehen sein, dass jede der hierin beschriebenen Geschwindigkeits-Ermittlungsfunktionen mit jeder der hierin beschriebenen Solltrajektorien-Ermittlungsfunktionen kombiniert werden kann, um sowohl einen Soll-Geschwindigkeitsverlauf als auch einen Solltrajektorien-Verlauf oder einen Verlauf des Übergabebereichs zu ermitteln. Dabei kann vorgesehen sein, dass für die jeweils ermittelte Kombination des jeweils ermittelten Soll-Geschwindigkeitsverlaufs mit einem jeweils ermittelten Solltrajektorien-Verlauf oder Verlauf des Übergabebereichs eine Simulationsrechnung mit Ermittlung der dabei im Soll-Übergabepunkt 211, 311 auftretenden theoretische Übergabe-Beschleunigung durchgeführt wird. Dabei kann insbesondere vorgesehen sein, dass von den genannten Kombinationen, deren theoretische Übergabe-Beschleunigung den Vergleichswert oder Schwellwert oder Mindestwert überschreiten, diejenige Kombination zur Durchführung der Übergabe-Missionsaufgabe oder zur Übergabe der Ladungseinheit L an die Ladungseinheit-Aufnahmevorrichtung 100 verwendet wird, die als Optimierungsziel eines oder mehrere der folgenden Optimierungskriterien (OK1), (OK2), (OK3), (OK4), (OK5), (OK6) verwendet:

| | |
|---|---|
| (OK1) | minimale Länge von der Fahrzeug-Ist-Position oder dem Anfangspunkt der Soll-Trajektorie ST zum Soll-Übergabepunkt 211, 311, |
| (OK2) | minimale Übergabe-Geschwindigkeit, |
| (OK3) | minimale Zeitdauer von der Fahrzeug-Ist-Position oder dem Anfangspunkt der Soll-Trajektorie ST zum Soll-Übergabepunkt 211, 311, |
| (OK4) | Energiebedarf oder Energieverbrauch für das Fahren des Fahrzeugs 1 von der Fahrzeug-Ist-Position oder dem Anfangspunkt der Soll-Trajektorie ST zum Soll-Übergabepunkt 211, 311, |
| (OK5) | zuverlässige/prozesssichere Übergabe oder keine Fehlabgabe der Ladungseinheit L vom Fahrzeug 1 an die Ladungseinheit-Aufnahmevorrichtung 100, |
| (OK6) | minimale Platzausnutzung in der Ladungseinheit-Aufnahmevorrichtung 100. |

Das Optimierungs-Kriterium (OK6) hat insbesondere für den Fall, dass die Ladungseinheit-Aufnahmevorrichtung 100 schon teilweise belegt ist, das Ziel, dass das Fahrzeug seine Soll-Trajektorie ST so anpasst, dass die Ladungseinheit L gezielt in einem noch freien Bereich der Ladungseinheit-Aufnahmevorrichtung 100 landet.

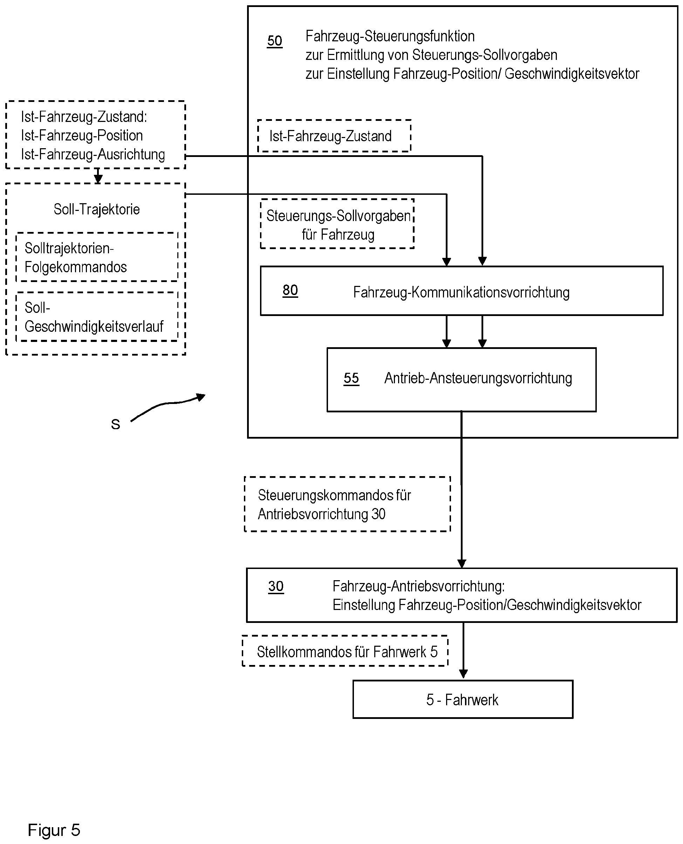

In der Figur 5 ist eine erfindungsgemäße Ausführungsform des Fahrzeugsystems S mit der Fahrzeug-Steuerungsfunktion 50, einer Antriebs-Ansteuerungsfunktion 55 und einer Fahrzeug-Kommunikationsvorrichtung 80 dargestellt. Bei dieser Ausführungsform ist vorgesehen, dass die Fahrzeug-Kommunikationsvorrichtung 80 Steuerungs-Sollvorgaben und optional jeweils aktuelle Ist-Fahrzeug-Zustände empfängt und der Antriebs-Ansteuerungsfunktion 55 bereitstellt und übermittelt. Bei der Ausführungsform, die in der Figur 5 gezeigt ist, sind die von der Fahrzeug-Kommunikationsvorrichtung 80 empfangenen Steuerungs-Sollvorgaben insbesondere Solltrajektorien-Folgekommandos und ein Soll-Geschwindigkeitsverlauf, der Soll-Geschwindigkeiten entlang der jeweiligen Soll-Trajektorie ST oder zumindest entlang des Übergabebereichs 215, 315 der Soll-Trajektorie ST, 200, 300 aufweist, optional mit der zumindest einen Soll-Trajektorie ST oder jeweiligen Soll-Trajektorien ST. Die Steuerungs-Sollvorgaben werden als jeweils aktuelle Werte in insbesondere vorbestimmten Zeitabständen und insbesondere mit einer vorgegebenen Iterationsrate von der Fahrzeug-Kommunikationsvorrichtung 80 empfangen.

Vor der Übermittlung der Steuerungs-Sollvorgaben an die Fahrzeug-Kommunikationsvorrichtung 80 sind diese aufgrund eines jeweils aktuellen Ist-Fahrzeug-Zustands ermittelt worden. Dabei ist vorgesehen, dass die jeweils aktuellen Ist-Fahrzeug-Zustände von einer externen Einrichtung, die außerhalb des Fahrzeugs und die insbesondere stationär im Betriebsbereich B angeordnet ist, ermittelt werden. Die Ermittlung der jeweils aktuellen Ist-Fahrzeug-Zustände kann dabei generell mittels einer Sensorvorrichtung, z.B. mittels einer Kamera, und entsprechender Transformation der Sensordaten in ein der Betriebsfläche E zugeordnetes Koordinatensystem erfolgen. Optional werden die jeweils aktuellen Ist-Fahrzeug-Zustände als Werte eines solches Koordinatensystems von der Fahrzeug-Kommunikationsvorrichtung 80 empfangen. Von einer externen Einrichtung werden auf Basis der jeweiligen Soll-Trajektorie ST und der jeweils aktuellen Ist-Fahrzeug-Zustände bei dieser Ausführungsform Solltrajektorien-Folgekommandos, z.B. als Soll-Richtungsvektor des Fahrzeugs 1, und der Soll-Geschwindigkeitsverlauf ermittelt und an die Fahrzeug-Kommunikationsvorrichtung 80 übermittelt, so dass diese Steuerungs-Sollvorgaben von der Fahrzeug-Kommunikationsvorrichtung 80 empfangen. Die Fahrzeug-Kommunikationsvorrichtung 80 übermittelt für die jeweilige Soll-Trajektorie ST und die jeweils aktuellen Ist-Fahrzeug-Zustände Solltrajektorien-Folgekommandos als Steuerungs-Sollvorgaben nach einer hierin beschriebenen Ausführungsform an die Antriebs-Ansteuerungsfunktion 55. Auf Basis der jeweiligen Steuerungs-Sollvorgaben ermittelt die Antriebs-Ansteuerungsfunktion 55 Steuerungskommandos zur Einstellung eines Geschwindigkeitsvektors des Fahrzeugs 1, die diese an die Antriebsvorrichtung 30 übermittelt. Die Steuerungskommandos können z.B. Lenk-Kommandos oder Richtungsänderungs-Kommandos oder Beschleunigungs-Kommandos beinhalten. Die Steuerungskommandos sind geeignet, dass die Antriebsvorrichtung 30 diese in Fahrwerk-Stellkommandos umsetzt, die an das Fahrwerk 5 übermittelt werden und die geeignet sind, dass das Fahrwerk 5 das Fahrzeug 1 entlang der Soll-Trajektorie ST und insbesondere entlang des Übergabebereichs 215, 315 bewegt und dabei die zu erreichende Übergabe-Beschleunigung des Fahrzeugs 1 zumindest in einem den Soll-Übergabepunkt 211, 311 aufweisenden Abschnitt oder im Soll-Übergabepunkt 211, 311 realisiert.

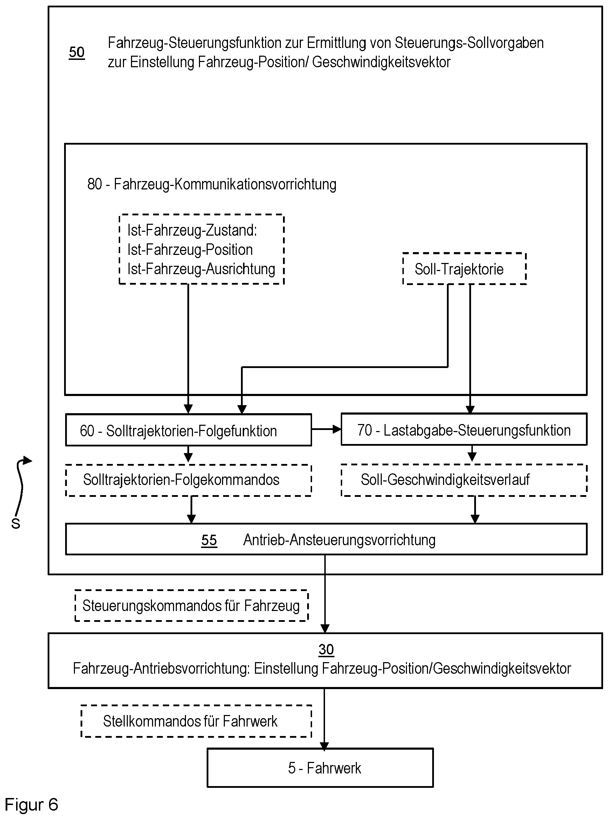

In der Figur 6 ist eine weitere erfindungsgemäße Ausführungsform des Fahrzeugsystems S mit der Fahrzeug-Steuerungsfunktion 50, einer Antriebs-Ansteuerungsfunktion 55 und einer Fahrzeug-Kommunikationsvorrichtung 80 dargestellt. Bei dieser Ausführungsform ist vorgesehen, dass die Fahrzeug-Kommunikationsvorrichtung 80 jeweils aktuelle Ist-Fahrzeug-Zustände und zumindest eine Soll-Trajektorie ST z.B. in Form von Daten oder einer mathematischen Funktion, empfängt. Die Ermittlung der jeweils aktuellen Ist-Fahrzeug-Zustände kann dabei generell mittels einer Sensorvorrichtung und entsprechender Transformation der Sensordaten in ein der Betriebsfläche E zugeordnetes Koordinatensystem erfolgen. Die jeweils aktuellen Ist-Fahrzeug-Zustände und die zumindest eine Soll-Trajektorie ST werden an die Solltrajektorien-Folgefunktion 60 übermittelt. Die Solltrajektorien-Folgefunktion 60 nimmt eine Zuordnung von jeweils aktuellen Ist-Fahrzeug-Zuständen und jeweiligen Punkten der Soll-Trajektorie ST vor und ermittelt für jeweils aktuelle Ist-Fahrzeug-Zustände Solltrajektorien-Folgekommandos für das Fahrzeug 1. Die Solltrajektorien-Folgefunktion 60 kann nach einer hierin beschriebenen Ausführungsform realisiert sein.

Weiterhin sendet die Fahrzeug-Kommunikationsvorrichtung 80 der Lastabgabe-Steuerungsfunktion 70 die zumindest eine Soll-Trajektorie ST. Die Lastabgabe-Steuerungsfunktion 70 kann nach einer hierin beschriebenen Ausführungsform realisiert sein. Die Lastabgabe-Steuerungsfunktion 70 ermittelt für die jeweilige Soll-Trajektorie ST jeweils einen Soll-Geschwindigkeitsverlauf nach einer hierin beschriebenen Ausführungsform, bei dem zumindest in einem sich den Soll-Übergabepunkt 211, 311 aufweisenden Abschnitt der Soll-Trajektorie ST oder im Übergabepunkt 211, 311 eine Soll-Beschleunigung des Fahrzeugs 1 definiert ist.

Die Solltrajektorien-Folgefunktion 60 übermittelt die Solltrajektorien-Folgekommandos an die Antriebs-Ansteuerungsfunktion 55 und die Lastabgabe-Steuerungsfunktion 70 übermittelt den Soll-Geschwindigkeitsverlauf für die jeweilige Soll-Trajektorie ST oder zumindest entlang des Übergabebereichs 215, 315 der Soll-Trajektorie ST, 200, 300 an die Antriebs-Ansteuerungsfunktion 55. Diese Steuerungs-Sollvorgaben werden als jeweils aktuelle Werte in insbesondere vorbestimmten Zeitabständen und insbesondere mit einer vorgegebenen Iterationsrate an die Antriebs-Ansteuerungsfunktion 55 übermittelt. Die Steuerungs-Sollvorgaben können in zeitlich konsolidierter Weise, also für den jeweils aktuellen Zeitpunkt, insbesondere als Datenpaket oder in einer Datenstruktur zusammengefasst, an die Antriebs-Ansteuerungsfunktion 55 übermittelt werden. Die Antriebs-Ansteuerungsfunktion 55 ermittelt aus den Solltrajektorien-Folgekommandos und dem Soll-Geschwindigkeitsverlauf, optional mit der jeweiligen Soll-Trajektorie ST, Steuerungskommandos, die diese an die Antriebsvorrichtung 30 übermittelt. Die Steuerungskommandos können z.B. Lenk-Kommandos oder Richtungsänderungs-Kommandos oder Beschleunigungs-Kommandos beinhalten. Die Steuerungskommandos sind geeignet, dass die Antriebsvorrichtung 30 diese in Fahrwerk-Kommandos umsetzt, die an das Fahrwerk 5 übermittelt werden und die geeignet sind, dass das Fahrwerk 5 das Fahrzeug 1 entlang der Soll-Trajektorie ST und insbesondere entlang des Übergabebereichs 215, 315 bewegt und dabei die zu erreichende Übergabe-Beschleunigung des Fahrzeugs 1 zumindest in einem sich den Soll-Übergabepunkt 211, 311 aufweisenden Abschnitt realisiert.

Als Alternative zur der Ausführungsform der Figur 6 kann die Solltrajektorien-Folgefunktion 60 in einer externen Einrichtung, z.B. einer stationär im Betriebsbereich B angeordneten Logistik-Zentralvorrichtung 300, integriert sein, so dass die Solltrajektorien-Folgekommandos optional mit der zumindest einen Soll-Trajektorie ST oder jeweiligen Soll-Trajektorien ST an die Fahrzeug-Kommunikationsvorrichtung 80 übermittelt und von der Fahrzeug-Kommunikationsvorrichtung 80 empfangen und an die Antriebs-Ansteuerungsfunktion 55 übermittelt werden. Bei dieser Alternative weist die Fahrzeug-Steuerungsfunktion 50 die Lastabgabe-Steuerungsfunktion 70 auf, die den Soll-Geschwindigkeitsverlauf für die jeweilige Soll-Trajektorie ST an die Antriebs-Ansteuerungsfunktion 55 übermittelt. Die Funktionalität der Antriebs-Ansteuerungsfunktion 55 und der Antriebsvorrichtung 30 kann nach einer Ausführungsform realisiert sein, die hierin anhand der Figur 5 oder der Figur 6 beschrieben ist.

Als weitere Alternative zur Ausführungsform der Figur 6 kann die Lastabgabe-Steuerungsfunktion 70 in einer externen Einrichtung, z.B. einer stationär im Betriebsbereich B angeordneten Logistik-Zentralvorrichtung 300, integriert sein, so dass der Soll-Geschwindigkeitsverlauf optional mit der zumindest einen Soll-Trajektorie ST oder jeweiligen Soll-Trajektorien ST an die Fahrzeug-Kommunikationsvorrichtung 80 und von dieser an die Antriebs-Ansteuerungsfunktion 55 übermittelt werden kann. Bei dieser Alternative weist die Fahrzeug-Steuerungsfunktion 50 die Solltrajektorien-Folgefunktion 60 auf, die die Solltrajektorien-Folgekommandos für die jeweilige Soll-Trajektorie ST an die Antriebs-Ansteuerungsfunktion 55 übermittelt.

Bei den anhand der Figur 6 beschriebenen Ausführungsformen kann alternativ oder zusätzlich vorgesehen sein, dass die Fahrzeug-Steuerungsfunktion 50 zumindest eine Soll-Trajektorie ST abgespeichert hat. Dazu alternativ oder zusätzlich kann vorgesehen sein, dass die Fahrzeug-Steuerungsfunktion 50 eine Solltrajektorien-Ermittlungsfunktion aufweist, die nach einer hierin beschriebenen Weise ausgeführt ist und eine jeweilige Soll-Trajektorie ST ermittelt und der Solltrajektorien-Folgefunktion 60 und gegebenenfalls der Lastabgabe-Steuerungsfunktion 70 übermittelt. Auch kann dabei alternativ oder zusätzlich vorgesehen sein, dass die Lastabgabe-Steuerungsfunktion 70 eine Geschwindigkeits-Ermittlungsfunktion aufweist, die nach einer hierin beschriebenen Weise ausgeführt ist und den Soll-Geschwindigkeitsverlauf für die jeweilige Soll-Trajektorie ST oder zumindest entlang des Übergabebereichs 215, 315 der Soll-Trajektorie ST, 200, 300 ermittelt.

Bei den anhand der Figur 6 beschriebenen Ausführungsformen kann die Übermittlung der Steuerungs-Sollvorgaben sowie deren Ausführungsformen, die Funktionalität der Antriebs-Ansteuerungsfunktion 55 und der Antriebsvorrichtung 30 nach einer Ausführungsform realisiert sein, die hierin anhand der Figur 5 oder der Figur 6 beschrieben ist.

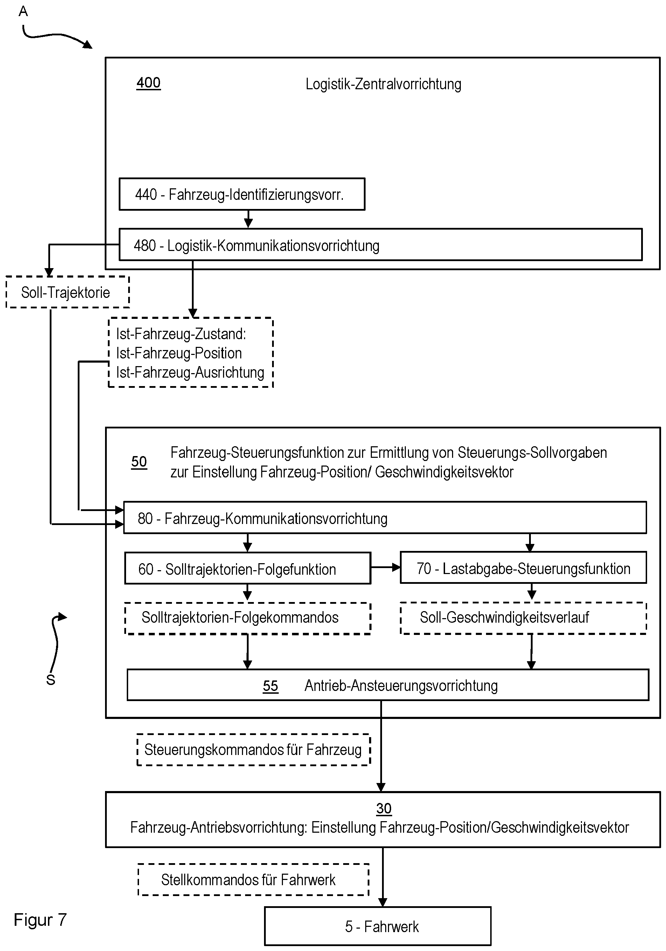

Nach einem weiteren Aspekt der Erfindung ist ein Logistiksystem A mit einer Logistik-Zentralvorrichtung 300 und zumindest einem Fahrzeugsystem S vorgesehen. Bei einer in der Figur 7 dargestellten Ausführungsform des Logistiksystems A weist die Logistik-Zentralvorrichtung 400 eine Fahrzeug-Identifizierungsvorrichtung 440 auf, mit der Daten ermittelt werden, die den jeweils aktuellen Ist-Fahrzeug-Zustand, insbesondere die jeweils aktuelle Ist-Fahrzeug-Position und optional die jeweils aktuelle Ist-Fahrzeug-Ausrichtung, definieren. Weiterhin weist die Logistik-Zentralvorrichtung 400 eine Logistik-Kommunikationsvorrichtung 480 auf, die den jeweils aktuellen Ist-Fahrzeug-Zustand an die Fahrzeug-Kommunikationsvorrichtung 80 des zumindest einem Fahrzeugsystem S übermitteln. Dabei kann, wie dargestellt, auch vorgesehen sein, dass in der Logistik-Zentralvorrichtung 400 und dabei beispielsweise in der Logistik-Steuerungsfunktion 450 zumindest eine Soll-Trajektorie ST bereitgestellt oder abgespeichert ist und dass die zumindest eine Soll-Trajektorie ST von der Logistik-Kommunikationsvorrichtung 480 an das jeweilige Fahrzeugsystem S übermittelt wird. Alternativ oder zusätzlich kann vorgesehen sein, dass die Logistik-Zentralvorrichtung 400 oder die Logistik-Steuerungsfunktion 450 eine Solltrajektorien-Ermittlungsfunktion aufweist, die nach einer der hierin beschriebenen Realisierungen ausgeführt ist und zumindest eine jeweilige Soll-Trajektorie ST ermittelt und diese der Solltrajektorien-Folgefunktion 60 und gegebenenfalls der Lastabgabe-Steuerungsfunktion 70 übermittelt. Zu diesen Realisierungen alternativ oder zusätzlich kann vorgesehen sein, dass in der Fahrzeug-Steuerungsfunktion 50 zumindest eine Soll-Trajektorie ST bereitgestellt oder abgespeichert ist und/oder dass die Fahrzeug-Steuerungsfunktion 50 eine Solltrajektorien-Ermittlungsfunktion aufweist, die nach einer der hierin beschriebenen Realisierungen ausgeführt ist und zumindest eine jeweilige Soll-Trajektorie ST ermittelt und diese der Solltrajektorien-Folgefunktion 60 und gegebenenfalls der Lastabgabe-Steuerungsfunktion 70 übermittelt.

Bei den anhand der Figur 7 beschriebenen Ausführungsformen kann die Übermittlung der Steuerungs-Sollvorgaben sowie deren Ausführungsformen, die Funktionalität der Antriebs-Ansteuerungsfunktion 55 und der Antriebsvorrichtung 30 nach einer Ausführungsform realisiert sein, die hierin anhand der Figur 5 oder der Figur 6 beschrieben ist.

Bei den anhand der Figur 7 beschriebenen Ausführungsformen kann die Funktionalität der Antriebs-Ansteuerungsfunktion 55 und der Antriebsvorrichtung 30 nach einer Ausführungsform realisiert sein, die hierin anhand der Figur 5 oder der Figur 6 beschrieben ist.

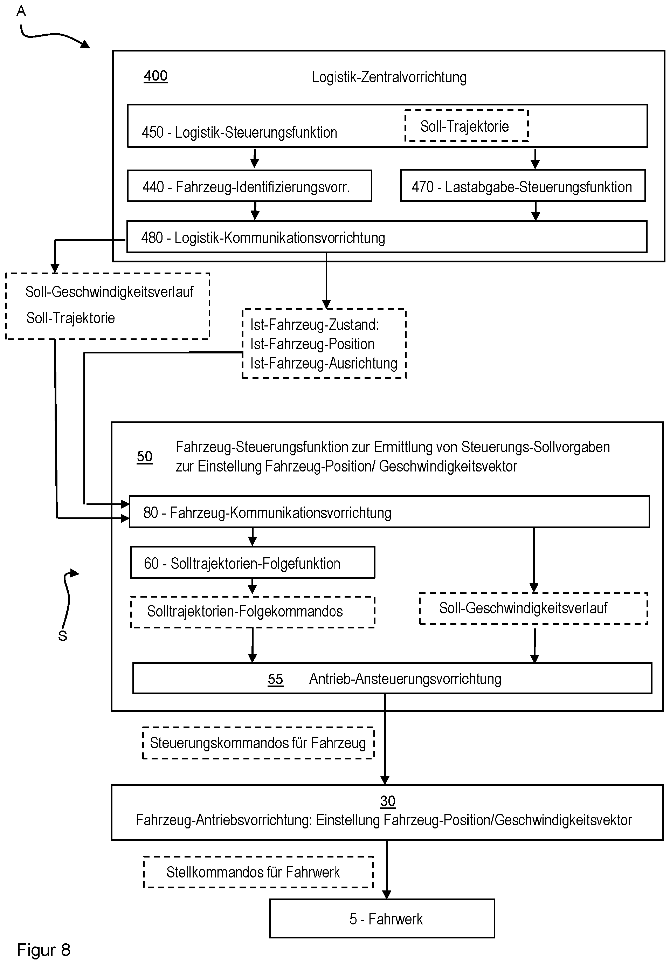

Bei einer in der Figur 8 dargestellten Ausführungsform des Logistiksystems A weist die Logistik-Zentralvorrichtung 400 eine Fahrzeug-Identifizierungsvorrichtung 440, die wie anhand der Figur 7 beschrieben ausgeführt sein kann, eine Logistik-Steuerungsfunktion 450 und eine Lastabgabe-Steuerungsfunktion 470 auf. Die Lastabgabe-Steuerungsfunktion 470 kann nach einer hierin generell in Bezug auf eine Lastabgabe-Steuerungsfunktion beschriebene Funktionalität realisiert sein. Die Logistik-Steuerungsfunktion 450 stellt zumindest eine Soll-Trajektorie ST bereit. Die Logistik-Steuerungsfunktion 450 ist nach einer Ausführungsform realisiert, die anhand der Figur 7 beschrieben ist. Die Logistik-Zentralvorrichtung 400 weist eine Logistik-Kommunikationsvorrichtung 480 auf. Die Logistik-Steuerungsfunktion 450 übermittelt zumindest eine Soll-Trajektorie ST an die Logistik-Kommunikationsvorrichtung 480. Die Lastabgabe-Steuerungsfunktion 470 übermittelt für die jeweilige Soll-Trajektorie ST jeweils einen Soll-Geschwindigkeitsverlauf zumindest entlang des Übergabebereichs 215, 315 der Soll-Trajektorie ST, 200, 300 nach einer hierin beschriebenen Ausführungsform. Der Soll-Geschwindigkeitsverlauf kann insbesondere derart ausgeführt sein, dass zumindest in einem den Soll-Übergabepunkt 211, 311 aufweisenden Abschnitt der Soll-Trajektorie ST oder im Übergabepunkt 211, 311 eine Soll-Beschleunigung des Fahrzeugs 1 definiert ist. Die Logistik-Kommunikationsvorrichtung 480 übermittelt den jeweils aktuellen Ist-Fahrzeug-Zustand, insbesondere die jeweils aktuelle Ist-Fahrzeug-Position und optional die jeweils aktuelle Ist-Fahrzeug-Ausrichtung, die zumindest eine Soll-Trajektorie ST und den Soll-Geschwindigkeitsverlauf an die Fahrzeug-Kommunikationsvorrichtung 80.

Die Fahrzeug-Steuerungsfunktion 50 weist eine Solltrajektorien-Folgefunktion 60 auf, die zumindest eine Soll-Trajektorie ST und den jeweils aktuellen Ist-Fahrzeug-Zustand von der Fahrzeug-Kommunikationsvorrichtung 80 empfängt. Die Solltrajektorien-Folgefunktion 60 kann nach einer hierin generell in Bezug auf eine Solltrajektorien-Folgefunktion beschriebenen Funktionalität realisiert sein.

Die Solltrajektorien-Folgefunktion 60 übermittelt die Solltrajektorien-Folgekommandos an die Antriebs-Ansteuerungsfunktion 55. Die Fahrzeug-Kommunikationsvorrichtung 80 sendet den Soll-Geschwindigkeitsverlauf, der in einer hierin beschriebenen Ausführungsform realisiert sein kann, für die jeweilige Soll-Trajektorie ST an die Antriebs-Ansteuerungsfunktion 55. Diese Steuerungs-Sollvorgaben werden als jeweils aktuelle Werte in insbesondere vorbestimmten Zeitabständen und insbesondere mit einer vorgegebenen Iterationsrate an die Antriebs-Ansteuerungsfunktion 55 übermittelt. Diese Steuerungs-Sollvorgaben werden als jeweils aktuelle Werte in insbesondere vorbestimmten Zeitabständen und insbesondere mit einer vorgegebenen Iterationsrate an die Antriebs-Ansteuerungsfunktion 55 übermittelt. Bei den anhand der Figur 7 beschriebenen Ausführungsformen kann die Funktionalität der Antriebs-Ansteuerungsfunktion 55 und der Antriebsvorrichtung 30 nach einer Ausführungsform realisiert sein, die hierin anhand der Figur 5 oder der Figur 6 beschrieben ist.

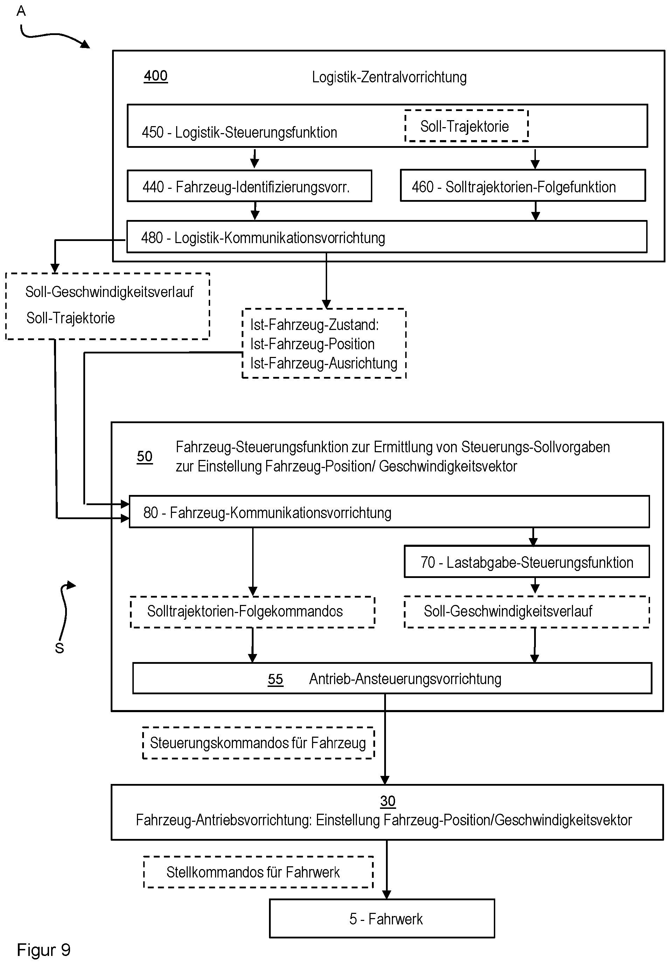

Bei einer in der Figur 9 dargestellten Ausführungsform des Logistiksystems A weist die Logistik-Zentralvorrichtung 400 eine Fahrzeug-Identifizierungsvorrichtung 440, die wie anhand der Figur 7 beschrieben ausgeführt sein kann, eine Logistik-Steuerungsfunktion 450 und eine Solltrajektorien-Folgefunktion 460 auf. Die Solltrajektorien-Folgefunktion 460 kann nach einer hierin generell in Bezug auf eine Solltrajektorien-Folgefunktion beschriebene Funktionalität realisiert sein. Die Logistik-Steuerungsfunktion 450 stellt zumindest eine Soll-Trajektorie ST bereit. Die Logistik-Steuerungsfunktion 450 ist nach einer Ausführungsform realisiert, die anhand der Figur 7 beschrieben ist. Die Logistik-Zentralvorrichtung 400 weist eine Logistik-Kommunikationsvorrichtung 480 auf. Die Logistik-Steuerungsfunktion 450 übermittelt zumindest eine Soll-Trajektorie ST an die Logistik-Kommunikationsvorrichtung 480. Die Solltrajektorien-Folgefunktion 460 nimmt eine Zuordnung von jeweils aktuellen Ist-Fahrzeug-Zuständen und jeweiligen Punkten der Soll-Trajektorie ST vor und ermittelt für jeweils aktuelle Ist-Fahrzeug-Zustände Solltrajektorien-Folgekommandos für das Fahrzeug 1. Die Solltrajektorien-Folgefunktion 60 kann nach einer hierin beschriebenen Ausführungsform realisiert sein. Die Solltrajektorien-Folgefunktion 60 ermittelt Solltrajektorien-Folgekommandos für die jeweilige Soll-Trajektorie ST und die jeweils aktuellen Ist-Fahrzeug-Zustände nach einer hierin beschriebenen Ausführungsform und übermittelt die Solltrajektorien-Folgekommandos an die Logistik-Kommunikationsvorrichtung 480. Die Logistik-Kommunikationsvorrichtung 380 übermittelt die jeweils aktuellen Solltrajektorien-Folgekommandos und optional die zumindest eine Soll-Trajektorie ST an die Fahrzeug-Kommunikationsvorrichtung 80.

Die Fahrzeug-Steuerungsfunktion 50 weist die Lastabgabe-Steuerungsfunktion 70 auf. Die Fahrzeug-Kommunikationsvorrichtung 80 übermittelt an die Lastabgabe-Steuerungsfunktion 70 die zumindest eine Soll-Trajektorie ST, optional die jeweils aktuellen Ist-Fahrzeug-Zustände. Die Lastabgabe-Steuerungsfunktion 70 kann nach einer hierin generell in Bezug auf eine Lastabgabe-Steuerungsfunktion beschriebenen Funktionalität realisiert sein. Die Lastabgabe-Steuerungsfunktion 70 ermittelt für die jeweilige Soll-Trajektorie ST jeweils einen Soll-Geschwindigkeitsverlauf nach einer hierin beschriebenen Ausführungsform zumindest entlang des Übergabebereichs 215, 315 der Soll-Trajektorie ST, 200, 300, bei dem zumindest in einem sich den Soll-Übergabepunkt 211, 311 aufweisenden Abschnitt der Soll-Trajektorie ST oder im Übergabepunkt 211, 311 eine Soll-Beschleunigung des Fahrzeugs 1 definiert ist. Die Lastabgabe-Steuerungsfunktion 70 übermittelt für die jeweilige Soll-Trajektorie ST jeweils einen Soll-Geschwindigkeitsverlauf als Steuerungs-Sollvorgaben nach einer hierin beschriebenen Ausführungsform an die Antriebs-Ansteuerungsfunktion 55. Die Fahrzeug-Kommunikationsvorrichtung 80 übermittelt für die jeweilige Soll-Trajektorie ST und die jeweils aktuellen Ist-Fahrzeug-Zustände Solltrajektorien-Folgekommandos als Steuerungs-Sollvorgaben nach einer hierin beschriebenen Ausführungsform an die Antriebs-Ansteuerungsfunktion 55.

Diese Steuerungs-Sollvorgaben werden als jeweils aktuelle Werte in insbesondere vorbestimmten Zeitabständen und insbesondere mit einer vorgegebenen Iterationsrate an die Antriebs-Ansteuerungsfunktion 55 übermittelt. Bei den anhand der Figur 7 beschriebenen Ausführungsformen kann die Funktionalität der Antriebs-Ansteuerungsfunktion 55 und der Antriebsvorrichtung 30 nach einer Ausführungsform realisiert sein, die hierin anhand der Figur 5 oder der Figur 6 beschrieben ist.

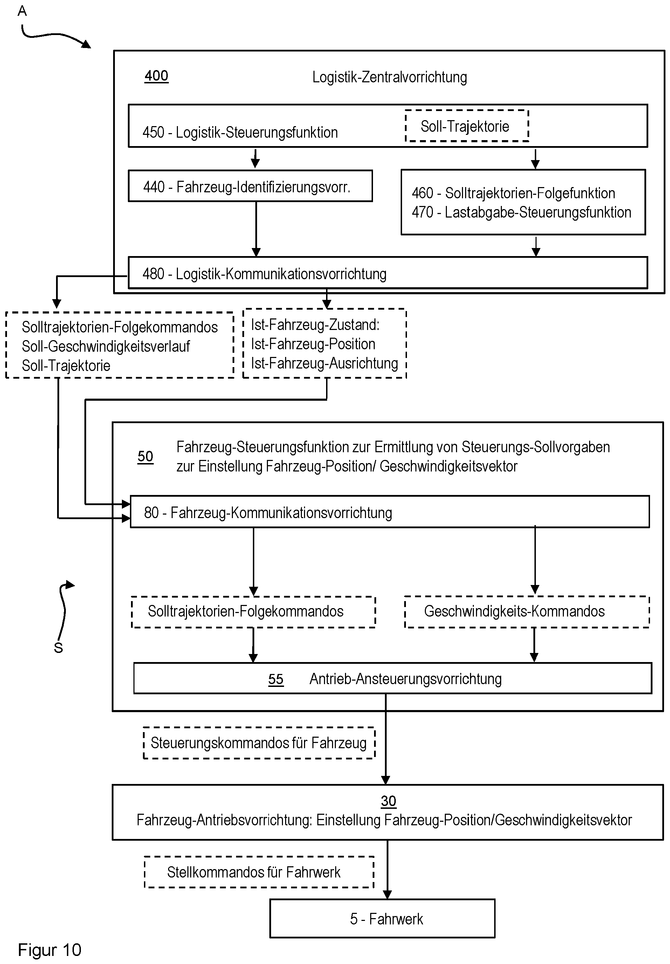

Bei einer in der Figur 10 dargestellten Ausführungsform des Logistiksystems A weist die Logistik-Zentralvorrichtung 400 eine Fahrzeug-Identifizierungsvorrichtung 440, die wie anhand der Figur 7 beschrieben ausgeführt sein kann, eine Logistik-Steuerungsfunktion 450, eine Solltrajektorien-Folgefunktion 460 und eine Lastabgabe-Steuerungsfunktion 470 auf. Die Solltrajektorien-Folgefunktion 460 kann nach einer hierin generell in Bezug auf eine Solltrajektorien-Folgefunktion beschriebene Funktionalität realisiert sein. Die Lastabgabe-Steuerungsfunktion 470 kann nach einer hierin generell in Bezug auf eine Lastabgabe-Steuerungsfunktion beschriebene Funktionalität realisiert sein. Die Logistik-Steuerungsfunktion 450 stellt zumindest eine Soll-Trajektorie ST bereit. Die Logistik-Steuerungsfunktion 450 ist nach einer Ausführungsform realisiert, die anhand der Figur 7 beschrieben ist. Die Logistik-Zentralvorrichtung 400 weist eine Logistik-Kommunikationsvorrichtung 480 auf. Optional übermittelt die Logistik-Steuerungsfunktion 450 die zumindest eine Soll-Trajektorie ST an die Logistik-Kommunikationsvorrichtung 480. Die Solltrajektorien-Folgefunktion 460 nimmt eine Zuordnung von jeweils aktuellen Ist-Fahrzeug-Zuständen und jeweiligen Punkten der Soll-Trajektorie ST vor und ermittelt für jeweils aktuelle Ist-Fahrzeug-Zustände Solltrajektorien-Folgekommandos für das Fahrzeug 1. Die Solltrajektorien-Folgefunktion 60 ermittelt Solltrajektorien-Folgekommandos für die jeweilige Soll-Trajektorie ST und die jeweils aktuellen Ist-Fahrzeug-Zustände nach einer hierin beschriebenen Ausführungsform und übermittelt die Solltrajektorien-Folgekommandos und optional die zumindest eine Soll-Trajektorie ST an die Logistik-Kommunikationsvorrichtung 480. Die Lastabgabe-Steuerungsfunktion 470 übermittelt für die jeweilige Soll-Trajektorie ST jeweils einen Soll-Geschwindigkeitsverlauf zumindest entlang des Übergabebereichs 215, 315 der Soll-Trajektorie ST, 200, 300 nach einer hierin beschriebenen Ausführungsform. Der Soll-Geschwindigkeitsverlauf kann insbesondere derart ausgeführt sein, dass zumindest in einem sich den Soll-Übergabepunkt 211, 311 aufweisenden Abschnitt der Soll-Trajektorie ST oder im Übergabepunkt 211, 311 eine Soll-Beschleunigung des Fahrzeugs 1 definiert ist. Die Logistik-Kommunikationsvorrichtung 480 übermittelt die jeweils aktuellen Solltrajektorien-Folgekommandos, optional den jeweils aktuellen Ist-Fahrzeug-Zustand, optional die zumindest eine Soll-Trajektorie ST und den Soll-Geschwindigkeitsverlauf an die Fahrzeug-Kommunikationsvorrichtung 80.

Die Fahrzeug-Steuerungsfunktion 50 kann nach einer Ausführungsform, die anhand der Figur 6 beschrieben ist, realisiert sein. Diese Steuerungs-Sollvorgaben werden als jeweils aktuelle Werte in insbesondere vorbestimmten Zeitabständen und insbesondere mit einer vorgegebenen Iterationsrate an die Antriebs-Ansteuerungsfunktion 55 übermittelt. Bei den anhand der Figur 10 beschriebenen Ausführungsformen kann die Funktionalität der Antriebs-Ansteuerungsfunktion 55 und der Antriebsvorrichtung 30 nach einer Ausführungsform realisiert sein, die hierin anhand der Figur 5 oder der Figur 6 beschrieben ist.

Jede hierin genannte Solltrajektorien-Folgefunktion 60 kann funktionaler Bestandteil einer Bahnregelungs-Funktion einer Logistik-Zentralvorrichtung 400 sein, die im Betriebsbereich stationär angeordnet ist.

Nach einem weiteren Aspekt der Erfindung ist ein Verfahren zur Übergabe einer Ladungseinheit L von einem Fahrzeug 1 an eine Ladungseinheit-Aufnahmevorrichtung in einem Betriebsbereich vorgesehen. Das Fahrzeug 1 weist dabei insbesondere auf: das Fahrwerk 5, die Antriebsvorrichtung 30, die mit dem Fahrwerk 5 in Verbindung steht und die einen Geschwindigkeitsvektor des Fahrzeugs 1 auf der Betriebsfläche des Betriebsbereichs einstellt, und der an dem Fahrwerk 5 angeordnete Fahrzeug-Rahmen 10 mit einem Aufnahmebauteil 7 zum Aufnehmen einer Ladungseinheit L. Das erfindungsgemäße Verfahren weist die folgenden Schritte auf:
aufgrund von Steuerungs-Sollvorgaben Ermittlung von Steuerungskommandos und Übermittlung derselben an die Antriebsvorrichtung 30, um einen jeweils aktuellen Geschwindigkeitsvektor des Fahrzeugs 1 einzustellen,
bei Bewegung des Fahrzeugs mit dem jeweiligen Geschwindigkeitsvektor Ermitteln einer Abweichungs-Relation zwischen aktuellen Fahrzeug-Ist-Zuständen zumindest mit einer Fahrzeug-Ist-Position jeweils relativ zu einer Soll-Trajektorie, wobei die Soll-Trajektorie zwischen einem Anfangspunkt und einem Endpunkt verläuft und einen Übergabebereich mit einem der Ladungseinheit-Aufnahmevorrichtung zugeordneten Soll-Übergabepunkt aufweist,
aus der Abweichungs-Relation Ermitteln von Solltrajektorien-Folgekommandos und Übermittlung derselben als Steuerungskommandos an die Antriebsvorrichtung, wobei mit den Steuerungskommandos das Fahrzeug auf einer Fahrzeug-Bewegungsbahn entlang der Soll-Trajektorie bewegt wird,
aufgrund eines Soll-Geschwindigkeitsverlaufs des Fahrzeugs, insbesondere aufgrund einer Aktivierung der Solltrajektorien-Folgefunktion, Ermittlung von Geschwindigkeits-Kommandos, die mittels einer hierin beschriebenen Lastabgabe-Steuerungsfunktion erfolgen kann, und Übermittlung derselben als Steuerungskommandos an die Antriebsvorrichtung, wobei die Geschwindigkeits-Kommandos eine Übergabe-Geschwindigkeit des Fahrzeugs in dem Soll-Übergabepunkt einstellen und sich die auf dem Aufnahme-Bauteil des Fahrzeugs gelegene Ladungseinheit L durch deren Massenträgheit auf die Ladungseinheit-Aufnahmevorrichtung bewegt.

Die Ermittlung von Solltrajektorien-Folgekommandos aus der Abweichungs-Relation und das Übermittlung derselben als Steuerungskommandos an die Antriebsvorrichtung kann mit einer hierin beschriebenen Solltrajektorien-Folgefunktion erfolgen.

Die Ermittlung von Geschwindigkeits-Kommandos aufgrund eines Soll-Geschwindigkeitsverlaufs des Fahrzeugs kann mit einer hierin beschriebenen Lastabgabe-Steuerungsfunktion erfolgen und kann insbesondere aufgrund einer Aktivierung der Solltrajektorien-Folgefunktion erfolgen.

Generell kann vorgesehen sein, dass die Steuerungs-Sollvorgaben zu jedem relevanten Zeitpunkt und insbesondere jedem Berechnungszeitpunkt des Fahrzeugsystems S in Beziehung zu dem Ist-Zustand des Fahrzeugs 1 des jeweiligen Zeitpunkts gesetzt und dabei optional Soll-Zustände des Fahrzeugs 1 mit Ist-Zuständen des Fahrzeugs 1 verglichen werden, um jeweils daraus Steuerungskommandos für die Antriebsvorrichtung 30 zu ermitteln. Die Steuerungskommandos werden derart ermittelt, dass sich der Ist-Zustand des Fahrzeugs 1 des jeweiligen Zeitpunkts in den für den jeweiligen Zeitpunkt relevanten Soll-Zustand ändert. Die Ermittlung der Steuerungskommandos für den jeweiligen Zeitpunkt kann insbesondere mit bekannten Regelungsverfahren oder einem Schätzverfahren erfolgen.

## Patentansprüche

1. Fahrzeug (1) zur Übergabe einer Ladungseinheit (L) an eine Ladungseinheit-Aufnahmevorrichtung (100) in einem Betriebsbereich (B), das Fahrzeug (1) aufweisend: ein Fahrwerk (5), eine Antriebsvorrichtung (30), die mit dem Fahrwerk (5) in Verbindung steht und aufgrund von Steuerungskommandos zur Einstellung eines Geschwindigkeitsvektors des Fahrzeugs (1) das Fahrwerk antreibt, und ein an dem Fahrwerk (5) angeordneter Fahrzeug-Rahmen (10) mit einem Aufnahmebauteil (7) zum Aufnehmen der Ladungseinheit (L), wobei das Fahrzeug (1) ein Fahrzeugsystem (S) mit einer Fahrzeug-Steuerungsfunktion (50) aufweist,
wobei die Fahrzeug-Steuerungsfunktion (50) Solltrajektorien-Folgekommandos als Steuerungs-Sollvorgaben verwendet oder ermittelt, mit denen das Fahrzeug (1) auf einer Fahrzeug-Bewegungsbahn (210, 310) entlang einer Soll-Trajektorie (ST) bewegt wird, wobei die Soll-Trajektorie (ST) zwischen einem Anfangspunkt (201, 301) und einem Endpunkt (202, 302) verläuft und einen Übergabebereich (215, 315) mit einem der Lastübernahme-Vorrichtung zugeordneten Soll-Übergabepunkt (211, 311) aufweist,
wobei die Fahrzeug-Steuerungsfunktion (50) zumindest für den Übergabebereich (215, 315) der Soll-Trajektorie (ST, 200, 300) einen Soll-Geschwindigkeitsverlauf als Steuerungs-Sollvorgaben verwendet oder ermittelt,
wobei die Fahrzeug-Steuerungsfunktion (50) eine Antriebs-Ansteuerungsfunktion (55) aufweist, die die Steuerungs-Sollvorgaben in Steuerungskommandos umsetzt, die in Bezug auf den jeweiligen Ist-Fahrzeug-Zustand einen jeweils aktuellen Soll-Geschwindigkeitsvektor definieren,
**dadurch gekennzeichnet, dass**
die Antriebsvorrichtung (30) aufgrund der Steuerungskommandos eine Übergabe-Beschleunigung des Fahrzeugs (1) zumindest in einem den Soll-Übergabepunkt (211, 311) aufweisenden Abschnitt realisiert, bei der die auf dem Aufnahme-Bauteil (7) des Fahrzeugs (1) gelegene Ladungseinheit (L) durch deren Massenträgheit auf die Ladungseinheit-Aufnahmevorrichtung (100) bewegt wird.

2. Fahrzeug (1) nach dem Anspruch 1, wobei die Fahrzeug-Steuerungsfunktion (50) eine Solltrajektorien-Folgefunktion (60) aufweist, die bei Bewegung des Fahrzeugs aktuelle Fahrzeug-Ist-Zustände zumindest mit einer Fahrzeug-Ist-Position jeweils relativ zu der Soll-Trajektorie in eine Abweichungs-Relation setzt und aus der Abweichungs-Relation Solltrajektorien-Folgekommandos ermittelt und als Steuerungskommandos an die Antriebs-Ansteuerungsfunktion (55) übermittelt.

3. Fahrzeug (1) nach einem der voranstehenden Ansprüche, wobei die Fahrzeug-Steuerungsfunktion (50) eine Lastabgabe-Steuerungsfunktion (70) aufweist, die aufgrund eines Soll-Geschwindigkeitsverlaufs des Fahrzeugs Geschwindigkeits-Kommandos ermittelt und als Steuerungskommandos an die Antriebs-Ansteuerungsfunktion (55) übermittelt, die eine Übergabe-Geschwindigkeit des Fahrzeugs in dem Soll-Übergabepunkt (211, 311) einstellt,
wobei die Form des Übergabebereichs (215), die Lage des Übergabepunkts (211) relativ zu der Ladungseinheit-Aufnahmevorrichtung (100) und die Übergabe-Geschwindigkeit derart eingestellt sind, dass die auf dem Aufnahme-Bauteil des Fahrzeugs gelegene Ladungseinheit (L) durch deren Massenträgheit auf die Ladungseinheit-Aufnahmevorrichtung (100) bewegt wird.

4. Fahrzeug (1) nach dem Anspruch 3, wobei die Lastabgabe-Steuerungsfunktion (70) eine Soll-Geschwindigkeit des Fahrzeugs (1) in dem Soll-Übergabepunkt (211) definiert.

5. Fahrzeug (1) nach einem der Ansprüche 3 oder 4, wobei die Lastabgabe-Steuerungsfunktion (70) eine Soll-Beschleunigung des Fahrzeugs (1) in dem Übergabebereich (215, 315) definiert.

6. Fahrzeug (1) nach einem der Ansprüche 3 bis 5, wobei der Soll-Geschwindigkeitsverlauf in der Lastabgabe-Steuerungsfunktion (70) vorgegeben ist.

7. Fahrzeug (1) nach einem der voranstehenden Ansprüche, wobei in der Fahrzeug-Steuerungsfunktion (50) eine Soll-Trajektorie (ST) abgespeichert ist, deren Übergabebereich (215, 315) nach einer der beiden folgenden Alternativen (ST1), (ST2) definiert ist:
| | |
|---|---|
| (ST1) | der Übergabebereich (215, 315) führt das Fahrzeug an der Lastübernahme-Vorrichtung (100) vorbei und weist einen Krümmungsabschnitt mit im Wesentlichen einheitlicher Krümmung auf, so dass das Fahrzeug eine Seitenbeschleunigung erfährt, wobei die Lastübernahme-Vorrichtung an der konvexen Seite derselben gelegen ist, |
| (ST2) | der Übergabebereich (215, 315) führt das Fahrzeug zu einem Stoßen gegen die Lastübernahme-Vorrichtung (100) in dem Soll-Übergabepunkt (211, 311) mit einer Bewegungsrichtungs-Umkehr in diesem Soll-Übergabepunkt (211, 311). |

8. Fahrzeug (1) nach dem Anspruch 6, wobei eine Geschwindigkeits-Ermittlungsfunktion den Soll-Geschwindigkeitsverlauf auf der Basis einer oder beider der Verläufe (ST1), (ST2) des Übergabebereichs (215, 315) ermittelt.(ST1)
der Übergabebereich (215, 315) führt das Fahrzeug an der Lastübernahme-Vorrichtung (100) vorbei und weist einen Krümmungsabschnitt mit im Wesentlichen einheitlicher Krümmung auf, so dass das Fahrzeug eine Seitenbeschleunigung erfährt, wobei die Lastübernahme-Vorrichtung an der konvexen Seite derselben gelegen ist,
| | |
|---|---|
| (ST2) | der Übergabebereich (215, 315) führt das Fahrzeug zu einem Stoßen gegen die Lastübernahme-Vorrichtung (100) in dem Soll-Übergabepunkt (211, 311) mit einer Bewegungsrichtungs-Umkehr in diesem Soll-Übergabepunkt (211, 311). |

9. Fahrzeug (1) nach einem der Ansprüche 2 bis 7, wobei die Soll-Trajektorie in der Fahrzeug-Steuerungsfunktion (50) als vorgegebene Soll-Trajektorie abgespeichert ist und die Fahrzeug-Steuerungsfunktion (50) die Soll-Trajektorie der Solltrajektorien-Folgefunktion (60) bereitstellt.

10. Fahrzeug (1) nach einem der Ansprüche 1 bis 8, wobei die Fahrzeug-Steuerungsfunktion (50) eine Solltrajektorien-Ermittlungsfunktion aufweist, die die Soll-Trajektorie ermittelt und die Fahrzeug-Steuerungsfunktion (50) die Soll-Trajektorie der Solltrajektorien-Folgefunktion bereitstellt.

11. Fahrzeug (1) nach einem der voranstehenden Ansprüche, wobei das Fahrzeugsystem (S) eine Fahrzeug-Kommunikationsvorrichtung (80) aufweist, die mit einer im Betriebsbereich (B) stationär angeordneten Logistik-Zentralvorrichtung über Funk in Daten- oder Signalverbindung gebracht werden kann und die von der Logistik-Zentralvorrichtung Steuerungs-Sollvorgaben empfängt und der Fahrzeug-Steuerungsfunktion (50) übermittelt.

12. Fahrzeug (1) nach einem der voranstehenden Ansprüche, wobei das Fahrzeugsystem (S) eine Fahrzeug-Kommunikationsvorrichtung (80) aufweist, die mit einer im Betriebsbereich (B) stationären Logistik-Zentralvorrichtung (400) in Funkverbindung gebracht werden kann und von dieser Daten, die einen Fahrzeug-Ist-Zustand zumindest mit einer Fahrzeug-Ist-Position definieren, empfängt und an die Fahrzeug-Steuerungsfunktion (50) übermittelt.

13. Fahrzeug nach einem der voranstehenden Ansprüche, wobei das Fahrzeugsystem eine Sensorvorrichtung aufweist, die aktuelle Fahrzeug-Ist-Positionen erfasst, die mit der Fahrzeug-Steuerungsfunktion (50) funktional verbunden ist und die aktuellen Fahrzeug-Ist-Positionen an die Fahrzeug-Steuerungsfunktion (50) übermittelt.

14. Fahrzeug nach dem Anspruch 13, wobei die Sensorvorrichtung einen optischen Sensor oder eine Kamera aufweist, die jeweils optische Bodenmerkmale oder mit dem optischen Sensor erfassbare Bodenmarkierungen der Betriebsfläche (B) abbildet, wobei das Fahrzeugsystem eine Identifizierungsfunktion aufweist, mit der aufgrund einer aktuellen Abbildung von Bodenmerkmalen oder Bodenmarkierungen, die auf der Betriebsfläche (B) angeordnet sind, die Fahrzeug-Ist-Position ermittelt wird.

15. Logistiksystem (A), aufweisend:
eine in einem Betriebsbereich (B) stationär angeordnete Logistik-Zentralvorrichtung (400) mit einer Logistik-Kommunikationsvorrichtung (480),
eine in dem Betriebsbereich (B) angeordnete Ladungseinheit-Übernahmevorrichtung (100),
ein Fahrzeug (1) zur Übergabe einer Ladungseinheit (L) an die Ladungseinheit-Übernahmevorrichtung (100), das Fahrzeug (1) aufweisend: ein Fahrwerk (5), eine Antriebsvorrichtung (30), die mit dem Fahrwerk (5) in Verbindung steht und die einen Geschwindigkeitsvektor des Fahrzeugs (1) auf einer Betriebsfläche (E) des Betriebsbereichs (B) einstellt, und ein an dem Fahrwerk (5) angeordneter Fahrzeug-Rahmen (10) mit einem Aufnahmebauteil (7) zum Aufnehmen der Ladungseinheit (L), wobei das Fahrzeug (1) ein Fahrzeugsystem (S) aufweist mit:
einer Fahrzeug-Steuerungsfunktion (50), die funktional mit der Antriebsvorrichtung (30) in Verbindung steht und aufgrund von Steuerungs-Sollvorgaben Steuerungskommandos ermittelt und diese an die Antriebsvorrichtung (30) zur Einstellung eines jeweils aktuellen Geschwindigkeitsvektors des Fahrzeugs (1) übermittelt,
einer Fahrzeug-Kommunikationsvorrichtung (80), die mit der Logistik-Kommunikationsvorrichtung (480) über Funk in Daten- oder Signalverbindung steht und mit der Fahrzeug-Steuerungsfunktion (50) funktional in Verbindung steht,
wobei die Fahrzeug-Steuerungsfunktion (50) Solltrajektorien-Folgekommandos als Steuerungs-Sollvorgaben verwendet oder ermittelt, mit denen das Fahrzeug (1) auf einer Fahrzeug-Bewegungsbahn (210, 310) entlang einer Soll-Trajektorie (ST) bewegt wird, wobei die Soll-Trajektorie (ST) zwischen einem Anfangspunkt und einem Endpunkt verläuft und einen Übergabebereich (215, 315) mit einem der Lastübernahme-Vorrichtung zugeordneten Soll-Übergabepunkt (211, 311) aufweist,
wobei die Fahrzeug-Steuerungsfunktion (50) zumindest für den Übergabebereich (215, 315) der Soll-Trajektorie (ST, 200, 300) einen Soll-Geschwindigkeitsverlauf als Steuerungs-Sollvorgaben verwendet oder ermittelt,
wobei die Fahrzeug-Steuerungsfunktion (50) eine Antriebs-Ansteuerungsfunktion (55) aufweist, die die Steuerungs-Sollvorgaben in Steuerungskommandos umsetzt, die in Bezug auf den jeweiligen Ist-Fahrzeug-Zustand einen jeweils aktuellen Soll-Geschwindigkeitsvektor definieren,
**dadurch gekennzeichnet, dass**
die Antriebsvorrichtung (30) aufgrund der Steuerungskommandos eine Übergabe-Beschleunigung des Fahrzeugs (1) zumindest in einem den Soll-Übergabepunkt (211, 311) aufweisenden Abschnitt realisiert, bei der die auf dem Aufnahme-Bauteil des Fahrzeugs gelegene Ladungseinheit (L) durch deren Massenträgheit auf die Ladungseinheit-Aufnahmevorrichtung (100) bewegt wird.

16. Verfahren zur Übergabe einer Ladungseinheit (L) von einem Fahrzeug (1) an eine Ladungseinheit-Aufnahmevorrichtung (100) in einem Betriebsbereich (B), das Fahrzeug aufweisend: ein Fahrwerk (5), eine Antriebsvorrichtung (30), die mit dem Fahrwerk (5) in Verbindung steht und die aufgrund von Steuerungskommandos einen Geschwindigkeitsvektor des Fahrzeugs (1) auf einer Betriebsfläche des Betriebsbereichs einstellt, und ein an dem Fahrwerk (5) angeordneter Fahrzeug-Rahmen (10) mit einem Aufnahmebauteil (7) zum Aufnehmen einer Ladungseinheit (L), wobei das Verfahren die folgenden Schritte aufweist:
bei Bewegung des Fahrzeugs (1) mit einem jeweiligen Geschwindigkeitsvektor Ermitteln einer Abweichungs-Relation zwischen jeweils aktuellen Fahrzeug-Ist-Zuständen zumindest mit einer jeweils aktuellen Fahrzeug-Ist-Position jeweils relativ zu einer Soll-Trajektorie (ST, 200, 300), wobei die Soll-Trajektorie zwischen einem Anfangspunkt (201, 301) und einem Endpunkt (202, 302) verläuft und einen Übergabebereich (215, 315) mit einem der Lastübernahme-Vorrichtung (100) zugeordneten Soll-Übergabepunkt (211, 311) aufweist, aus der Abweichungs-Relation Ermitteln von Solltrajektorien-Folgekommandos und Übermittlung derselben als Steuerungskommandos an die Antriebsvorrichtung (30), wobei mit den Steuerungskommandos ein jeweils aktueller Geschwindigkeitsvektor des Fahrzeugs (1) eingestellt wird und das Fahrzeug (1) auf einer Fahrzeug-Bewegungsbahn entlang der Soll-Trajektorie (ST, 200, 300) bewegt wird,
aufgrund eines Soll-Geschwindigkeitsverlaufs des Fahrzeugs Ermittlung von Geschwindigkeits-Kommandos und Übermittlung derselben als Steuerungskommandos an die Antriebsvorrichtung (30), wobei die Geschwindigkeits-Kommandos eine Übergabe-Beschleunigung des Fahrzeugs (1) in dem Soll-Übergabepunkt (211, 311) einstellen und sich die auf dem Aufnahme-Bauteil (7) des Fahrzeugs (1) gelegene Ladungseinheit (L) durch deren Massenträgheit auf die Ladungseinheit-Aufnahmevorrichtung (100) bewegt.

17. Verfahren nach dem Anspruch 16, wobei der Übergabebereich (215, 315) der Soll-Trajektorie (ST) nach einer der beiden folgenden Alternativen (ST1), (ST2) definiert ist:
| | |
|---|---|
| (ST1) | der Übergabebereich führt das Fahrzeug an der Lastübernahme-Vorrichtung vorbei und weist einen Krümmungsabschnitt mit einheitlicher Krümmung auf, so dass das Fahrzeug eine Seitenbeschleunigung erfährt, wobei die Lastübernahme-Vorrichtung an der konvexen Seite derselben gelegen ist, |
| (ST2) | der Übergabebereich (215, 315) führt das Fahrzeug zu einem Stoßen gegen die Lastübernahme-Vorrichtung in dem Soll-Übergabepunkt (211, 311) mit einer Bewegungsrichtungs-Umkehr in diesem Soll-Übergabepunkt (211, 311). |

## Claims

1. Vehicle (1) for transferring a unit load (L) to a unit load receiving device (100) in an operation area (B), the vehicle (1) comprising: a running gear (5), a drive device (30) which is connected to the running gear (5) and drives the running gear on the basis of control commands for adjusting a velocity vector of the vehicle (1), and a vehicle frame (10) arranged on the running gear (5) and comprising a receiving component (7) for receiving the unit load (L), wherein the vehicle (1) comprises a vehicle system (S) with a vehicle control function (50),
wherein the vehicle control function (50) uses or determines target trajectory follow-up commands as control target specifications with which the vehicle (1) is moved on a vehicle movement path (210, 310) along a target trajectory (ST), wherein the target trajectory (ST) runs between an initial point (201, 301) and an end point (202, 302) and comprises a transfer region (215, 315) with a target transfer point (211, 311) associated with the unit load receiving device,
wherein the vehicle control function (50) uses or determines, at least for the transfer region (215, 315) of the target trajectory (ST, 200, 300), a target speed profile as control target specification,
wherein the vehicle control function (50) comprises a drive control function (55) which converts the control target specifications into control commands which define a respective current target velocity vector with respect to the respective actual vehicle state,
**characterized in that** the drive device (30), on the basis of the control commands, realizes a transfer acceleration of the vehicle (1) at least in a section comprising the target transfer point (211, 311) in which the unit load (L) located on the receiving component (7) of the vehicle (1) is moved by its mass inertia onto the unit load receiving device (100).

2. Vehicle (1) according to claim 1, wherein the vehicle control function (50) comprises a target trajectory follow-up function (60) which, when the vehicle is moved, puts current vehicle actual states at least with a vehicle actual position relative to the target trajectory into a deviation relation and determines target trajectory follow-up commands from the deviation relation and transmits them as control commands to the drive control function (55).

3. Vehicle (1) according to one of the preceding claims, wherein the vehicle control function (50) comprises a load transfer control function (70) which determines velocity commands on the basis of a target speed profile of the vehicle and transmits the same as control commands to the drive control function (55) which sets a transfer velocity of the vehicle in the target transfer point (211, 311),
wherein the shape of the transfer region (215), the position of the transfer point (211) relative to the unit load receiving device (100) and the transfer velocity are set in such a way that the unit load (L) located on the receiving component of the vehicle is moved by its mass inertia onto the unit load receiving device (100).

4. Vehicle (1) according to claim 3, wherein the load transfer control function (70) defines a target velocity of the vehicle (1) in the target transfer point (211).

5. Vehicle (1) according to any one of claims 3 or 4, wherein the load transfer control function (70) defines a target acceleration of the vehicle (1) in the transfer region (215,315).

6. Vehicle (1) according to any one of claims 3 to 5, wherein the target speed profile is predetermined in the load transfer control function (70).

7. Vehicle (1) according to one of the preceding claims, wherein in the vehicle control function (50) a target trajectory (ST) is stored, the transfer region (215, 315) of which is defined according to one of the following alternatives (ST1), (ST2):
| | |
|---|---|
| (ST1) | the transfer area (215, 315) guides the vehicle past the unit load receiving device (100) and comprises a curvature section with substantially uniform curvature so that the vehicle experiences a lateral acceleration, wherein the unit load receiving device is located on the convex side thereof, |
| (ST2) | the transfer region (215, 315) guides the vehicle to an impact against the unit load receiving device (100) in the target transfer point (211, 311) with a movement direction reversal in this target transfer point (211, 311). |

8. Vehicle (1) according to claim 6, wherein a velocity determination function determines the target speed profile on the basis of one or both of the profiles (ST1), (ST2) of the transfer area (215, 315):
| | |
|---|---|
| (ST1) | the transfer area (215, 315) guides the vehicle past the unit load receiving device (100) and comprises a curvature section with essentially uniform curvature so that the vehicle experiences a lateral acceleration, wherein the unit load receiving device is located on the convex side thereof, |
| (ST2) | the transfer area (215, 315) guides the vehicle to an impact against the unit load receiving device (100) in the target transfer point (211, 311) with a movement direction reversal in this target transfer point (211, 311). |

9. Vehicle (1) according to any one of claims 2 to 7, wherein the target trajectory in the vehicle control function (50) is stored as a predetermined target trajectory and the vehicle control function (50) provides a target trajectory to the follow-up function (60).

10. Vehicle (1) according to any one of claims 1 to 8, wherein the vehicle control function (50) comprises a target trajectory determination function which determines the target trajectory and the vehicle control function (50) provides the target trajectory to the target trajectory follow-up function.

11. Vehicle (1) according to one of the preceding claims, wherein the vehicle system (S) comprises a vehicle communication device (80) which can be brought in data or signal connection with a logistics central device arranged in a stationary manner in the operation area (B) and which receives control target specifications from the logistics central device and transmits the same to the vehicle control function (50).

12. Vehicle (1) according to one of the preceding claims, wherein the vehicle system (S) comprises a vehicle communication device (80) which can be radio-connected to a logistics central device (400) which is stationary in the operation area (B) and which receives data from the same, which define a current vehicle state at least with a vehicle-actual position, and transmits the data to the vehicle control function (50).

13. Vehicle according to one of the preceding claims, wherein the vehicle system comprises a sensor device which captures current vehicle actual positions, wherein the sensor device is operatively connected to the vehicle control function (50) and transmits the current vehicle actual positions to the vehicle control function (50).

14. Vehicle according to claim 13, wherein the sensor device comprises an optical sensor or a camera, which respectively images optical floor features or floor markings of the operation surface (B) that can be captured by the optical sensor, wherein the vehicle system comprises an identification function with which the vehicle actual position is determined on the basis of a current mapping of ground features or floor markings which are arranged on the operation surface (B).

15. A logistics system (A) comprising:
a logistics central device (400) which is arranged in a stationary manner in an operation area (B) and comprises a logistics communication device (480),
a unit load receiving device (100) arranged in the operation area (B),
a vehicle (1) for transferring a unit load (L) to the unit load receiving device (100), the vehicle (1) which comprising: a running gear (5), a drive device (30), which is in connection with the running gear (5) and which adjusts a velocity vector of the vehicle (1) on an operation surface (E) of the operation area (B), and a vehicle frame (10) which is arranged on the running gear (5) and comprises a receiving component (7) for receiving the unit load (L), wherein the vehicle (1) comprises a vehicle system (S) which comprises:
a vehicle control function (50) which is functionally connected to the drive device (30) and which determines control commands on the basis of control target specifications and transmits said commands to the drive device (30) for adjusting a respective current velocity vector of the vehicle (1),
a vehicle communication device (80) which is in data or signal connection with the logistics communication device (480) via radio and is functionally connected to the vehicle control function (50),
wherein the vehicle control function (50) uses or determines target trajectory follow-up commands as control target specifications with which the vehicle (1) is moved along a target trajectory (ST) on a vehicle movement path (210, 310), wherein the target trajectory (ST) runs between an initial point and an end point and comprises a transfer region (215, 315) with a target transfer point (211, 311) assigned to the unit load receiving device,
wherein the vehicle control function (50) uses or determines a target speed profile as control target specification at least for the transfer region (215,315) of the target trajectory (ST, 200, 300),
wherein the vehicle control function (50) comprises a drive control function (55) which converts the control target specifications into control commands which define a respective current target velocity vector with respect to the respective current vehicle state,
**characterized in that** the drive device (30), on the basis of the control commands, realizes a transfer acceleration of the vehicle (1) at least in a section comprising the target transfer point (211, 311) in which transfer acceleration the unit load (L) located on the receiving component of the vehicle is moved by its mass inertia onto the unit load receiving device (100).

16. Method for transferring a unit load (L) from a vehicle (1) to a unit load receiving device (100) in an operation area (B), the vehicle comprising: a running gear (5), a drive device (30) which is connected to the running gear (5) and which, on the basis of control commands, adjusts a velocity vector of the vehicle (1) on an operation surface of the operation area, and a vehicle frame (10) arranged on the running gear (5) and comprising a receiving component (7) for receiving a unit load (L), wherein the method comprises the following steps:
upon movement of the vehicle (1) with a respective velocity vector, determining a deviation relation between respective current vehicle actual states at least with a respective current vehicle actual position relative to a target trajectory (ST, 200, 300), wherein the target trajectory runs between an initial point (201, 301) and an end point (202, 302) and comprises a transfer region (215, 315) with a target transfer point (211, 311) associated with the unit load receiving device (100),
from the deviation relation determining target trajectory follow-up commands and transmission of the same as control commands to the drive device (30), wherein by means of the control commands a respective current velocity vector of the vehicle (1) is adjusted and the vehicle (1) is moved on a vehicle movement path along the target trajectory (ST, 200 (300),
based on a target speed profile of the vehicle, determining velocity commands and transmitting the same as control commands to the drive device (30), wherein the velocity commands adjust a transfer acceleration of the vehicle (1) in the target transfer point (211, 311) and wherein the unit load (L) which is located on the receiving component (7) of the vehicle (1) is moved by the mass inertia thereof to the unit load receiving device (100).

17. Method according to claim 16, wherein the transfer region (215,315) of the target trajectories is defined according to one of the two following alternatives (ST1), (ST2):
| | |
|---|---|
| (ST1) | the transfer area guides the vehicle past the unit load receiving device and comprises a curvature section with uniform curvature so that the vehicle realizes a lateral acceleration, wherein the unit load receiving device is located on the convex side thereof, |
| (ST2) | the transfer region (215,315) guides the vehicle to an impact against the unit load receiving device in the target transfer point (211, 311) with a movement direction reversal in this target transfer point (211, 311). |

## Revendications

1. Véhicule (1) pour transférer une unité de chargement (L) vers un dispositif de réception d'unité de chargement (100) dans une zone d'opération (B), le véhicule (1) comprenant : un train de roulement (5), un dispositif d'entraînement (30) qui est relié au train de roulement (5) et qui entraîne le train de roulement sur la base de commandes de contrôle pour ajuster un vecteur de vitesse du véhicule (1), et un châssis de véhicule (10) disposé sur le train de roulement (5) et comprenant un composant de réception (7) pour la réception de l'unité de chargement (L), le véhicule (1) comprenant un système de véhicule (S) avec une fonction de contrôle du véhicule (50),
dans lequel la fonction de contrôle de véhicule (50) utilise ou détermine des commandes de suivi de trajectoire cible comme spécifications cibles de contrôle avec lesquelles le véhicule (1) est déplacé sur une trajectoire de mouvement de véhicule (210, 310) le long d'une trajectoire cible (ST), dans laquelle la trajectoire cible (ST) s'étend entre un point initial (201, 301) et un point final (202, 302) et comprend une région de transfert (215, 315) avec un point de transfert cible (211, 311) associé au dispositif de réception d'unité de chargement,
dans lequel la fonction de contrôle du véhicule (50) utilise ou détermine, au moins pour la région de transfert (215, 315) de la trajectoire cible (ST, 200, 300), un profil de vitesse cible comme spécification de cible de contrôle,
dans lequel la fonction de contrôle du véhicule (50) comprend une fonction de contrôle du véhicule (55) qui convertit les spécifications de cible de contrôle en commandes de contrôle qui définissent un vecteur de vitesse cible actuel respectif par rapport à l'état réel respectif du véhicule,
**caractérisé en ce que** le dispositif d'entraînement (30), sur la base des commandes de contrôle, réalise une accélération de transfert du véhicule (1) au moins dans une section comprenant le point de transfert cible (211, 311), au cours de laquelle l'unité de chargement (L) située sur le composant réception (7) du véhicule (1) est déplacée par son inertie de masse sur le dispositif réception d'unité de chargement (100).

2. Véhicule (1) selon la revendication 1, **caractérisé en ce que** la fonction de contrôle du véhicule (50) comprend une fonction de suivi de trajectoire cible (60) qui, lorsque le véhicule est déplacé, place les états réels actuels du véhicule avec au moins une position réelle du véhicule par rapport à la trajectoire cible dans une relation d'écart et détermine des commandes de suivi de trajectoire cible à partir de la relation d'écart et les transmet en tant que commandes de contrôle à la fonction de contrôle du véhicule (55).

3. Véhicule (1) selon l'une des revendications précédentes, **caractérisé en ce que** la fonction de contrôle du véhicule (50) comprend une fonction de contrôle de transfert de charge (70) qui détermine des commandes de vitesse sur la base d'un profil de vitesse cible du véhicule et transmet ces dernières en tant que commandes de contrôle à la fonction de contrôle d'entraînement (55) qui fixe une vitesse de transfert du véhicule dans le point de transfert cible (211, 311),
dans lequel la forme de la région de transfert (215), la position du point de transfert (211) par rapport au dispositif réception d'unité de chargement (100) et la vitesse de transfert sont réglées de manière à ce que l'unité de chargement (L) située sur le composant de réception du véhicule soit déplacée par son inertie de masse sur le dispositif de réception d'unité de chargement (100).

4. Véhicule (1) selon la revendication 3, **caractérisé en ce que** la fonction de contrôle du transfert de charge (70) définit une vitesse cible du véhicule (1) dans le point de transfert cible (211).

5. Véhicule (1) selon l'une des revendications 3 ou 4, **caractérisé en ce que** la fonction de contrôle du véhicule (70) définit une accélération cible du véhicule (1) dans la région de transfert (215,315).

6. Véhicule (1) selon l'une des revendications 3 à 5, **caractérisé en ce que** le profil de vitesse cible est prédéterminé dans la fonction de contrôle du transfert de charge (70).

7. Véhicule (1) selon l'une des revendications précédentes, **caractérisé en ce qu'**une trajectoire cible (ST) est sauvegardée dans la fonction contrôle du véhicule (50), dont la région de transfert (215, 315) est définie selon l'une des alternatives suivantes (ST1), (ST2) :
| | |
|---|---|
| (ST1) | la région de transfert (215, 315) guide le véhicule au-delà du dispositif de réception d'unité de chargement (100) et comprend une section de courbure à courbure essentiellement uniforme de sorte que le véhicule subit une accélération latérale, dans laquelle le dispositif de réception d'unité de chargement est situé sur le côté convexe de celle-ci, |
| (ST2) | la région de transfert (215, 315) guide le véhicule vers un impact contre le dispositif de réception d'unité de chargement (100) dans le point de transfert cible (211, 311) avec une inversion de la direction du mouvement dans ce point de transfert cible (211, 311). |

8. Véhicule (1) selon la revendication 6, **caractérisé en ce qu'**une fonction de détermination de la vitesse détermine le profil de vitesse cible sur la base de l'un ou des deux profils (ST1), (ST2) de la région de transfert (215, 315) :
| | |
|---|---|
| (ST1) | la région de transfert (215, 315) guide le véhicule au-delà du dispositif réception d'unité de chargement (100) et comprend une section de courbure avec une courbure essentiellement uniforme de sorte que le véhicule subit une accélération latérale, dans laquelle le dispositif réception d'unité de chargement étant situé sur le côté convexe de celle-ci, |
| (ST2) | la région de transfert (215, 315) guide le véhicule vers un impact contre le dispositif de réception d'unité de chargement (100) dans le point de transfert cible (211, 311) avec une inversion de la direction du mouvement dans ce point de transfert cible (211, 311). |

9. Véhicule (1) selon l'une des revendications 2 à 7, **caractérisé en ce que** la trajectoire cible dans la fonction de contrôle du véhicule (50) est mémorisée en tant qu'une trajectoire cible prédéterminée et la fonction de contrôle du véhicule (50) fournit une trajectoire cible à la fonction de suivi (60).

10. Véhicule (1) selon l'une des revendications 1 à 8, **caractérisé en ce que** la fonction de contrôle du véhicule (50) comprend une fonction de détermination de la trajectoire cible qui détermine la trajectoire cible et que la fonction de contrôle du véhicule (50) fournit la trajectoire cible à la fonction de suivi de la trajectoire cible.

11. Véhicule (1) selon l'une des revendications précédentes, **caractérisé en ce que** le système de véhicule (S) comprend un dispositif de communication de véhicule (80) qui est configuré pour pouvoir être amené en connexion de données ou de signaux avec un dispositif central logistique disposé de manière stationnaire dans la zone d'opération (B) et qui reçoit des spécifications de cible de commande du dispositif central logistique et qui les transmet à la fonction de contrôle du véhicule (50).

12. Véhicule (1) selon l'une des revendications précédentes, **caractérisé en ce que** le système de véhicule (S) comprend un dispositif de communication de véhicule (80) qui est configuré pour pouvoir être connecté par radio à un dispositif central logistique (400) disposé de manière stationnaire dans la zone d'opération (B) et qui reçoit des données de ce dernier, lesquelles définissent un état actuel du véhicule au moins avec une position réelle du véhicule, et qui transmet les données à la fonction de contrôle du véhicule (50).

13. Véhicule selon l'une des revendications précédentes, **caractérisé en ce que** le système de véhicule comprend un dispositif de capteur qui capte les positions réelles actuelles du véhicule, dans lequel le dispositif de capteur est connecté de manière opérationnelle à la fonction de contrôle du véhicule (50) et transmet les positions réelles actuelles du véhicule à la fonction de contrôle du véhicule (50).

14. Véhicule selon la revendication 13, **caractérisé en ce que** le dispositif de capteur comprend un capteur optique ou une caméra, qui image respectivement les caractéristiques optiques du sol ou les marquages au sol de la surface de fonctionnement (B) qui sont configurés pour pouvoir être captés par le capteur optique, dans lequel le système de véhicule comprend une fonction d'identification avec laquelle la position réelle du véhicule est déterminée sur la base d'une cartographie actuelle des caractéristiques du sol ou des marquages au sol qui sont disposés sur la surface de fonctionnement (B).

15. Système logistique (A) comprenant :
un dispositif central logistique (400) disposé de manière fixe dans une zone d'opération (B) et comprenant un dispositif de communication logistique (480),
un dispositif de réception d'unité de chargement (100) disposé dans la zone d'opération (B),
un véhicule (1) pour le transfert d'une unité de chargement (L) vers le dispositif de réception d'unité de chargement (100), le véhicule (1) comprenant : un train de roulement (5), un dispositif d'entraînement (30), qui est en relation avec le train de roulement (5) et qui ajuste un vecteur de vitesse du véhicule (1) sur une surface d'opération (E) de la zone d'opération (B), et un châssis de véhicule (10) qui est disposé sur le train de roulement (5) et comprend un composant de réception (7) pour recevoir l'unité de chargement (L), dans lequel le véhicule (1) comprend un système de véhicule (S) qui comprend :
une fonction de contrôle du véhicule (50) qui est connectée fonctionnellement au dispositif d'entraînement (30) et qui détermine des commandes de contrôle sur la base de spécifications cibles de contrôle et transmet lesdites commandes au dispositif d'entraînement (30) pour ajuster un vecteur de vitesse actuel respectif du véhicule (1),
un dispositif de communication du véhicule (80) qui est en connexion de données ou de signaux avec le dispositif de communication logistique (480) par radio et qui est fonctionnellement connecté à la fonction de contrôle du véhicule (50),
dans lequel la fonction de contrôle de véhicule (50) utilise ou détermine des commandes de suivi de trajectoire cible comme spécifications cibles de contrôle avec lesquelles le véhicule (1) est déplacé le long d'une trajectoire cible (ST) sur une trajectoire de mouvement de véhicule (210, 310), dans laquelle la trajectoire cible (ST) s'étend entre un point initial et un point final et comprend une région de transfert (215, 315) avec un point de transfert cible (211, 311) assigné au dispositif de réception de chargement unité,
dans lequel la fonction de contrôle du véhicule (50) utilise ou détermine un profil de vitesse cible comme spécification de cible de contrôle au moins pour la région de transfert (215, 315) de la trajectoire cible (ST, 200, 300),
dans lequel la fonction de contrôle du véhicule (50) comprend une fonction de contrôle du véhicule (55) qui convertit les spécifications de cible de contrôle en commandes de contrôle qui définissent un vecteur de vitesse cible actuel respectif par rapport à l'état actuel respectif du véhicule,
**caractérisé en ce que** le dispositif d'entraînement (30), sur la base des commandes de contrôle, réalise une accélération de transfert du véhicule (1) au moins dans une région comprenant le point de transfert cible (211, 311), au cours de laquelle l'unité de chargement (L) située sur le composant réception du véhicule est déplacée par son inertie de masse sur le dispositif de réception de unité de chargement (100).

16. Procédé de transfert d'une unité de chargement (L) d'un véhicule (1) vers un dispositif de réception d'unité de chargement (100) dans une zone d'opération (B), le véhicule comprenant: un train de roulement (5), un dispositif d'entraînement (30) qui est relié au train de roulement (5) et qui, sur la base de commandes de contrôle, ajuste un vecteur de vitesse du véhicule (1) sur une surface de travail de la zone d'opération, et un châssis de véhicule (10) disposé sur le train de roulement (5) et comprenant un composant de réception (7) pour la réception d'une unité de chargement (L), dans lequel le procédé comprend les étapes suivantes :
lors du déplacement du véhicule (1) avec un vecteur de vitesse respectif, déterminer une relation d'écart entre les états réels actuels respectifs du véhicule au moins avec une position réelle actuelle respective du véhicule par rapport à une trajectoire cible (ST, 200, 300), dans laquelle la trajectoire cible s'étend entre un point initial (201, 301) et un point final (202, 302) et comprend une région de transfert (215, 315) avec un point de transfert cible (211, 311) associé au dispositif de réception d'unité de chargement (100),
à partir de la relation de déviation, déterminer des commandes de suivi de la trajectoire cible et les transmettre en tant que commandes de contrôle au dispositif d'entraînement (30), dans lequel, au moyen des commandes de contrôle, un vecteur de vitesse actuel respectif du véhicule (1) est ajusté et le véhicule (1) est déplacé sur une trajectoire de mouvement de véhicule le long de la trajectoire cible (ST, 200 (300),
sur la base d'un profil de vitesse cible du véhicule, déterminer des commandes de vitesse et les transmettre en tant que commandes de contrôle au dispositif d'entraînement (30), dans lequel les commandes de vitesse ajustent une accélération de transfert du véhicule (1) dans le point de transfert cible (211, 311) et dans lequel l'unité de chargement (L) qui est située sur le composant réception (7) du véhicule (1) est déplacée par l'inertie de masse de celle-ci vers le dispositif réception d'unité d'entraînement (100).

17. Procédé selon la revendication 16, **caractérisé en ce que** la région de transfert (215,315) des trajectoires cibles est définie selon l'une des deux alternatives suivantes (ST1), (ST2) :
| | |
|---|---|
| (ST1) | la région de transfert guide le véhicule au-delà du dispositif de réception d'unité de chargement et comprend une section de courbure avec une courbure uniforme de sorte que le véhicule réalise une accélération latérale, dans laquelle le dispositif de réception d'unité de chargement est situé sur le côté convexe de celle-ci, |
| (ST2) | la région de transfert (215, 315) guide le véhicule vers un impact contre le dispositif de réception d'unité de chargement dans le point de transfert cible (211, 311) avec une inversion de la direction du mouvement dans ce point de transfert cible (211, 311). |
